# EUROPÄISCHE PATENTSCHRIFT

(11) **EP 3 384 368 B1**
(45) Veröffentlichungstag und Bekanntmachung des Hinweises auf die Patenterteilung: **26.03.2025**
(21) Anmeldenummer: 16798736.1
(22) Anmeldetag: 21.11.2016
(51) Int. Cl.: G06F 3/041

(54) **FOLIE SOWIE VERFAHREN ZUR HERSTELLUNG EINER FOLIE**
FILM AND METHOD FOR PRODUCING A FILM
FEUILLE ET PROCÉDÉ DE FABRICATION D'UNE FEUILLE

(30) Priorität: 04.12.2015 DE 102015121195; 01.02.2016 DE 102016101736; 08.08.2016 DE 102016114638
(43) Veröffentlichungstag der Anmeldung: 10.10.2018
(73) Patentinhaber: Leonhard Kurz Stiftung & Co. KG, 90763 Fürth (DE)
(72) Erfinder: HEINRICH, Matthias, 90431 Nürnberg (DE); HIRSCHFELDER, Andreas, 90766 Fürth (DE); HAHN, Martin, 91567 Herrieden (DE); SCHAD, Johannes, 90763 Fürth (DE)
(74) Vertreter: Louis Pöhlau Lohrentz
(86) Internationale Anmeldenummer: PCT/EP2016/078349
(87) Internationale Veröffentlichungsnummer: WO 2017/093066

(56) Entgegenhaltungen:
- WO-A1-2015/047572
- WO-A1-2015/047572
- DE-A1- 102005 006 074
- DE-A1- 102012 109 820
- DE-A1- 102014 106 585
- DE-B3- 102010 044 598
- TW-A- 201 248 254
- TW-A- 201 248 254
- US-A1- 2002 149 572
- US-A1- 2012 026 107
- US-A1- 2012 103 660
- US-A1- 2012 103 660
- US-A1- 2015 047 885
- US-A1- 2015 199 048

## Beschreibung

Die Erfindung betrifft eine Folie, ein Verfahren zur Herstellung einer Folie, die Verwendung einer Folie zur Applikation auf ein Zielsubstrat sowie ein Verfahren zur Herstellung eines elektrischen Funktionselements.

Kombinierte Ein- und Ausgabegeräte wie Touchscreens, die auch Sensorbildschirme genannt werden, finden eine vielseitige Anwendung. So wird durch die Verwendung von Touchscreens beispielsweise die Steuerung eines Computerprogramms durch Berührung des Touchscreens ermöglicht. Typischerweise ist hierzu ein Touchsensorfeld, welches die Berührung detektiert, auf einem Anzeigeelement, wie beispielsweise einer Flüssigkristallanzeige, angeordnet. Das Touchsensorfeld ermöglicht somit die Steuerung des von dem Anzeigeelement erzeugten Bildes. Weitere Eingabegeräte wie eine Computermaus oder eine Tastatur werden daher nicht oder nur für Spezialanwendungen benötigt. Aufgrund ihrer typischerweise glatten Oberfläche sind Touchsensorfelder weniger schmutzanfällig und leichter zu reinigen als andere Eingabegeräte. Weiter ermöglichen sie den Benutzern eine intuitive Bedienung. Daher werden Touchsensoren beispielsweise in Mobiltelefonen, insbesondere Smartphones sowie PDAs, Tablet-Computern, Geldautomaten, Fahrkartenautomaten, Spieleautomaten und Spielekonsolen und auch in Haushaltgeräten oder in Kraftfahrzeugen vielfältig eingesetzt.

Zur Herstellung derartiger Touchscreens werden bisher Touchsensoren mittels einer separat vorliegenden Klebefolie auf ein Zielsubstrat, wie beispielsweise ein Anzeigeelement geklebt. Die Klebefolie weist hierbei eine nichtselbsttragende Kleberschicht auf, welche zwischen zwei so genannten Linern angeordnet ist. Zur Applikation eines Touchsensors wird in einem ersten Schritt ein Liner der Klebefolie entfernt und die Kleberschicht anschließend auf den Touchsensor aufgeklebt. In einem zweiten Schritt wird der verbleibende Liner entfernt und der Touchsensor mit dem Zielsubstrat verklebt. Da diese Herstellungsprozesse üblicherweise von Hand durchgeführt werden, ist eine möglichst identische Herstellungsqualität nicht immer gewährleistet. So ist beispielsweise die exakte Positionierung des Touchsensors bei Applikation auf das Zielsubstrat fehleranfällig. Auch erfordern die einzelnen Arbeitschritte, insbesondere das Ablösen der Liner sowie ein einschlussfreies Aufbringen der Kleberschicht auf den Touchsensor oder des Touchsensors auf das Zielsubstrat, einen hohen zeitlichen und personellen Aufwand. Insbesondere bei einer Massenfertigung erfordert auch das Bereitstellen der einzelnen Vorprodukte einen hohen logistischen Aufwand, um einen möglichst unterbrechungsfreien Herstellungsprozess zu ermöglichen.

US 2015/199048 A1 beschreibt ein Touchpanel mit einem flexiblen, transparenten Substrat und einer transparenten, elektrisch leitfähigen Folie. Einzelne Schichten innerhalb dieses Touchpanels sind durch eine Schicht aus Optical Clear Adhesive OCA miteinander verbunden.

In US 2002/149572 A1 wird ein kapazitiver, transparenter Berührungssensor offenbart, welcher über eine Schicht aus druckempfindlichem Kleber mit einem Zielsubstrat verbunden wird.

DE 10 2014 106 585 A1 beschreibt einen Mehrschichtkörper mit einer Trägerlage, auf welcher zumindest ein Leuchtmittel angeordnet ist und welcher weiterhin eine Dekorlage und eine angespritzte Kunststofflage aufweist.

In DE 10 2012 109 820 A1 wird eine durch ein In-Mould-Verfahren hergestellter Körper beschrieben, welcher eine Folie mit zumindest einer elektrischen oder elektronischen Funktionsschicht aufweist. Diese Funktionsschicht weist in einem Kontaktierungsbereich zumindest einen elektrischen Anschluss auf.

US 2012/026107 A1 beschreibt ein Touchscreenpanel umfassend ein transparentes Substrat, welches eine erste Oberfläche aufweist und eine von der ersten Oberfläche weg weisende zweite Oberfläche aufweist, wobei berührungssensitive Zellen über der ersten Oberfläche angeordnet sind. Das Touchscreenpanel umfasst weiterhin einen dekorativen Film.

DE 102005006074 A1 offenbart einen dekorierten Spritzgussartikel mit einer Mehrschichtfolie. Der Spritzgussartikel umfasst eine Replizierlackschicht, welche einen visuell wahrnehmbaren Effekt erzeugt.

Der Erfindung liegt nun die Aufgabenstellung zugrunde, eine Folie bereitzustellen, welche die Nachteile des Standes der Technik vermeidet.

Diese Aufgabe wird gelöst von einer Folie umfassend ein Trägersubstrat, eine Haftvermittlungsschicht zur Applikation der Folie auf ein Zielsubstrat und mindestens eine elektrisch leitfähige Schicht, wobei die mindestens eine elektrisch leitfähige Schicht in einem Funktionsbereich eine elektrische Funktionsstruktur ausbildet, wobei die mindestens eine elektrisch leitfähige Schicht in mindestens einem Kontaktierungsbereich mindestens eine Kontaktierungsstruktur zur Kontaktierung der elektrischen Funktionsstruktur ausbildet, und wobei die Haftvermittlungsschicht bei Betrachtung senkrecht zu einer von dem Trägersubstrat aufgespannten Ebene den mindestens einen Kontaktierungsbereich zumindest bereichsweise nicht überdeckt oder wobei die Haftvermittlungsschicht bei Betrachtung senkrecht zu einer von dem Trägersubstrat aufgespannten Ebene vollflächig aufgebracht ist. Dabei ist die mindestens eine elektrisch leitfähige Schicht zwischen dem Trägersubstrat und der Haftvermittlungsschicht angeordnet oder die Haftvermittlungsschicht ist auf der der mindestens einen elektrisch leitfähigen Schicht abgewandten Seite des Trägersubstrats angeordnet. Weiterhin ist die Haftvermittlungsschicht auf der Oberfläche der Folie angeordnet, wobei die Haftvermittlungsschicht aus einem Material besteht, dass nach Applikation auf das Zielsubstrat hochtransparent ist und die Haftvermittlungsschicht ist aus einem Heißkleber oder einem strahlungshärtbaren Kleber gebildet. Diese Aufgabe wird weiter gelöst von einem Verfahren zur Herstellung einer Folie, wobei das Verfahren folgende Schritte, welche insbesondere in der folgenden Reihenfolge ausgeführt werden, umfasst: a) Bereitstellen eines Trägersubstrats; b) Aufbringen mindestens einer elektrisch leitfähigen Schicht auf das Trägersubstrat, wobei die mindestens eine elektrisch leitfähige Schicht in einem Funktionsbereich eine elektrische Funktionsstruktur ausbildet, wobei die mindestens eine elektrisch leitfähige Schicht in mindestens einem Kontaktierungsbereich mindestens eine Kontaktierungsstruktur zur Kontaktierung der elektrischen Funktionsstruktur ausbildet; c) Aufbringen einer Haftvermittlungsschicht zur Applikation der Folie auf ein Zielsubstrat derart, dass die Haftvermittlungsschicht bei Betrachtung senkrecht zu einer von dem Trägersubstrat aufgespannten Ebene den mindestens einen Kontaktierungsbereich zumindest bereichsweise nicht überdeckt oder wobei die Haftvermittlungsschicht bei Betrachtung senkrecht zu einer von dem Trägersubstrat aufgespannten Ebene vollflächig aufgebracht ist, wobei in dem Schritt c) die Haftvermittlungsschicht derart aufgebracht wird, dass die mindestens eine elektrisch leitfähige Schicht zwischen dem Trägersubstrat und der Haftvermittlungsschicht angeordnet ist oder in dem Schritt c) die Haftvermittlungsschicht auf der der mindestens einen elektrisch leitfähigen Schicht abgewandten Seite des Trägersubstrats angeordnet ist und wobei die Haftvermittlungsschicht auf der Oberfläche der Folie angeordnet wird, wobei die Haftvermittlungsschicht aus einem Material besteht, dass nach Applikation auf das Zielsubstrat hochtransparent ist und die Haftvermittlungsschicht aus einem Heißkleber oder einem strahlungshärtbaren Kleber gebildet ist.

Hierbei hat sich gezeigt, dass die erfindungsgemäße Folie den Herstellungsprozess von elektrischen Funktionselementen, wie beispielsweise Touchscreens, verbessert. So ermöglicht die erfindungsgemäße Folie eine direkte Applikation der Folie auf ein Zielsubstrat ohne weitere Zwischenschritte und/oder weitere Zwischenprodukte. Dies ermöglicht einen schnelleren Herstellungsprozess und eine Kostenreduzierung in der Herstellung. Dadurch, dass die Haftvermittlungsschicht den mindestens einen Kontaktierungsbereich zumindest bereichsweise nicht überdeckt ist sichergestellt, dass die elektrische Funktionsstruktur nach Applikation der Folie auf das Zielsubstrat sicher und robust kontaktiert werden kann. Da der Kontaktierungsbereich in den Bereichen ohne Haftvermittlungsschicht nicht auf dem Zielsubstrat anhaftet, ist dieser für eine Kontaktierung leicht zugänglich. Auch kann im Vergleich zur Verwendung einer Klebefolie mit einer nicht-selbsttragenden Kleberschicht, die zwischen zwei so genannten Linern angeordnet ist, der Ausschuss verringert werden, da beispielsweise weder das fehleranfällige und aufwendige Anpassen der bisher separat vorliegenden Klebefolie an das Zielsubstrat noch das Anpassen der Klebefolie an den Touchsensor von Hand durchgeführt werden muss. Hierdurch können die Herstellungskosten weiter verringert werden. Auch ermöglicht die erfindungsgemäße Folie eine industrielle Massenproduktion. So ist es beispielsweise möglich, die Folie vollflächig mittels Heißlaminiermaschinen auf ein Zielsubstrat zu applizieren. Beim Heißlaminieren wird mittels Druck und Hitze auf einzelne, insbesondere lose Schichten eines Schichtstapels eingewirkt, um die einzelnen Schichten des Schichtstapels unlösbar miteinander zu verbinden und somit einen Verbundkörper zu erzeugen. Dabei wirkt der Druck und/oder die Hitze beispielsweise mittels flächigen Werkzeugen auf den Schichtstapel ein. Alternativ oder zusätzlich können beispielsweise auch Walzen als Werkzeuge vorgesehen sein, die Druck und/oder die Hitze als Linienberührung in einem Walzenspalt auf den Schichtstapel einwirken lassen. Hierdurch kann der zeitliche, personelle und logistische Aufwand weiter verringert werden und gleichzeitig eine identische Herstellungsqualität sichergestellt werden. So ermöglicht es die Erfindung, elektrische Funktionselemente, beispielsweise ein Display mit einem Touchsensor, kostengünstig herzustellen und gleichzeitig eine robuste und sichere Kontaktierung der elektrischen Funktionsstruktur, welche beispielsweise die Tastfeldfunktionalität bereitstellt, zu ermöglichen.

Unter Bereich wird hierbei jeweils eine definierte Fläche einer Schicht oder der Folie verstanden, die bei Betrachtung senkrecht zu einer von dem Trägersubstrat aufgespannten Ebene eingenommen wird. So weist beispielsweise die mindestens eine elektrisch leitfähige Schicht einen Funktionsbereich sowie mindestens einen Kontaktierungsbereich auf, wobei jeder der Bereiche jeweils eine definierte Fläche bei Betrachtung senkrecht zu einer von dem Trägersubstrat aufgespannten Ebene einnimmt.

Weitere vorteilhafte Ausgestaltungen der Erfindung sind in den Unteransprüchen bezeichnet.

Erfindungsgemäß ist die mindestens eine elektrisch leitfähige Schicht zwischen dem Trägersubstrat und der Haftvermittlungsschicht angeordnet ist. So ist es möglich, dass die Haftvermittlungsschicht auf der dem Trägersubstrat abgewandten Seite der mindestens einen elektrisch leitfähigen Schicht angeordnet ist. So ist es möglich, dass in dem Schritt c) die Haftvermittlungsschicht derart aufgebracht wird, dass die mindestens eine elektrisch leitfähige Schicht zwischen dem Trägersubstrat und der Haftvermittlungsschicht angeordnet ist. Da die Haftvermittlungsschicht auf der Oberfläche der Folie angeordnet ist, kann die Folie direkt auf ein Zielsubstrat appliziert werden, wobei weiter sichergestellt ist, dass die elektrische Funktionsstruktur sicher kontaktierbar ist.

Erfindungsgemäß ist es alternativ möglich, dass die Haftvermittlungsschicht auf der der mindestens einen elektrisch leitfähigen Schicht abgewandten Seite des Trägersubstrats angeordnet ist. So ist es möglich, dass in dem Schritt c) die Haftvermittlungsschicht auf der der mindestens einen elektrisch leitfähigen Schicht abgewandten Seite des Trägersubstrats angeordnet ist.

Vorzugsweise ist hierbei die Haftvermittlungsschicht bei Betrachtung senkrecht zu einer von dem Trägersubstrat aufgespannten Ebene vollflächig aufgebracht. Vorteilhafterweise ist die Haftvermittlungsschicht damit in dem Funktionsbereich und dem Kontaktierungsbereich angeordnet. Weiter ist es möglich, dass die Haftvermittlungsschicht vollflächig auf das Trägersubstrat derart aufgebracht ist, dass zwischen dem Trägersubstrat und der Haftvermittlungsschicht keine weiteren Schichten angeordnet sind.

Vorzugsweise überdeckt die Haftvermittlungsschicht den Funktionsbereich zumindest bereichsweise. So ist es möglich, dass in dem Schritt c) die Haftvermittlungsschicht derart aufgebracht wird, dass die Haftvermittlungsschicht den Funktionsbereich zumindest bereichsweise überdeckt. Hierdurch kann sichergestellt werden, dass der Funktionsbereich auf dem Zielsubstrat anhaftet.

Unter Anhaftung wird hier eine Haftung der Folie auf dem Zielsubstrat derart verstanden, dass eine vordefinierte Mindesthaftkraft erreicht wird, die ein sicheres Anhaften der Folie auf dem Zielsubstrat ermöglicht. Die Haftkraft ist hierbei zumindest derart stark, dass die Folie bei einem bestimmungsgemäßen Gebrauch von dem die applizierte Folie und das Zielsubstrat aufweisenden Zwischen- oder Endprodukt nicht getrennt werden kann. Die Haftkraft ist dabei jedoch nicht notwendigerweise derart stark, dass die Folie nicht unter großem Kraftaufwand, wie beispielsweise bei einem Herunterreißen, von dem Zielsubstrat trennbar ist. So ist es möglich, dass die Haftkraft derart ist, dass die Folie sich mechanisch von dem Zielsubstrat trennen lässt, ohne das Zielsubstrat oder die Folie zu beschädigen.

Vorteilhafterweise überdeckt die Haftvermittlungsschicht den Funktionsbereich zu mindestens 30 %, bevorzugt zu mindestens 50 %, weiter bevorzugt zu mindestens 70 %.

Weiter ist es möglich, dass die Haftvermittlungsschicht den mindestens einen Kontaktierungsbereich vollflächig nicht überdeckt. So ist es möglich, dass die Haftvermittlungsschicht bei einer Betrachtung senkrecht zu der von dem Trägersubstrat aufgespannten Ebene den gesamten mindestens einen Kontaktierungsbereich nicht überdeckt. Hierdurch wird eine sichere und robuste Kontaktierung einer elektrischen Funktionsstruktur, welche beispielsweise die Tastfeldfunktionalität bereitstellt, ermöglicht.

Es ist von Vorteil, dass die Haftvermittlungsschicht bei Betrachtung senkrecht zu einer von dem Trägersubstrat aufgespannten Ebene einen an den mindestens einen Kontaktierungsbereich angrenzenden Bereich nicht überdeckt.

Weiter ist es vorteilhaft, dass der an den mindestens einen Kontaktierungsbereich angrenzende Bereich eine Breite von mindestens 0,2 mm, bevorzugt von mindestens 0,5 mm, weiter bevorzugt von mindestens 1 mm, noch weiter bevorzugt von mindestens 2 mm, aufweist. Unter Breite wird hierbei der Abstand zwischen der Grenzfläche, die von dem mindestens einen Kontaktierungsbereich und dem einen an den mindestens einen Kontaktierungsbereich angrenzenden Bereich gebildet wird, und der Grenzfläche, die von der Haftvermittlungsschicht und dem einen an den mindestens einen Kontaktierungsbereich angrenzenden Bereich gebildet wird, verstanden.

Hierdurch wird eine Kontaktierung der elektrischen Funktionsstruktur erleichtert, da der Bereich, in welchem die Folie nicht auf dem Zielsubstrat anhaftet vergrößert wird. Da dieser Bereich direkt an den Kontaktierungsbereich angrenzt, wird beispielsweise ermöglicht, die Folie in dem Kontaktierungsbereich während eines Kontaktierungsvorgangs anzuheben, wodurch die Kontaktierungsstruktur zugänglicher ist und somit die Kontaktierung weiter erleichtert wird. So ist es möglich, dass der an den mindestens einen Kontaktierungsbereich angrenzende Bereich beweglich derart ist, dass der mindestens eine Kontaktierungsbereich angehoben werden kann.

Gemäß eines weiteren Ausführungsbeispiels der Erfindung ist die Haftvermittlungsschicht eine Schicht aus Polymeren und/oder Copolymeren, insbesondere umfassend Polymethyl(meth)acrylat (PMMA), Polyester, Polyurethan (PU) oder Polyvinylchlorid (PVC).

Weniger bevorzugt weist die Haftvermittlungsschicht Naturharze, vorzugsweise Kolophonium, Phenolharze, Isocyanat (NCO)-vernetzte Bindemittel, beispielsweise Melamin-Formaldehyd-Kondensationsharze (MF), Melamin-Phenol-Formaldehyd-Harze (MPF), Melamin-Polyester, Melamin-Harnstoff-Formaldehyd-Harze (UMF), Poly(organo)siloxanen oder strahlenhärtende Bindemittel auf.

Unter Bindemittel werden hierbei Stoffe verstanden, durch die Feststoffe, insbesondere mit einem feinen Zerteilungsgrad, miteinander bzw. auf einer Unterlage verbunden werden können. So ist es möglich, dass die Bindemittel in flüssiger Form den zu bindenden Feststoffen zugesetzt sind.

Vorteilhafterweise weist die Haftvermittlungsschicht eine Schichtdicke zwischen 0,1 µm und 50 µm, bevorzugt zwischen 0,25 µm und 25 µm, weiter bevorzugt zwischen 0,5 µm und 7 µm, auf.

Weiter ist es von Vorteil, wenn die Haftvermittlungsschicht eine oder mehrere Schichten umfasst. So ist es möglich, dass die Haftvermittlungsschicht zwei Schichten, insbesondere eine erste Haftvermittlungsschicht und eine zweite Haftvermittlungsschicht, umfasst. Hierdurch ist es möglich, die Anhaftung der Folie auf dem Zielsubstrat zu optimieren. So kann die zweite Haftvermittlungsschicht, welche insbesondere zwischen der ersten Haftvermittlungsschicht und dem Zielsubstrat angeordnet ist, beispielsweise auf das Material des Zielsubstrats abgestimmt sein, wobei die erste Haftvermittlungsschicht für das Material der an die erste Haftvermittlungsschicht angrenzenden Schicht der Folie, beispielsweise eine Schutzlackschicht, abgestimmt ist. Durch geeignete Wahl der ersten und der zweiten Haftvermittlungsschicht kann somit die Anhaftung der Folie an das Zielsubstrat optimiert werden.

Erfindungsgemäß ist vorgesehen, dass die Haftvermittlungsschicht aus einem Material besteht, das nach Applikation der Folie auf das Zielsubstrat hochtransparent ist, insbesondere dass die Haftvermittlungsschicht aus einem Material besteht, das nach Applikation der Folie auf das Zielsubstrat eine Transmission von Licht im Wellenlängenbereich zwischen 380 nm bis 780 nm von mehr als 85%, bevorzugt mehr als 90%, aufweist. Hierdurch kann beispielsweise erreicht werden, dass von dem Zielsubstrat abgestrahltes Licht im Wellenlängenbereich zwischen 380 nm bis 780 nm durch die Haftvermittlungsschicht nicht wesentlich in seiner Intensität verringert wird. Weiter sind optische Informationen des Zielsubstrats deutlich durch die auf das Zielsubstrat applizierte Folie erkennbar. Hierdurch kann beispielsweise erreicht werden, dass die Auflösung und Farbwidergabe eines Displays, auf welches die Folie appliziert wird, für einen menschlichen Betrachter nicht verändert wird.

Die Haftvermittlungsschicht kann im noch nicht auf dem Zielsubstrat applizierten Zustand insbesondere ein trübes optisches Erscheinungsbild aufweisen und damit (noch) nicht hochtransparent sein. Das trübe Erscheinungsbild kann beispielsweise durch Unterschiede im Brechungsindex der Haftvermittlungsschicht und der umliegenden Luft und/oder durch Oberflächenrauigkeiten der Haftvermittlungsschicht, insbesondere auf der der mindestens einen elektrisch leitfähigen Schicht abgewandten Seite der Haftvermittlungsschicht, entstehen. Die Oberflächenrauigkeiten können insbesondere einfallendes Licht streuen und hierdurch einen trüben Eindruck erzeugen. Derartige Oberflächenrauigkeiten können insbesondere bei dem Aufbringen der Haftvermittlungsschicht aufgrund der verwendeten Auftragsmethoden entstehen. Beispielsweise können die Oberflächenrauigkeiten durch ein Druckpattern einer Tiefdruckrasterwalze oder eines Siebdruckwerkzeugs gebildet werden. Nach Applikation der Folie auf das Zielsubstrat ist die Haftvermittlungsschicht hingegen hochtransparent, da die Haftvermittlungsschicht dann insbesondere mittels Heißlaminieren aufgeschmolzen und/oder derart mittels Druck eingeebnet ist, dass die Oberflächenrauigkeiten der Haftvermittlungsschicht nicht mehr störend in Erscheinung treten. Auch kann in Abhängigkeit des Brechungsindex des Zielsubstrates der Brechungsindexunterschied zwischen der Haftvermittlungsschicht und des an diese angrenzenden Materials aufgehoben sein. Dadurch ist die optische Grenzfläche zwischen Haftvermittlungsschicht und Zielsubstrat nicht mehr sichtbar.

Unter transparent wird hierbei die Eigenschaft von Materie verstanden, Licht aus dem für das menschliche Auge sichtbaren Wellenlängenbereich, insbesondere aus dem Wellenlängenbereich zwischen 380 nm bis 780 nm, hindurch zu lassen. Der Begriff "hochtransparent" beschreibt daher die Eigenschaft von Materie, Licht aus dem für das menschliche Auge sichtbaren Wellenlängenbereich, insbesondere aus dem Wellenlängenbereich zwischen 380 nm bis 780 nm, kaum abschwächt und im Wesentlichen ungehindert hindurch zu lassen. Eine hochtransparente Schicht weist daher für einen menschlichen Betrachter im Wesentlichen keine erkennbare Absorption von Licht auf, so dass die Lichtintensität bei Hindurchtreten des Lichts durch die Schicht für einen menschlichen Betrachter kaum erkennbar verringert wird.

Unter trüb wird hierbei die Eigenschaft von Materie verstanden, dass Licht aus dem für das menschliche Auge sichtbaren Wellenlängenbereich, insbesondere aus dem Wellenlängenbereich zwischen 380 nm bis 780 nm, die Materie nicht ungehindert passieren kann. Eine trübe Schicht verhindert beispielsweise durch streuende Eigenschaften, dass Licht diese ungehindert passieren kann. Auch kann Licht in einer trüben Schicht absorbiert und/oder reflektiert werden. Eine trübe Schicht kann beispielsweise für einen menschlichen Betrachter einen milchigen optischen Eindruck erzeugen, so dass unter einen trüben Schicht angeordnete weitere Schichten beispielsweise verschmiert und/oder verschleiert wahrgenommen werden.

Weiter ist es vorteilhaft, dass die Haftvermittlungsschicht aus einem Material besteht, das nach Applikation der Folie auf das Zielsubstrat klar ist, insbesondere dass die Haftvermittlungsschicht aus einem Material besteht, das nach Applikation der Folie auf das Zielsubstrat Licht im Wellenlängenbereich zwischen 380 nm bis 780 nm um weniger als 8%, bevorzugt um weniger als 4%, durch Streuung ablenkt. Hierdurch kann beispielsweise erreicht werden, dass ein von einem Zielsubstrat, wie beispielsweise einem Display, erzeugtes Bild für einen menschlichen Betrachter im Wesentlichen nicht durch die auf das Zielsubstrat applizierte Folie beeinflusst wird. Durch die geringe Streuung des Materials der Haftvermittlungsschicht und damit der Haftvermittlungsschicht selbst kann so sichergestellt werden, dass ein von einem Display erzeugtes Bild für einen menschlichen Betrachter nicht als unscharf oder verschmiert wahrgenommen wird, wenn die Folie auf das Display appliziert ist. So kann hierdurch, insbesondere bei hochauflösenden Displays mit Pixeldichten von mehr als 200 ppi (ppi = Pixel per Inch, Pixel pro Zoll), eine brillante und originalgetreue Betrachtung des von dem Display erzeugten Bildes durch die Folie erreicht werden.

Die Haftvermittlungsschicht kann, wie zuvor beschrieben, im noch nicht auf dem Zielsubstrat applizierten Zustand insbesondere lichtstreuende Eigenschaften aufgrund von Oberflächenrauigkeiten der Haftvermittlungsschicht und damit ein trübes optisches Erscheinungsbild aufweisen. Die Haftvermittlungsschicht wird insbesondere dann klar, wenn die Folie auf dem Zielsubstrat appliziert ist und die Haftvermittlungsschicht beispielsweise mittels durch das Heißlaminieren zugeführter Hitze und/oder Druck aufgeschmolzen und/oder eingeebnet ist, so dass die Oberflächenrauigkeiten der Haftvermittlungsschicht nicht mehr störend in Erscheinung treten. Das heißt durch physikalische und/oder chemische Veränderungen der Haftvermittlungsschicht während bzw. nach der Applikation der Folie auf das Zielsubstrat wird die Haftvermittlungsschicht hochtransparent und/oder klar.

Erfindungsgemäß ist vorgesehen, dass die Haftvermittlungsschicht aus einem Heißkleberoder einem strahlungshärtbaren Kleber, insbesondere einem mittels elektromagnetischer Strahlung und/oder Elektronenstrahlung härtbaren Kleber, gebildet ist. Es ist weiterhin offenbart, dass die Haftvermittlungsschicht , in einer nicht unter den beanspruchten Anspruchsgegenstand fallenden Ausführung, durch einen Kaltkleber gebildet sein kann.

Weiter ist es möglich, dass die Haftvermittlungsschicht musterförmig, insbesondere in Form eines Rechtecks, abgerundeten Rechtecks oder Motivs, ausgestaltet ist. So ist es möglich, dass das Muster der musterförmig ausgestalteten Haftvermittlungsschicht an Strukturen des Zielsubstrats angepasst ist.

Auch ist es möglich, dass die Haftvermittlungsschicht gemäß einem Raster, insbesondere einem eindimensionalen oder zweidimensionalen Raster, aufgebracht ist. So ist es möglich, dass die Haftvermittlungsschicht gemäß einem Punkt- oder Linienraster aufgebracht ist. Während der Applikation der Folie auf das Zielsubstrat wird das von der Haftvermittlungsschicht gebildete Raster geglättet, so dass die Transparenz der Folie nicht negativ durch die gemäß dem Raster aufgebrachte Haftvermittlungsschicht beeinflusst wird.

Vorteilhafterweise weist die Folie nach Applikation auf das Zielsubstrat zumindest in dem einen Funktionsbereich der mindestens einen elektrisch leitfähigen Schicht eine Transmission von Licht im Wellenlängenbereich zwischen 380 nm bis 780 nm von mehr als 75%, bevorzugt mehr als 80%, weiter bevorzugt mehr als 85%, noch weiter bevorzugt mehr als 90%, auf.

Die Transmission beschreibt hierbei die Durchlässigkeit der Folie für Licht aus dem Wellenlängenbereich zwischen 380 nm bis 780 nm. Auf die Folie einfallendes Licht, wird teilweise an der Grenzfläche Luft - Folie sowie an Grenzflächen der Schichten der Folie reflektiert. Weiter wird das auf die Folie einfallende Licht beim Durchqueren der Folie teilweise absorbiert. Der verbleibende Anteil des Lichts wird durch die Folie transmittiert und tritt an der gegenüberliegenden Seite der Folie wieder aus. Zur Bestimmung des Transmissionsgrads τ wird der Quotient aus der Lichtintensität hinter der Folie I und der Lichtintensität vor der Folie I₀ gebildet. Der Transmissionsgrad τ ist ein Maß für die "durchgelassene" Intensität und nimmt Werte zwischen 0 und 1 an. Die Transmission ist typischerweise abhängig von der Wellenlänge des einfallenden Lichts. Daher wird der Wellenlängenbereich neben den Transmissionswerten angegeben.

Wie zuvor beschrieben, kann die Haftvermittlungsschicht vor Applikation der Folie auf ein Zielsubstrat beispielsweise aufgrund von Oberflächenrauigkeiten ein trübes optisches Erscheinungsbild aufweisen. Insbesondere während des Applikationsprozesses werden diese Oberflächenrauigkeiten nivelliert, so dass die Haftvermittlungsschicht nach Applikation auf das Zielsubstrat hochtransparent und/oder klar ist, so dass der trübe optische Eindruck der Haftvermittlungsschicht verschwindet und die Folie insgesamt zumindest in dem einen Funktionsbereich der mindestens einen elektrisch leitfähigen Schicht eine Transmission von Licht im Wellenlängenbereich zwischen 380 nm bis 780 nm von mehr als 75%, bevorzugt mehr als 80%, weiter bevorzugt mehr als 85%, noch weiter bevorzugt mehr als 90%, aufweist. Wie später noch erläutert wird, ist es von Vorteil, wenn die Folie auf ein Zielsubstrat mit bekannter Transmission appliziert wird und anschließend die Gesamttransmission des aus dem Zielsubstrat und der Folie gebildeten elektrischen Funktionselements bestimmt wird.

Gemäß eines weiteren Ausführungsbeispiels der Erfindung umfasst die Folie eine Ablöseschicht, wobei die Ablöseschicht bei Betrachtung senkrecht zu einer von dem Trägersubstrat aufgespannten Ebene den mindestens einen Kontaktierungsbereich zumindest bereichsweise überdeckt. So ist es möglich, dass das Verfahren weiter folgende Schritte umfasst: e) Aufbringen einer Ablöseschicht derart, dass die Ablöseschicht bei Betrachtung senkrecht zu einer von dem Trägersubstrat aufgespannten Ebene den mindestens einen Kontaktierungsbereich zumindest bereichsweise überdeckt. So ist es möglich, dass die Ablöseschicht ein Anhaften des mindestens einen Kontaktierungsbereichs verhindert.

Weiter ist es von Vorteil, dass das Trägersubstrat und/oder die mindestens eine elektrisch leitfähige Schicht und/oder die Ablöseschicht und/oder die Schutzlackschicht transparent, ausgebildet ist/sind.

Auch ist es möglich, dass die Ablöseschicht den mindestens einen Kontaktierungsbereich vollflächig überdeckt.

Weiter ist es möglich, dass die Ablöseschicht den an den mindestens einen Kontaktierungsbereich angrenzenden Bereich überdeckt.

Durch die Ablöseschicht kann weiter sichergestellt werden, dass die Folie in Bereichen, welche die Ablöseschicht aufweisen, nicht auf dem Zielsubstrat anhaftet. Durch die Ablöseschicht kann somit verhindert werden, dass der mindestens eine Kontaktierungsbereich auf dem Zielsubstrat anhaftet, insbesondere dass der mindestens eine Kontaktierungsbereich durch das Heißlaminieren der Folie auf das Zielsubstart auf dem Zielsubstrat anhaftet.

Die Ablöseschicht besteht bevorzugt aus Wachsen, Polyethylen (PE), Polypropylen (PP), Cellulose-Derivaten oder Poly(organo)siloxanen. Vorgenannte Wachse können natürliche Wachse, synthetische Wachse oder Kombinationen davon sein. Vorgenannte Wachse sind beispielsweise Carnauba-Wachse. Vorgenannte Cellulose-Derivate sind beispielsweise Celluloseacetat (CA), Cellulosenitrat (CN), Celluloseacetatbutyrat (CAB) oder Mischungen davon. Vorgenannte Poly(organo)siloxane sind beispielsweise Silicon-Bindemittel, Polysiloxan-Bindemittel oder Mischungen davon.

Weniger bevorzugt weist die Ablöseschicht Naturharze, vorzugsweise Kolophonium, Phenolharze, halogenhaltige Homopolymere, beispielsweise Polyvinylchlorid (PVC), Polyvinylfluorid (PVF), Polytetrafluorethan (PTFE), Polyvinylidenfluorid (PVDF) oder Polyvinylidenchlorid (PVDC), Polyester, beispielsweise Polybutylenterephthalat (PBT), Polycyclohexylendimethylenterephthalat (PCT), Polyethylenterephthalat (PET), Polytrimethylenterephthalat (PTT), Polyethylennaphthalat (PEN), Polycarbonat (PC), Polyestercarbonat (PEC), Polyacrylate (PAC) oder ungesättigtes Polyesterharz (UP), polymere Carbonsäureester, beispielsweise Polymethyl(meth)acrylate (PMMA), Isocyanat (NCO)-vernetzte Bindemittel, beispielsweise Melamin-Formaldehyd-Kondensationsharze (MF), Melamin-Phenol-Formaldehyd-Harze (MPF), Melamin-Polyester, Melamin-Harnstoff-Formaldehyd-Harze (UMF), Polyolefinen, die nicht PP oder PE sind, beispielsweise Polymethylpenten (PMP), Polyisobutylen (PIB) oder Polybutylen (PB), Copolymere bestehend aus PVC, PMMA, PU, Poly(organo)siloxanen und Polyolefinen, die nicht PP oder PE sind, auf.

Weniger bevorzugt weist die Ablöseschicht weiterhin strahlenhärtende Bindemittel auf.

Vorzugsweise weist die Ablöseschicht eine Schichtdicke zwischen 0,1 µm und 10 µm, bevorzugt zwischen 0,1 µm und 5 µm, auf. Diese geringe Schichtdicke ist vorteilhaft, damit eine elektrische Kontaktierung des von der Ablöseschicht abgedeckten mindestens einen Kontaktierungsbereichs, insbesondere mittels Adapterelementen und/oder Verbindungselementen und/oder Kontaktelementen, wie beispielsweise mittels Kontaktfedern, ZIF-Steckern (ZIF = Zero-Insertion-Force), Krimpkontakten, Krimp-Flex-Kontakten, ACF-Bonding (Anisotrope-Conductive-Film) oder einer Leitgummi-Mehrfach-Verbindung (ZEBRA), möglich ist. Vorteilhafterweise wird hierbei die Ablöseschicht bei der elektrischen Kontaktierung, insbesondere durch die Adapterelemente und/oder Verbindungselemente und/oder Kontaktelemente, lokal durchdrungen, so dass die Ablöseschicht lokal keine eine die elektrische Kontaktierung behindernde, insbesondere elektrisch isolierende, Wirkung mehr entfaltet. Hierbei ist von Vorteil, wenn die elektrisch isolierende Ablöseschicht mittels mechanischphysikalischen Kräften bei der Kontaktierung, insbesondere durch die Adapterelemente und/oder Verbindungselemente und/oder Kontaktelemente,so zerstört wird, dass eine elektrische Leitfähigkeit, insbesondere zwischen dem mindestens einen Kontaktierungsbereich und den Adapterelementen und/oder Verbindungselementen und/oder Kontaktelementen, entsteht. Beispielsweise wird dies durch Kontaktfedern oder durch Krimpen erreicht. Weiter ist auch eine ZIF-Kontaktierung mechanisch "schneidend", so dass auch hierdurch eine elektrische Kontaktierung des von der Ablöseschicht abgedeckten mindestens einen Kontaktierungsbereichs ermöglicht wird. Beim ACF-Bonding können Metallpigmente in der Kleberschicht beim Verpressen/Verprägen der Folie durch die Ablöseschicht dringen, so dass auch mittels ACF-Bonding eine elektrische Kontaktierung möglich ist.

Weiter ist es auch möglich, dass eine elektrische Kontaktierung nicht zwingend durch eine galvanische Verbindung zwischen dem mindestens einen Kontaktierungsbereich und den Adapterelementen und/oder Verbindungselementen und/oder Kontaktelementen und/oder der Kontaktschicht, insbesondere des Zielsubstrats, erfolgen muss. So ist es auch möglich, dass ein elektrischer Kontakt über eine kapazitive Kopplung zweier Kontaktflächen, wie beispielsweise zwischen dem mindestens einen Kontaktierungsbereich und einem Zielkontaktierungsbereich, insbesondere einer Kontaktschicht des Zielsubstrats, mit zumindest einer dazwischen angeordneten isolierenden Schicht erreicht wird.

Gemäß eines weiteren Ausführungsbeispiels der Erfindung umfasst die Folie eine Schutzlackschicht.

Vorteilhafterweise überdeckt die Schutzlackschicht bei Betrachtung senkrecht zu einer von dem Trägersubstrat aufgespannten Ebene die mindestens eine elektrisch leitfähige Schicht zumindest bereichsweise. Weiter ist es von Vorteil, dass zwischen dem Schritt b) und dem Schritt c) weiter folgender Schritt durchgeführt wird: - Aufbringen einer Schutzlackschicht insbesondere derart, dass die Schutzlackschicht bei Betrachtung senkrecht zu einer von dem Trägersubstrat aufgespannten Ebene die mindestens eine elektrisch leitfähige Schicht zumindest bereichsweise überdeckt. So ist es möglich, dass die Schutzlackschicht die mindestens eine elektrisch leitfähige Schicht vor mechanischen, physikalischen und/oder chemischen Umwelteinflüssen schützt.

Auch ist es möglich, dass die Schutzlackschicht die mindestens eine elektrisch leitfähige Schicht bei Betrachtung senkrecht zu einer von dem Trägersubstrat aufgespannten Ebene in dem Funktionsbereich vollflächig überdeckt.

Auch ist es möglich, dass die Folie ein oder mehrere Schutzlackschichten umfasst.

Insbesondere Schutzlackschichten, welche die äußerste Schicht der Folie oder eines Zwischen- oder Endprodukts, insbesondere eines elektrischen

Funktionselements, auf welches die Folie appliziert wurde, darstellen, schützen hierbei die weiteren Schichten der Folie vor mechanischen, physikalischen und/oder chemischen Umwelteinflüssen oder Einflüssen weiterer Prozessschritte.

Es ist von Vorteil, dass die Schutzlackschicht eine Schichtdicke zwischen 0,1 µm und 50 µm, bevorzugt zwischen 0,25 µm und 25 µm, weiter bevorzugt zwischen 0,5 µm und 15 µm, aufweist.

Vorzugsweise ist die Schutzlackschicht eine transparente Schutzlackschicht, insbesondere aus PMMA, Polyester, PU oder PVC.

Weniger bevorzugt weist die Schutzlackschicht Naturharze, vorzugsweise Kolophonium, Phenolharze, Isocyanat (NCO)-vernetzte Bindemittel, beispielsweise MF, MPF, Melamin-Polyester, UMF, Polyolefinen, die nicht PP oder PE sind, beispielsweise PMP, PIB oder PB auf.

Auch ist es von Vorteil, dass die Schutzlackschicht zwischen der mindestens einen elektrisch leitfähigen Schicht und der Haftvermittlungsschicht angeordnet ist. Auch ist es möglich, dass die Schutzlackschicht derart aufgebracht wird, dass die Schutzlackschicht zwischen der mindestens einen elektrisch leitfähigen Schicht und der Haftvermittlungsschicht angeordnet ist. So ist es möglich, dass die Schutzlackschicht auf der dem Trägersubstrat abgewandten Seite der mindestens einen elektrisch leitfähigen Schicht angeordnet ist.

Weiter es möglich, dass die Folie einen Aufbau in der folgenden Reihenfolge aufweist:
- Trägersubstrat
- mindestens eine elektrische leitfähige Schicht
- Schutzlackschicht
- Haftvermittlungsschicht.

Weiter ist es möglich, dass die Schutzlackschicht zwischen der mindestens einen elektrisch leitfähigen Schicht und dem Trägersubstrat angeordnet ist. Dabei ist die elektrisch leitfähige Schicht zwischen der Schutzlackschicht und der Haftvermittlungsschicht eingebettet und geschützt. Die Schutzlackschicht und die Haftvermittlungsschicht bestehen dabei bevorzugt aus Lacken mit ähnlichen physikalischen Eigenschaften, insbesondere hinsichtlich der mechanischen Verformbarkeit und Verdehnbarkeit. Dadurch ist es möglich, dass die eingebettete elektrisch leitfähige Schicht bei einer starken Verformung der Folie nicht beschädigt wird, beispielsweise reißt, wodurch ihre elektrische Funktionsfähigkeit erhalten bleibt. Durch die vorgehend beschriebene Einbettung der elektrisch leitfähigen Schicht wird weiter auch eine Delamination dieser Schichten verhindert.

Auch ist es möglich, dass die Folie eine Grundierungslackschicht, insbesondere eine zur Metallisierung bedampfbare Grundierungslackschicht, umfasst. Vorteilhafterweise ist die Grundierungslackschicht zwischen der Schutzlackschicht und der mindestens einen elektrisch leitfähigen Schicht angeordnet.

Vorteilhafterweise ist die Grundierungslackschicht eine Schicht aus Polymeren und/oder Copolymeren, insbesondere umfassend Polymethyl(meth)acrylat (PMMA), Polyester, Polyurethan (PU) oder Polyvinylchlorid (PVC).

Weniger bevorzugt weist die Grundierungslackschicht Naturharze, vorzugsweise Kolophonium, Phenolharze, Isocyanat (NCO)-vernetzte Bindemittel, beispielsweise Melamin-Formaldehyd-Kondensationsharze (MF), Melamin-Phenol-Formaldehyd-Harze (MPF), Melamin-Polyester, Melamin-Harnstoff-Formaldehyd-Harze (UMF), Poly(organo)siloxanen oder strahlenhärtende Bindemittel auf.

Vorzugsweise weist die Grundierungslackschicht eine Schichtdicke zwischen 0,1 µm und 5 µm, bevorzugt zwischen 0,1 µm und 2 µm, auf.

Weiter es möglich, dass die Folie einen Aufbau in der folgenden Reihenfolge aufweist:
- Trägersubstrat
- Schutzlackschicht
- Grundierungslackschicht
- mindestens eine elektrische leitfähige Schicht
- Haftvermittlungsschicht.

Weiter ist es von Vorteil, wenn die Folie eine Transferfolie ist.

Vorteilhafterweise weist eine Transferfolie eine Trägerlage, insbesondere das Trägersubstrat, sowie eine von der Trägerlage, insbesondere dem Trägersubstrat, ablösbare Transferlage auf.

Vorteilhafterweise ist zwischen der Trägerlage, insbesondere dem Trägersubstrat, und der Transferlage eine Trennschicht angeordnet, welche ein Ablösen der Transferlage von der Trägerlage, insbesondere dem Trägersubstrat, ermöglicht.

So ist es möglich, nur die Transferlage auf ein Zielsubstrat, insbesondere mittels Heißprägen, aufzubringen.

Es ist jedoch auch möglich, dass die Trägerlage, insbesondere das Trägersubstrat, nach Applikation auf das Zielsubstrat nicht abgelöst wird, so dass die Trägerlage, insbesondere das Trägersubstrat, ebenfalls auf dem Zielsubstrat verbleibt.

Weiter ist es möglich, dass die Folie eine Trennschicht umfasst. Es ist es möglich, dass es sich bei der Trennschicht um eine ein- oder mehrschichtige Trennschicht handelt. Vorzugsweise ist die Trennschicht zwischen dem Trägersubstrat und der Schutzlackschicht angeordnet. Hierdurch kann beispielsweise erreicht werden, dass das Trägersubstrat nach Applikation der Folie auf das Zielsubstrat abgelöst werden kann. Hierdurch kann eine noch bessere Verformbarkeit und/oder Verdehnbarkeit der applizierten Folie erreicht werden, da das vergleichsweise dicke und weniger verform- und/oder verdehnbare Trägersubstrat entfernt wurde. Die die Folie schützende Funktion übernimmt die Schutzlackschicht.

Vorzugsweise handelt es sich bei der Trennschicht um eine Wachsschicht und/oder eine Polymerschicht aus beispielsweise Acrylaten und/oder Melaminformaldehydharz-vernetzten Lacken. Vorzugsweise weist die Trennschicht eine Schichtdicke von weniger als 1 µm auf. Der Schichtaufbau der Folie muss hierbei nicht notwendigerweise dem Schichtaufbau gemäß Anspruch 1 entsprechen.

Vorteilhafterweise kann vorgesehen sein, dass die Haftkraft zwischen dem Trägersubstrat und der Schutzlackschicht aufgrund der zwischen dem Trägersubstrat und der Schutzlackschicht angeordneten Trennschicht um 20 % bis 80 %, bevorzugt um 30 % bis 70 %, kleiner ist als die Haftkraft zwischen der Schutzlackschicht und der Grundierungslackschicht und/oder der mindestens einen elektrisch leitfähigen Schicht und/oder der Haftvermittlungsschicht.

So ist es möglich, dass die Haftkraft zwischen dem Trägersubstrat und der Schutzlackschicht aufgrund der zwischen dem Trägersubstrat und der Schutzlackschicht angeordneten Trennschicht um 20 % bis 80 %, bevorzugt um 30 % bis 70 %, kleiner ist als die Haftkraft zwischen den Schichten der Transferlage, insbesondere ausgewählt aus der Gruppe Schutzlackschicht, Grundierungslackschicht, mindestens eine elektrisch leitfähige Schicht, ein-oder mehrere Dekorschichten, Haftvermittlungsschicht, Zwischenhaftschicht, dielektrische Schicht, Dunkelungsschicht und Kontaktverstärkungsschicht. Die Haftkräfte wurden mithilfe der Zugversuch-Prüfmaschine Zwick Z005 der Firma Zwick GmbH & Co. KG, Ulm, Deutschland ermittelt. Hierzu wurde die Transferfolie flach auf die untere Halterung geklebt. Die abzulösende Schicht wurde dann im rechten Winkel durch den Zugversuch abgelöst. Über die Kraftmessdose wurden die Ablösekräfte ermittelt.

So es möglich, dass die Folie einen Aufbau in der folgenden Reihenfolge aufweist:
- Trägersubstrat
- Trennschicht
- Schutzlackschicht
- Grundierungslackschicht
- mindestens eine elektrische leitfähige Schicht
- Haftvermittlungsschicht.

Auch bei der Ausführungsvariante der Folie als Transferfolie kann, da die Haftvermittlungsschicht den mindestens einen Kontaktierungsbereich nicht überdeckt, die elektrische Funktionsstruktur nach Applikation der Folie auf das Zielsubstrat kontaktiert werden, so dass beispielsweise mittels der oben genannten Kontaktierungsarten eine elektrische Verbindung hergestellt werden kann. Durch die optionale Trennschicht wird es weiter ermöglicht, dass das Trägersubstrat zumindest partiell abgelöst werden kann, , wodurch die nachträgliche Kontaktierungsmöglichkeit weiter verbessert wird, da die Folie in dieser Ausführungsvariante nicht bis zum Rand des Trägersubstrats klebt.

Weiter ist es möglich, insbesondere nach Entfernen des Trägersubstrats, ein Verstärkungselement aufzubringen, um die mechanische Stabilität der applizierten Transferlagen zu erhöhen.

Gemäß einer weiteren Ausführungsvariante weist das Zielsubstrat eine Kontaktschicht, insbesondere zur elektrischen Kontaktierung des mindestens einen Kontaktierungsbereichs der Folie, auf.

Vorzugsweise ist die Kontaktschicht direkt auf das Zielsubstrat aufgebracht.

Weiter ist es möglich, dass die Kontaktschicht mindestens ein Verbindungselement aufweist.

Weiter ist es auch möglich, dass die Kontaktschicht mindestens ein Adapterelement und/oder Kontaktelement aufweist.

Vorzugsweise weist das Zielsubstrat also bereits selbst mindestens ein Verbindungselement und/oder Adapterelement und/oder Kontaktelement, insbesondere zur elektrischen Kontaktierung des mindestens einen Kontaktierungsbereichs der Folie, auf.

Vorteilhafterweise ist die Kontaktschicht in mindestens einem Zielkontaktierungsbereich des Zielsubstrats angeordnet. Vorzugsweise bildet der mindestens eine Zielkontaktierungsbereich des Zielsubstrats das Gegenstück zu dem mindestens einen Kontaktierungsbereich der Folie. So ist es von Vorteil, dass der mindestens eine Zielkontaktierungsbereich des Zielsubstrats und der mindestens eine Kontaktierungsbereich der Folie, vorzugsweise nach Applikation der Folie auf das Zielsubstrat, deckungsgleich sind, insbesondere dass der mindestens eine Zielkontaktierungsbereich des Zielsubstrats und der mindestens eine Kontaktierungsbereich der Folie nach Applikation der Folie sich zumindest bereichsweise überdecken.

Weiter ist es möglich, dass das Zielsubstrat mindestens eine dritte elektrisch leitfähige Schicht umfasst. Vorzugsweise weist die mindestens eine dritte elektrisch leitfähige Schicht eine Vielzahl von Leiterbahnen auf. So ist es möglich, dass die mindestens eine dritte elektrisch leitfähige Schicht elektrisch leitfähige Strukturen, insbesondere Leiterbahnen aufweist, welche bevorzugt gemäß einem Raster angeordnet sind. Dieses Raster kann regelmäßig oder unregelmäßig sein. Das Raster kann insbesondere aus Rasterelementen aufgebaut sein, wie Linien und/oder Flächenelementen.

Weiter ist auch möglich, dass die mindestens eine dritte elektrisch leitfähige Schicht weitere elektrische Komponenten aufweist.

Vorteilhafterweise ist die mindestens eine dritte elektrisch leitfähige Schicht des Zielsubstrats elektrisch mit der mindestens einen Kontaktschicht verbunden.

So ist es beispielsweise möglich, dass das Zielsubstrat mit Leiterbahnen und/oder weiteren elektrischen Komponenten ausgestattet ist. Diese Leiterbahnen können dann vorteilhafterweise in bekannter Weise mittels Steckkontakten oder anderen bekannten Kontaktierungsmethoden mit weiteren elektrischen Komponenten elektrisch verbunden werden. Vorzugsweise kann dies mittels Laser-Direkt-Strukturierung (LDS) oder auch mittels aufgedruckter Kontakte, insbesondere mittels Siebdruck aufgedruckter Kontakte, oder auch mittels einer Kontaktschicht erfolgen, welche beispielsweise mittels Lamination und/oder Heißprägung oder Kaltprägung aufgebracht ist. So ist es beispielsweise möglich, dass das Zielsubstrat eine Art Leiterplatte ist.

So ist es möglich, dass mittels der Kontaktschicht die mindestens eine dritte elektrisch leitfähige Schicht des Zielsubstrats mit dem Funktionsbereich der elektrisch leitfähigen Schicht der Folie elektrisch über den Kontaktierungsbereich der Folie zu verbinden. Die Kontaktschicht auf dem Zielsubstrat bildet also den Gegenkontakt zu dem Kontaktierungsbereich der Folie.

Weiter ist es von Vorteil, wenn die Kontaktschicht, insbesondere das mindestens eine Verbindungselement und/oder Adapterelement und/oder Kontaktelement, und/oder die mindestens eine dritte elektrisch leitfähige Schicht mittels Laser-Direkt-Strukturierung (LDS) und/oder mittels Druckten, insbesondere mittels Siebdruck, erzeugt und/oder aufgebracht wird/werden.

Weiter ist auch möglich, dass die Kontaktschicht, insbesondere das mindestens eine Verbindungselement und/oder Adapterelement und/oder Kontaktelement, mittels Lamination und/oder Heißprägung oder Kaltprägung aufgebracht wird.

Weiter ist es möglich, dass die Kontaktschicht, insbesondere das mindestens eine Verbindungselement und/oder Adapterelement und/oder Kontaktelement auf dem Zielsubstrat aus einer elektrisch leitfähigen Paste, insbesondere Carbonpaste, gebildet ist, welche Silber (Ag), Gold (Au), Aluminium (Al), Kupfer (Cu), Chrom (Cr) und/oder andere leitfähige Metalle umfasst. Weiter ist es möglich, dass die elektrisch leitfähige Paste, insbesondere Carbonpaste, Bindemittel, insbesondere umfassend Kolophonium- und/oder Phenolharze, Polymere und Copolymere, umfasst. Bindemittel der elektrisch leitfähigen Paste, insbesondere Carbonpaste, sind Naturharze, vorzugsweise Kolophonium, Phenolharze, Polymere und Copolymere bestehend aus PVC, PMMA, PU, Polyester, Isocyanat (NCO)-vernetzte Bindemittel, beispielsweise MF, MPF, Melamin-Polyester, UMF. Weniger bevorzugt sind Bindemittel der elektrisch leitfähigen Paste umfassend Poly(organo)siloxane und deren Copolymere und/oder strahlenhärtende Bindemittel.

Weiter ist es möglich, dass die Folie in dem zumindest einen Kontaktierungsbereich vollständig oder partiell musterförmig, beispielsweise in einem Raster, mit einem Haftlack bedruckt ist. So ist es möglich, dass die Folie in dem zumindest einen Kontaktierungsbereich einen Haftlack aufweist.

Alternativ ist es auch möglich, dass die Folie in dem zumindest einen Kontaktierungsbereich den Haftlack nicht aufweist oder der Haftlack wird im Bereich der Kontakte lokal ganz ausgespart.

Vorzugsweise entsteht bei der Applikation der Folie auf das mit der Kontaktschicht versehene Zielsubstrat somit ein elektrischer (Press-)Kontakt (durch Hitze und Druck) zwischen Folie und Zielsubstrat, insbesondere im dem mindestens einen Kontaktierungsbereich und/oder Zielkontaktierungsbereich. Hierbei ist es möglich, dass der elektrische (Press-)Kontakt durch die Verklebung, insbesondere durch den Haftlack, dauerhaft wirkt.

Weiter ist es möglich, dass zwischen dem mindestens einen Kontaktierungsbereich der Folie und dem mindestens einen Zielkontaktierungsbereich des Zielsubstrats ein ACF-Bonding-Tape eingebracht wird. Hierdurch kann die elektrische Verbindung im Kontaktierungsbereich weiter verbessert werden. Hierbei ist es von Vorteil, wenn der Applikationsvorgang (Hitze und Druck) weitestgehend auch dem üblichen ACF-Bonding-Prozess entspricht.

Weiter ist es von Vorteil, wenn die Kontaktschicht des Zielsubstrat derart ausgestaltet ist, dass zwei oder mehrere Folien auf das Zielsubstrat aufgebracht werden können. So ist es möglich, das die Kontaktschicht des Zielsubstrats Verbindungselemente und/oder Adapterelemente und/oder Kontaktelemente zur elektrischen Kontaktierung von mindestens zwei Folien aufweist.

So ist es auch möglich, dass das Zielsubstrat in einem ersten Zielkontaktierungsbereich die Kontaktschicht zur Kontaktierung einer ersten Folie aufweist und in einem zweiten Zielkontaktierungsbereich die Kontaktschicht zur Kontaktierung einer zweiten Folie aufweist.

Vorteilhafterweise weist das Zielsubstrat, auf welches mindestens zwei Folien appliziert werden sollen, bereits eine Kontaktschicht auf, die derart ausgestaltet ist, dass ein Zweilagen-Sensor bestehend aus einer Folie für die x-Lage und einer Folie für die y-Lage, appliziert werden kann.

So ist es auch möglich, dass auf dem Zielsubstrat, auf welches die mindestens zwei Folien appliziert werden sollen, sich bereits, wie oben beschrieben, elektrische Kontakte und Kontakt-Zuleitungenfür einen Zweilagen-Sensor bestehend aus einer x- und einer y-Lage befinden. Vorzugsweise werden die x- und y-Lage jeweils aus einer erfindungsgemäßen Folie gebildet. Zunächst wird vorzugsweise die erste Sensor-Lage, beispielsweise die x-Lage, mittels der erfindungsgemäßen Folie auf das Zielsubstrat appliziert und der elektrische Kontakt hergestellt. Vorteilhafterweise wird die erste Sensor-Lage passergenau zu der Kontaktschicht, insbesondere dem mindestens einen Verbindungselement und/oder Adapterelement und/oder Kontaktelement, des Zielsubstrats zur elektrischen Kontaktierung, insbesondere der ersten Sensor-Lage, auf das Zielsubstrat appliziert.

So ist es möglich, dass in einem ersten Schritt eine erste Folie auf das Zielsubstrat derart appliziert wird, dass der mindestens eine Kontaktierungsbereich der ersten Folie sich zumindest bereichsweise mit dem Zielkontaktierungsbereich der Kontaktschicht zur Kontaktierung der ersten Folie überlappt.

Vorzugsweise erfolgt danach in einem separaten Schritt das Applizieren der zweiten Sensor-Lage, beispielsweise der y-Lage, mittels der erfindungsgemäßen Folie passergenau zur ersten Sensor-Lage bzw. passergenau zu der Kontaktschicht, insbesondere dem mindestens einen Verbindungselement und/oder Adapterelement und/oder Kontaktelement, des Zielsubstrats zur elektrischen Kontaktierung, insbesondere der zweiten Sensor-Lage, auf das Zielsubstrat. Hierbei ist es möglich, dass eine Verklebung, beispielsweise mittels OCA, zwischen denSensor-Lagen entfallen kann. Die Passergenauigkeit, das heißt die Lagegenauigkeit der zweiten Sensor-Lage relativ zur ersten Sensor-Lage, beträgt bevorzugt ±350µm, weiter bevorzugt ±150µm, in x- und y-Richtung, um die gewünschte Funktionalität des Sensors zu erreichen.

So ist es möglich, dass in einem zweiten Schritt eine zweite Folie auf das Zielsubstrat derart appliziert wird, dass der mindestens eine Kontaktierungsbereich der zweiten Folie sich zumindest bereichsweise mit dem Zielkontaktierungsbereich der Kontaktschicht zur Kontaktierung der zweiten Folie überlappt.

Im Folgenden sind unter anderem bevorzugte Ausgestaltungen des mindestens einen Kontaktierungsbereichs und/oder der mindestens einen Kontaktierungsstruktur beschrieben.

Vorzugsweise ist die mindestens eine Kontaktierungsstruktur zur Kontaktierung der elektrischen Funktionsstruktur ein elektrischer Anschluss, insbesondere ein Stecker.

Vorteilhafterweise weist die mindestens eine elektrisch leitfähige Schicht eine Kontaktverstärkungsschicht auf.

Weiter ist es von Vorteil, dass die mindestens eine elektrisch leitfähige Schicht die Kontaktverstärkungsschicht in dem mindestens einen Kontaktierungsbereich zumindest bereichsweise aufweist, wobei die Kontaktverstärkungsschicht den mindestens einen Kontaktierungsbereich vor mechanischen, physikalischen und/oder chemischen Umwelteinflüssen schützt.

So ist es möglich, dass zwischen dem Schritt b) und dem Schritt c) folgender Schritt durchgeführt wird: - Aufbringen einer Kontaktverstärkungsschicht (7) derart, dass die mindestens eine elektrisch leitfähige Schicht (3) eine Kontaktverstärkungsschicht (7) aufweist, insbesondere dass die mindestens eine elektrisch leitfähige Schicht (3) die Kontaktverstärkungsschicht (7) in dem mindestens einen Kontaktierungsbereich (20) zumindest bereichsweise aufweist.

Durch die Kontaktverstärkungsschicht wird die Beständigkeit/Haltbarkeit des mindestens einen Kontaktierungsbereichs verbessert, da der Kontaktierungsbereich durch die Kontaktverstärkungsschicht beispielsweise vor Korrosion oder einem Verkratzen geschützt wird. Weiterhin kann auch die mechanische Stabilität des Kontaktierungsbereichs, insbesondere die Biegestabilität und/oder Knickstabilität, verbessert sein.

Weiter ist es möglich, dass die Kontaktverstärkungsschicht den mindestens einen Kontaktierungsbereich vollflächig überdeckt.

Auch ist es möglich, dass der mindestens eine Kontaktierungsbereich ein oder mehrere voneinander separierte Kontaktierungsbereiche aufweist. Unter separiert wird hierbei verstanden, dass die Kontaktierungsbereiche voneinander beanstandet sind, insbesondere dass die Kontaktierungsbereiche einen Abstand von mindestens 0,1 mm, bevorzugt mindestens 0,2 mm, weiter bevorzugt mindestens 0,5 mm, zueinander aufweisen,

Weiter ist es von Vorteil, dass die Kontaktverstärkungsschicht eine Schichtdicke zwischen 0,1 µm und 100 µm, bevorzugt zwischen 0,25 µm und 25 µm, weiter bevorzugt zwischen 0,5 µm und 10 µm, aufweist.

Es ist möglich, dass die Kontaktverstärkungsschicht aus einer elektrisch leitfähigen Paste, insbesondere Carbonpaste, gebildet ist, welche Silber (Ag), Gold (Au), Aluminium (Al), Kupfer (Cu), Chrom (Cr) und/oder andere leitfähige Metalle umfasst. Weiter ist es möglich, dass die elektrisch leitfähige Paste, insbesondere Carbonpaste, Bindemittel, insbesondere umfassend Kolophonium- und/oder Phenolharze, Polymere und Copolymere, umfasst.

Bindemittel der elektrisch leitfähigen Paste, insbesondere Carbonpaste, sind Naturharze, vorzugsweise Kolophonium, Phenolharze, Polymere und Copolymere bestehend aus PVC, PMMA, PU, Polyester, Isocyanat (NCO)-vernetzte Bindemittel, beispielsweise MF, MPF, Melamin-Polyester, UMF. Weniger bevorzugt sind Bindemittel der elektrisch leitfähigen Paste umfassend Poly(organo)siloxane und deren Copolymere und/oder strahlenhärtende Bindemittel.

Es ist von Vorteil, dass die Haftvermittlungsschicht, die Schutzlackschicht, die Ablöseschicht und/oder die Kontaktverstärkungsschicht mittels Tiefdruck, Siebdruck, Hochdruck oder Gusstechniken aufgebracht wird/werden.

Im Folgenden sind unter anderem bevorzugte Ausgestaltungen des mindestens einen elektrisch leitfähigen Schicht und/oder der elektrischen Funktionsstruktur beschrieben:
Gemäß eines weiteren Ausführungsbeispiels der Erfindung bildet die elektrische Funktionsstruktur ein Touchsensorfeld, insbesondere ein kapazitives Sensorfeld, aus, welches eine Tastfeldfunktionalität bereitstellt. Es ist auch möglich, dass die elektrische Funktionsstruktur ein resistives oder induktives Sensorfeld ausbildet.

Unter Touchsensorfeld wird hierbei ein berührungsempfindlicher Sensor verstanden, der die Steuerung eines elektrischen Funktionselements, beispielsweise eines PDAs, ermöglicht. Ebenfalls wird unter einem Touchsensorfeld ein Multitouchsensorfeld verstanden, welches mehrere gleichzeitige Berührungen verarbeiten kann, beispielsweise zum Vergrößern und Drehen von Bildern, die auf einem insbesondere unter dem Touchsensorfeld angeordneten Display angezeigt werden.

In einer bevorzugten Ausführungsform ist vorgesehen, dass die Folie zumindest zwei elektrisch leitfähige Schichten, insbesondere eine erste elektrisch leitfähige Schicht und eine zweite elektrisch leitfähige Schicht, umfasst.

Vorteilhafterweise sind die zumindest zwei elektrisch leitfähigen Schichten bei Betrachtung senkrecht zu einer von dem Trägersubstrat aufgespannten Ebene zumindest bereichsweise überlappend angeordnet.

Hierdurch ist es möglich insbesondere mehrlagige Touchsensoren herzustellen, die auch mehrere gleichzeitige Berührungen verarbeiten können, beispielsweise zum Vergrößern und Drehen von Bildern. Beispielsweise kann die zweite elektrisch leitfähige Schicht auf einer zweiten Trägerfolie bereitgestellt werden, die insbesondere mittels der Haftvermittlungsschicht und/oder einer Zwischenhaftschicht und/oder unter Zuhilfenahme von Primerschichten und/oder Kleberschichten auf die erste leitfähige Schicht aufgebracht, insbesondere aufgeklebt wird. Diese Primerschichten und/oder Kleberschicht können aus einem Heißkleber, einem Kaltkleber oder einem strahlungshärtbaren Kleber, insbesondere einem mittels elektromagnetischer Strahlung und/oder Elektronenstrahlung härtbaren Kleber gebildet sein.

Beim Aufbringen der zweiten elektrischen Schicht auf die erste elektrisch leitfähige Schicht ist es zweckmäßig, wenn die relative Positionierung beider elektrisch leitfähiger Schichten registergenau zueinander erfolgt, insbesondere mit einer Toleranz von weniger als 0,25 mm, bevorzugt mit einer Toleranz von weniger als 0,1 mm, um eine ungestörte Touchfunktionalität zu erbringen. So ist es möglich, dass die zumindest zwei elektrisch leitfähigen Schichten registergenau zueinander angeordnet sind, insbesondere dass die zumindest zwei elektrisch leitfähigen Schichten mit einer Toleranz von weniger als 0,25 mm, bevorzugt weniger als 0,1 mm, zueinander angeordnet sind. Die elektrisch leitfähigen Schichten weisen dabei insbesondere elektrisch leitfähige Strukturen, insbesondere Leiterbahnen auf, welche bevorzugt gemäß einem Raster angeordnet sind. Dieses Raster kann regelmäßig oder unregelmäßig sein. Das Raster kann insbesondere aus Rasterelementen aufgebaut sein, wie Linien und/oder Flächenelementen. Die Rasterelemente können dabei sogenannte Sensorzellen bilden.

Gemäß eines weiteren Ausführungsbeispiels der Erfindung weist die mindestens eine elektrisch leitfähige Schicht und/oder die zwei elektrisch leitfähigen Schichten eine Vielzahl von Leiterbahnen auf.

Unter Leiterbahnen werden hier vorzugsweise strukturierte elektrisch leitfähige Schichten und leitfähige Bereiche der mindestens einen elektrisch leitfähigen Schicht und/oder der zwei elektrisch leitfähigen Schichten verstanden. Die Leiterbahnen werden insbesondere derart aufgebracht, dass eine ausreichende Transparenz für das menschliche Auge erhalten bleibt, das heißt die Leiterbahnen sind derart ausgestaltet, dass diese von einem menschlichen Betrachter nicht wahrgenommen werden, da die Leiterbahnen unterhalb des Auflösungsvermögens des menschlichen Auges liegen. Trotz der eingesetzten schmalen Leiterbahnen, wird eine ausreichende elektrische Leitfähigkeit erreicht, welche insbesondere mit Schichten aus Indiumzinnoxid (ITO) vergleichbar ist. Vorzugsweise ist die Belegung des Trägersubstrats mit der mindestens einen elektrisch leitfähigen Schicht, insbesondere den Leiterbahnen kleiner als 30 %, bevorzugt kleiner als 20 %, weiter bevorzugt kleiner als 10 %, noch weiter bevorzugt kleiner als 5 %.

Vorteilhafterweise sind die Leiterbahnen voneinander beabstandet, insbesondere weisen die Leiterbahnen eine Breite zwischen 0,2 µm und 20 µm, bevorzugt zwischen 4 µm und 15 µm, auf und einen Abstand größer als 10 µm, bevorzugt größer als 20 µm, zueinander auf, so dass die Leiterbahnen unterhalb des Auflösungsvermögens des menschlichen Auges liegen.

Es ist von Vorteil, wenn die Leiterbahnen der ersten elektrisch leitfähige Schicht und der zweiten elektrisch leitfähige Schicht jeweils gemäß eines Linienrasters angeordnet sind, wobei insbesondere die Linienraster um 90° zueinander gedreht sind. So weisen die erste und zweite elektrisch leitfähige Schicht jeweils ein Linienraster aus voneinander beabstandeten Leiterbahnen auf. Die erste und zweite elektrisch leitfähige Schicht werden bevorzugt derart übereinander angeordnet, dass beide Linienraster im rechten Winkel, also 90° zueinander verdreht angeordnet sind. Vorzugsweise sind in den Randbereichen beider Linienraster elektrische Zuleitungen und/oder Kontaktierungselemente vorgesehen. Vorzugsweise sind diese Randbereiche mit einer Toleranz von weniger als 0,25 mm, bevorzugt weniger 0,1 mm registergenau relativ zueinander, insbesondere in Richtung der Koordinatenachsen x und y , angeordnet, wobei die Koordinatenachsen x und y eine Ebene aufspannen, die parallel zu einer von dem Trägersubstrat aufgespannten Ebene liegt.

In einer weiteren bevorzugten Ausführungsform sind die Leiterbahnen der ersten elektrisch leitfähigen Schicht und der zweiten elektrisch leitfähigen Schicht strukturiert, insbesondere derart strukturiert, dass die Leiterbahnen der ersten elektrisch leitfähigen Schicht und der zweiten elektrisch leitfähigen Schicht eine Vielzahl von Flächenelementen, bevorzugt von rombusförmigen oder rautenförmigen Flächenelementen, ausbilden. So ist es beispielsweise möglich, dass die erste und zweite elektrisch leitfähige Schicht jeweils eine sogenannte Diamant-Struktur aufweisen. Diese Diamant-Struktur ist durch eine Vielzahl von insbesondere rombus-förmigen Flächenelementen entlang von linienförmigen Leiterbahnen gebildet. Dabei weist die erste und zweite elektrisch leitfähige Schicht jeweils eine Vielzahl von voneinander beabstandeten Diamant-Strukturen auf. Die erste und zweite elektrisch leitfähige Schicht werden derart übereinander angeordnet, dass beide Diamant-Strukturen im rechten Winkel, also 90° zueinander verdreht zueinander angeordnet sind. Dabei sind die Flächenelemente der ersten elektrisch leitfähigen Schicht in den freien Zwischenräumen zwischen den Flächenelementen der zweiten elektrisch leitfähigen Schicht "auf Lücke" angeordnet. Dabei kreuzen sich die linienförmigen Leiterbahnen der elektrisch leitfähigen Schichten in den Zwischenräumen zwischen den Flächenelementen. Bei dieser bevorzugten Ausführungsvariante ist eine genaue Position der Flächenelemente relativ zueinander besonders wichtig und die Flächenelemente sind vorteilhafterweise mit einer Toleranz von weniger als 0,25 mm, bevorzugt weniger 0,1 mm registergenau relativ zueinander, insbesondere in Richtung der x- und y-Koordinaten, angeordnet.

Hierbei ist es möglich, dass die Leiterbahnen im Bereich der Flächenelemente gemäß der Form der Flächenelemente ausgeformt sind, so dass das Material, aus welchem die elektrisch leitfähige Schicht gebildet ist, die Flächenelemente vollflächig ausfüllt. Weiter ist es möglich, dass die Leiterbahnen entlang der Flächenelemente verlaufen, so dass die Leiterbahnen die Flächenelemente zumindest bereichsweise einrahmen. So können die Flächenelemente aus einer vollflächigen leitfähigen Schicht oder auch aus einer nur bereichsweise vorliegenden, insbesondere gerasterten elektrisch leitfähigen Schicht aus leitfähigen Rasterelementen und insbesondere transparenten nicht leitfähigen Flächenbereichen zwischen den Rasterelementen gebildet sein. Das die Rasterelemente bildende Raster kann regelmäßig oder unregelmäßig sein. Insbesondere können die Flächenelemente aufgrund der Rasterung semitransparent sein und eine Flächenbelegung mit Rasterelementen von weniger als 50% aufweisen.

Weiter ist es auch möglich, dass die durch die strukturierten elektrisch leitfähigen Schichten und/oder die leitfähigen Bereiche der elektrisch leitfähigen Schichten gebildeten elektrisch leitfähigen Strukturen der ersten und zweiten leitfähigen Schicht jeweils auch unterschiedliche Geometrien und/oder Größen aufweisen.

Vorteilhafterweise sind die Kontaktierungsbereiche, insbesondere die Kontaktierungsstrukturen, der zumindest zwei elektrisch leitfähigen Schichten in einem gemeinsamen Kontaktierungsbereich zusammengeführt. Hierdurch ist es möglich, eine Kontaktierung von außen zu erleichtern.

Weiter ist es möglich, dass der gemeinsame Kontaktierungsbereich mittels eines Adapterelements elektrisch kontaktiert ist. So ist es beispielsweise möglich, dass auf den gemeinsamen Kontaktierungsbereich ein insbesondere flexibles Adapterelement befestigt wird, welches die Kontaktpunkte in dem gemeinsamen Kontaktierungsbereich elektrisch kontaktiert und außenseitig elektrisch leitfähig mit einem weiteren Kontaktelement verbindet. Die Kontaktierung zwischen dem gemeinsamen Kontaktierungsbereich und dem Adapterelement erfolgt bevorzugt mittels leitfähigem Klebstoff, insbesondere mittels ACF-Bonding (ACF = Anisotropic Conductive Film). Hierbei ist es möglich, dass der leitfähige Klebstoff ein Verbindungselement darstellt. Das weitere Kontaktelement kann beispielsweise ein insbesondere genormter Steckverbinder sein, beispielsweise ein ZIF-Connector (ZIF = Zero Insertion Force).

Es ist von Vorteil, dass die Leiterbahnen aus Metall, insbesondere aus Silber (Ag), Gold (Au), Aluminium (Al), Kupfer (Cu) oder Chrom (Cr) in einer Schichtdicke zwischen 1 nm und 100 nm, bevorzugt zwischen 2,5 nm und 75 nm, weiter bevorzugt zwischen 5 nm und 50 nm, ausgebildet sind. Es ist jedoch auch möglich, dass die Leiterbahnen eine Schichtdicke zwischen 100 nm und 5 µm aufweisen.

Auch ist es möglich, dass die Leiterbahnen aus einer elektrisch leitfähigen Paste umfassend Silber (Ag), Gold (Au), Kupfer (Cu) und/oder Kohlenstoff ausgebildet sind.

Weiter oder auch zusätzlich ist es möglich, dass die mindestens eine elektrisch leitfähige Schicht zumindest eine Schicht aus ITO (InSnOₓ = Indium-Zinn-Oxid = In₂O₃:SnO₂) und/oder aus AZO (AlZnOₓ = Aluminium-Zink-Oxid = Al:ZnO) aufweist. Die ITO- und/oder AZO-Schichten sind dabei bevorzugt vollflächig mittels Magnetronzerstäubung, Sputtern oder (Vakuum-)Bedampfen und weniger bevorzugt mittels CVD- und PVD-Verfahren aufgebracht und weisen bevorzugt eine Schichtdicke von1 nm bis 100 µm, weiter bevorzugt von 10 nm bis 10 µm, auf.

Vorzugsweise sind die ITO- und/oder AZO-Schichten direkt benachbart zu elektrisch leitfähigen Schichten aus metallischen Stoffen angeordnet.

Vorteilhafterweise ist in dem Schritt b) die mindestens eine elektrisch leitfähige Schicht eine Metallschicht und der Schritt b) umfasst weiter die folgenden Schritte: - Aufdampfen der Metallschicht; - Strukturieren der Metallschicht durch bereichsweises Entfernen der Metallschicht, insbesondere mittels photolithographischer Techniken. So wird zur Ausbildung der mindestens einen elektrisch leitfähigen Schicht das Trägersubstrat vorzugsweise vollflächig mit einer elektrisch leitfähigen Schicht versehen, beispielsweise durch Aufdampfen oder Aufsputtern einer Metallschicht und sodann durch Positiv- oder Negativätzen oder mittels eines Waschverfahrens die elektrisch leitfähige Schicht entsprechend zur Ausbildung der elektrischen Funktionsstruktur und Kontaktierungsstruktur bereichsweise wieder entfernt. Weiter ist es auch möglich, dass mittels Bedampfungsmasken, durch Aufdruck von elektrisch leitfähigem Material und/oder durch galvanisches Nachverstärken einer aufgedruckten Struktur die mindestens eine elektrisch leitfähige Schicht bereits in der Formgebung gemäß der Funktionsstruktur und/oder Kontaktierungsstruktur auf das Trägersubstrat aufgebracht ist.

Vorzugsweise umfasst die Folie eine dielektrische Schicht und/oder eine halbleitende Schicht, welche zwischen einer ersten elektrisch leitfähigen Schicht der mindestens einen elektrisch leitfähigen Schicht und einer zweiten elektrisch leitfähigen Schicht der mindestens einen elektrisch leitfähigen Schicht angeordnet ist.

Weiter ist es möglich, dass die mindestens eine elektrisch leitfähige Schicht Kraftsensoren, insbesondere zur Messung der Druckkraft, aufweist. Hierdurch ist es möglich, dass neben den beispielsweise von einem Touchsensorfeld, insbesondere vom einem kapazitivem Sensorfeld, erzeugten x- und y-Koordinaten der Position der Berührung auf der durch die x- und y-Koordinaten definierten Ebene weiter die Berührungsintensität in Form der z-Koordinate (z-Koordinate ist senkrecht zu x- und y-Koordinaten) bestimmt werden kann. Hierdurch kann eine x-, y- und z-Information der Berührung generiert werden. Die z-Information kann beispielsweise dazu genutzt werden, ein elektrisches Funktionselement, auf welchem die Folie appliziert ist, in Abhängigkeit der Überschreitung eines vordefinierten Schwellenwerts der z-Information zu steuern. Bevorzugt sind Kraftsensoren, insbesondere zur Messung der Druckkraft, piezoelektrische Dünnschichten. Es ist auch möglich, dass Kraftsensoren piezoresistive Drucksensoren und/oder piezoelektrische Drucksensoren sind. Weiter ist es möglich, dass Kraftsensoren Aktuatoren, insbesondere Taster, sind, wobei jeder der Aktuatoren in Abhängigkeit der auf die Aktuatoren einwirkenden Kraft mindestens zwei elektrische Zustände aufweist.

Weiter ist es möglich, dass die mindestens eine elektrisch leitfähige Schicht zumindest bereichsweise Oberflächenreliefstrukturen, insbesondere Mattstrukturen, aufweist. Hierdurch ist es möglich, auf die mindestens eine elektrisch leitfähige Schicht einfallendes Licht durch Beugung, Streuung und/oder Reflexion abzulenken, so dass der Eindruck vermieden wird, dass die elektrisch leitfähige Schicht Licht, insbesondere im direkten Spiegelreflex, reflektiert. So erscheint beispielsweise ein Display, auf welchem die Folie appliziert ist, in ausgeschaltetem Zustand homogen schwarz.

Auch ist es möglich, dass eine oder mehrere optisch wirksame Schichten, insbesondere Dunkelungsschichten und/oder Schichten mit Licht streuenden Eigenschaften, bei Betrachtung senkrecht zu einer von dem Trägersubstrat aufgespannten Ebene die mindestens eine elektrische leitfähige Schicht zumindest bereichsweise überdeckt/überdecken. Hierdurch kann eine mögliche Sichtbarkeit der mindestens einen elektrisch leitfähigen Schicht, insbesondere im direkten Spiegelreflex, weiter verringert werden. So absorbiert beispielsweise eine Dunkelungsschicht einfallendes Licht, wodurch der Anteil an dem von der mindestens einen elektrisch leitfähigen Schicht reflektiertem Licht reduziert wird oder die Reflexion ganz vermieden wird. Durch Schichten mit Licht streuenden Eigenschaften wird ebenfalls der Anteil an dem von der mindestens einen elektrisch leitfähigen Schicht reflektiertem Licht reduziert.

Schichten mit Licht streuenden Eigenschaften sind beispielsweise Schichten, welche Mattstrukturen mit stochastisch gewählten Reliefparametern aufweisen.

Weiter ist von Vorteil, dass das Trägersubstrat eine Schichtdicke zwischen 2 µm und 250 µm, bevorzugt zwischen 23 µm und 125 µm, aufweist. Es ist jedoch auch möglich, dass das Trägersubstrat eine Schichtdicke von weniger als 2 µm aufweist.

Vorteilhafterweise weist die Folie insgesamt senkrecht zu der von der Unterseite des Trägersubstrats aufgespannten Ebene eine Dicke von maximal 150 µm, bevorzugt 100 µm, weiter bevorzugt 75 µm, auf.

Vorzugsweise ist das Trägersubstrat ein transparentes Trägersubstrat, insbesondere aus PET, PMMA, PC, Acrylnitril-Butadien-Styrol (ABS), PU oder Glas.

Es ist möglich, dass das Trägersubstrat aus einem Hybridmaterial gebildet ist, welches Kunststoffschichten und Schichten aus Fasermaterial umfasst.

Auch ist es möglich, dass das Trägersubstrat aus Geweben, beispielsweise textilen Flächengebilden, besteht.

Weiter ist es möglich, dass das Zielsubstrat eine ein- oder mehrschichtige weitere Folie ist. Hierbei wird durch die Applikation der erfindungsgemäßen Folie auf das Zielsubstrat in Form der ein- oder mehrschichtigen weiteren Folie vorzugsweise ein Zwischenprodukt zur weiteren Verarbeitung erzeugt.

Gemäß eines weiteren Ausführungsbeispiels der Erfindung umfasst die Folie mindestens eine Zwischenhaftschicht. Hierdurch ist es möglich, dass auf die Folie ein oder mehrere weitere Schichten aufgebracht werden, wobei die Anhaftung der ein oder mehreren weiteren Schichten durch die Zwischenhaftschicht erreicht wird.

Vorzugsweise ist die mindestens eine elektrisch leitfähige Schicht zwischen dem Trägersubstrat und der mindestens einen Zwischenhaftschicht angeordnet.

Weiter ist es möglich, dass die mindestens eine Zwischenhaftschicht auf der der mindestens einen elektrisch leitfähigen Schicht abgewandten Seite des Trägersubstrats angeordnet ist. So ist es möglich, dass Verfahren weiter folgende Schritte umfasst: f) Aufbringen einer Zwischenhaftschicht, insbesondere derart, dass die mindestens eine elektrisch leitfähige Schicht zwischen dem Trägersubstrat und der mindestens einen Zwischenhaftschicht angeordnet ist und/oder dass die mindestens eine Zwischenhaftschicht bei Betrachtung senkrecht zu einer von dem Trägersubstrat aufgespannten Ebene den mindestens einen Kontaktierungsbereich zumindest bereichsweise nicht überdeckt.

Auch ist es von Vorteil, wenn die mindestens eine Zwischenhaftschicht bei Betrachtung senkrecht zu einer von dem Trägersubstrat aufgespannten Ebene den mindestens einen Kontaktierungsbereich zumindest bereichsweise nicht überdeckt. Dadurch, dass die Zwischenhaftschicht den mindestens einen Kontaktierungsbereich zumindest bereichsweise nicht überdeckt ist sichergestellt, dass die elektrische Funktionsstruktur nach Applikation der Folie auf das Zielsubstrat sicher und robust kontaktiert werden kann.

Auch ist es zweckmäßig, wenn die Zwischenhaftschicht den mindestens einen Kontaktierungsbereich vollflächig nicht überdeckt.

Weiter ist es von Vorteil, wenn die Zwischenhaftschicht den Funktionsbereich zumindest bereichsweise überdeckt.

Auch ist es möglich, dass die mindestens eine Zwischenhaftschicht bei Betrachtung senkrecht zu einer von dem Trägersubstrat aufgespannten Ebene im Wesentlichen im selben Bereich angeordnet ist wie die Haftvermittlungsschicht, insbesondere dass die mindestens eine Zwischenhaftschicht bei Betrachtung senkrecht zu einer von dem Trägersubstrat aufgespannten Ebene im Wesentlichen deckungsgleich mit der Haftvermittlungsschicht angeordnet ist.

Vorteilhafterweise weist die Zwischenhaftschicht eine Schichtdicke zwischen 0,1 µm und 50 µm, bevorzugt zwischen 0,25 µm und 25 µm, weiter bevorzugt zwischen 0,5 µm und 7 µm, auf. Bevorzugt handelt es sich bei der Zwischenhaftschicht um eine Primerschichten und/oder Kleberschicht aus einem Heißkleber, einem Kaltkleber oder einem strahlungshärtbaren Kleber, insbesondere einem mittels elektromagnetischer Strahlung und/oder Elektronenstrahlung härtbaren Kleber. Vorzugsweise wird die Zwischenhaftschicht mittels Tiefdruck, Siebdruck, Hochdruck oder Gusstechniken aufgebracht.

Es ist auch möglich, dass die Folie eine oder mehrere Dekorschichten umfasst.

Bevorzugt sind die ein oder mehreren Dekorschichten auf der der mindestens einen elektrischen leitfähigen Schicht abgewandten Seite des Trägersubstrats angeordnet. Dafür kann die Folie insbesondere eine Zwischenhaftschicht aufweisen, um die Haftung der ein oder mehreren Dekorschichten zu verbessern. So kann beispielsweise auf das Trägersubstrat und/oder die mindestens eine elektrisch leitfähige Schicht eine Zwischenhaftschicht aufgebracht sein mittels derer die ein oder mehreren Dekorschichten auf das Trägersubstrat aufgebracht werden. Die Dekorschichten können dann mittels verschiedener Verfahren auf die Zwischenhaftschicht oder direkt auf das Trägersubstrat aufgebracht werden. Besonders vorteilhaft ist es, wenn die Dekorschichten auf der der mindestens einen elektrischen leitfähigen Schicht abgewandten Seite des Trägersubstrats als abschließende Schicht eine Schutzschicht aufweisen, die die Dekorschichten insbesondere vor den beispielsweise bei Spritzguss- und/oder Laminierprozessen einwirkenden starken Druck- und Hitzewirkungen schützen. Weiterhin schützt die Schutzschicht vor mechanischen Schäden, die während des Verarbeitungsprozesses auftreten können, wie z.B. Kratzer etc. Auch kann diese Schutzschicht polymere und insbesondere selbsttragende Filme, bevorzugt aus PET, PC oder PMMA, oder auch aus Glas oder Gewebe, enthalten, die auf dem Dekor verbleiben und einen Bestandteil des Zwischen- oder Endproduktes ausbilden.

Vorteilhafterweise sind die ein oder mehreren Dekorschichten im Wesentlichen im selben Bereich angeordnet sind wie die Haftvermittlungsschicht und/oder die Zwischenhaftschicht, insbesondere sind die ein oder mehreren Dekorschichten bei Betrachtung senkrecht zu einer von dem Trägersubstrat aufgespannten Ebene im Wesentlichen deckungsgleich mit der Haftvermittlungsschicht und/oder der Zwischenhaftschicht angeordnet.

So ist es möglich, dass die ein oder mehreren Dekorschichten auf der der mindestens einen elektrischen leitfähigen Schicht abgewandten Seite des Trägersubstrats partiell derart aufgebracht sind, dass sie im Wesentlichen dieselbe Fläche bedecken wie die Haftvermittlerschicht auf der anderen Seite des Trägersubstrats. Damit wird erreicht, dass der durch die Haftvermittlerschicht unbedeckte Kontaktierungsbereich auf der der mindestens einen elektrischen leitfähigen Schicht abgewandten Seite des Trägersubstrats im gleichen (projizierten) Flächenbereich frei bleibt und dadurch die Folie einen sogenannten Tail mit dem Kontaktierungsbereich ausbilden kann, der in folgenden Verarbeitungsschritten auf besonders einfache Weise beispielsweise mittels einer Steckverbindung elektrisch kontaktiert werden kann.

Es ist auch möglich, dass die ein oder mehreren Dekorschichen auf der dem Trägersubstrat abgewandten Seite der Haftvermittlungsschicht und/oder der Zwischenhaftschicht angeordnet sind.

Weiter ist es auch möglich, dass die ein oder mehreren Dekorschichten auf der dem Trägersubstrat abgewandten Seite der mindestens einen elektrisch leitfähigen Schicht angeordnet sind.

Die ein oder mehreren Dekorschichten sind dabei bevorzugt im Wesentlichen deckungsgleich mit der Haftvermittlungsschicht aufgebracht und lassen dabei insbesondere den mindestens einen Kontaktierungsbereich ebenfalls unbedeckt. Auch hier kann es vorteilhaft sein, wenn die Dekorschichten auf der dem Trägersubstrat abgewandten Seite der mindestens einen elektrisch leitfähigen Schicht und/oder der Zwischenhaftschicht als abschließende Schicht eine Schutzschicht aufweisen, die die Dekorschichten insbesondere vor den beispielsweise bei Spritzguss- und/oder Laminierprozessen einwirkenden starken Druck- und Hitzewirkungen schützen. Weiterhin schützt die Schutzschicht vor mechanischen Schäden, die während des Verarbeitungsprozesses auftreten können, wie z.B. gegen Kratzer etc. Auch kann diese Schutzschicht polymere und insbesondere selbsttragende Filme, bevorzugt aus PET, PC oder PMMA, oder auch aus Glas oder Gewebe, enthalten, die auf dem Dekor verbleiben und einen Bestandteil des Endproduktes ausbilden.

Vorteilhafterweise ist die mindestens eine Zwischenhaftschicht zwischen dem Trägersubstrat und den ein oder mehreren Dekorschichten angeordnet.

Vorzugsweise umfassen die ein oder mehreren Dekorschichten zumindest eine der Schichten ausgewählt aus der Gruppe Schutzschichten, Farblackschichten, Metallschichten, Reflexionsschichten, Replizierlackschichten, transparente Schichten, Trägerschichten und/oder einen optisch variablen Effekt generierende Schichten.

So können die ein oder mehreren Dekorschichten beispielsweise eine gedruckte Schicht, insbesondere aus einer opaken und/oder farbigen Tinte, aufweisen, die einen Rahmen um den Funktionsbereich bildet. Die Dekorschichten können die Folie und insbesondere auch den Funktionsbereich auch vollflächig oder partiell bedecken und/oder in einem Raster aufgebracht sein. Die Dekorschichten können eine einheitliche Fläche und/oder ein Endlosmuster und/oder ein Einzelbildmotiv darstellen. Die Dekorschichten können vollflächig oder partiell opak und/oder semitransparent und/oder transparent, insbesondere transparent eingefärbt sein.

So ist es beispielsweise möglich, dass auf die Haftvermittlungsschicht und/oder auf die Zwischenhaftschicht die ein oder mehreren Dekorschichten aufgebracht, insbesondere aufgeprägt und/oder aufgedruckt, sind. Die ein oder mehreren Dekorschichten können beispielsweise mittels Heißprägen und/oder mittels Kaltprägen und/oder mittels Thermotransferverfahren und/oder mittels unterschiedlicher Laminationsverfahren und/oder anderer bekannter Verfahren auf die dem Trägersubstrat abgewandten Seite der Haftvermittlungsschicht und/oder der Zwischenhaftschicht aufgebracht werden. Hierdurch ist es beispielsweise möglich, die Folie mit einer dekorativen Schicht bzw. einem Dekor zu versehen, so dass die Folie neben einer von der elektrischen Funktionsstruktur bereitgestellten Funktion in Form eines Touchsensorfeldes zusätzlich ein Dekor aufweist. Die ein oder mehreren Dekorschichten können weitere Schichten, wie beispielsweise Schutzlackschichten und/oder Farbschichten und/oder Metallschichten und/oder transparente Reflexionsschichten und/oder Replizierlackschichten und/oder verschiedene Arten einen optisch variablen Effekt generierende Schichtaufbauten, umfassen. Der Schichtaufbau der Folie muss hierbei nicht notwendigerweise dem Schichtaufbau gemäß Anspruch 1 entsprechen.

Weiter ist es möglich dass die ein oder mehreren Dekorschichten zumindest zwei Dekorschichten umfassen, insbesondere eine erste Dekorschicht und eine zweite Dekorschicht umfassen.

Es ist ebenso möglich, dass die ein oder mehreren Dekorschichten auf der der mindestens einen elektrischen leitfähigen Schicht abgewandten Seite des Trägersubstrats und auch auf der dem Trägersubstrat abgewandten Seite der mindestens einen elektrisch leitfähigen Schicht angeordnet sind. So ist es beispielsweise möglich, dass eine erste Dekorschicht auf einer ersten Seite des Trägersubstrats angeordnet ist und eine zweite Dekorschicht auf einer der ersten Seite gegenüberliegenden Seite des Trägersubstrats angeordnet ist, so dass die ein oder mehreren Dekorschichten beidseitig des Trägersubstrats angeordnet sind.

Weiter ist es von Vorteil, wenn zumindest zwei Dekorschichten hierbei derartig miteinander agieren, dass besondere optische Effekte, beispielsweise optische Tiefenwirkungen und/oder besondere optische Überlagerungseffekte erzeugt werden. Beispielsweise kann die dem Betrachter zugewandte erste Dekorschicht eine Farbfilterschicht für die dem Betrachter abgewandte, also in Blickrichtung darunter liegende zweite Dekorschicht, welche beispielsweise eine Farbschicht ist, darstellen. Ebenso möglich sind Überlagerungseffekte oder Kombinationseffekte mittels zweier Muster, die sich zu einem Moiré-Muster ergänzen oder auch in Überlagerung andere sich ergänzende Kombinationsmuster ergeben.

Weiter sind optisch variable Kombinationseffekte möglich, die erst durch die Überlagerung der zumindest zwei Dekorschichten entstehen. Vorteilhaft kann dabei sein, dass die Dekorschichten voneinander beabstandet sind, beispielsweise weil zwischen den Dekorschichten insbesondere das Trägersubstrat und die elektrisch leitfähige Schicht und gegebenenfalls noch weitere Schichten, insbesondere transparente Schichten, angeordnet sind. Insbesondere zur Erzeugung von Tiefenwirkungen und/oder optisch variablen Effekten kann ein solcher Abstand vorteilhaft sein. Ein Tiefeneffekt kann beispielsweise erzeugt werden, indem optisch transparente Schichten in Betrachtungsrichtung vor die Dekorschichten und/oder hinter die Dekorschichten und/oder als Bestandteil der Dekorschichten eingefügt werden. Die optisch transparenten Schichten weisen bevorzugt die gleiche Schichtdicke wie die jeweiligen Dekorschichten oder eine um ein Vielfaches dickere Schichtdicke als die jeweiligen Dekorschichten auf, insbesondere beträgt die Schichtdicke der optisch transparenten Schichten zwischen 0,5 µm und 500 µm, bevorzugt zwischen 10 µm und 100 µm. Die optisch transparenten Schichten bestehen bevorzugt aus optisch transparenten Lacken und/oder optisch transparenten Filmen aus bevorzugt PET, PMMA oder PC.

Ein optisch variabler Effekt ist beispielsweise möglich, indem die vorgenannte optisch transparente Schicht als Abstandsschicht zwischen einer reflektiven Schicht und einer semitransparenten reflektiven Schicht angeordnet ist und es innerhalb dieses Schichtaufbaus zu Interferenzeffekten kommt, die durch einen betrachtungswinkelabhängigen und/oder beleuchtungswinkelabhängigen Farbwechseleffekt erkennbar sind. Solche Interferenzschichtaufbauten sind als Fabry-Perot-Dünnfilmaufbauten bereits bekannt.

Weiter es vorteilhaft, wenn zumindest eine der ein oder mehreren Dekorschichten zumindest bereichsweise eine Oberflächenreliefstruktur, insbesondere eine haptisch und/oder taktil erfassbare Oberflächenreliefstruktur, aufweist.

So ist es auch möglich, dass durch das Strukturieren der optisch transparenten Schichten und/oder der Schutzschichten und/oder der ein oder mehreren Dekorschichten Oberflächenmorphologien, insbesondere Oberflächenreliefstrukturen erzeugt werden, die insbesondere haptische bzw. taktil fühlbare Effekte ermöglichen. Weiter es auch möglich, dass die Oberflächenreliefstrukturen diffraktive und/oder refraktive optische Effekte erzeugen. Diese Oberflächenreliefstrukturen können durch zusätzliche partiell gedruckte Lacke oder mechanische Strukturierung oder optische Strukturierung der Schichtoberfläche erzeugt werden. Eine mechanische Strukturierung kann eine Replikation mit einem entsprechend ausgeformten Prägewerkzeug sein. Eine optische Strukturierung kann eine Laserablation sein. Weiterhin können auch photolithographische Verfahren zur Erzeugung dieser Strukturen verwendet werden. Die Strukturtiefen für solche haptischen Effekte sind insbesondere 1 µm bis 2000 µm, bevorzugt 50 µm bis 2000 µm. Die Strukturtiefen für diffraktive oder refraktive Effekte sind insbesondere 0,1 µm bis 20 µm, bevorzugt 0,1 µm bis 5 µm.

Es ist ebenso möglich, derartige haptische Oberflächenreliefstrukturen lediglich vorzutäuschen, weil echte haptische Strukturen oft mechanisch empfindlich, insbesondere gegen Verkratzen und/oder Abnutzung sind und auch leichter verschmutzen als glatte Fläche. Dafür ist es sinnvoll, wie oben beschrieben, die haptischen Strukturen in eine entsprechende Oberfläche einzubringen und/oder darauf aufzubringen. Anschließend kann auf diese Oberfläche eine transparente Decklage aufgebracht werden, die die haptische Struktur versiegelt und nach außen hin eine glatte Oberfläche aufweist. Diese Decklage ist bevorzugt hochtransparent und dicker als die Höhe der haptischen Strukturen, bevorzugt mindestens doppelt so dick. Weiterhin weist die Decklage bevorzugt einen um mindestens 0,2 abweichenden Brechungsindex auf wie die darunterliegende die haptische Struktur aufweisende Schicht, um dadurch eine optische Grenzfläche zu schaffen, wodurch die Sichtbarkeit der haptischen Struktur erhöht wird. Hierfür kann die Decklage nanoskalige Teilchen zur Modulation des Brechungsindexes bestehend aus einem oder mehreren Bestandteilen ausgewählt aus TiO₂, SiO₂, Sn- oder Metall-Chalkogenide (Oxide, Sulfide), sowie Metalle Au, Ag, Cu enthalten.

Die taktil fühlbare und/oder die lediglich optisch vorgetäuschte haptische Oberflächenreliefstruktur kann dabei den funktionalen Touchsensorfeldern entsprechen, das heißt deren Funktionsbereich hervorheben oder kennzeichnen, sodass ein "blindes" Erfühlen der Touchfunktion ermöglicht wird. Es ist aber ebenso möglich, dass die taktil fühlbare und/oder die lediglich optisch vorgetäuschte haptische Struktur vollflächig vorgesehen ist, um eine bestimmte Oberflächencharakteristik des Zielsubstrats, insbesondere passend zu seinem sonstigen optischen Erscheinungsbild zu erreichen. Beide Möglichkeiten können auch kombiniert vorliegen. So ist es beispielsweise möglich ein Holzdekor mit einer haptischen Holzmaserung zu kombinieren, die im Bereich der Touchfunktion, insbesondere im Funktionsbereich, in der Strukturtiefe und/oder eines anderen Strukturparameters modifiziert ist, so dass innerhalb der Maserung das Touchsensorfeld für einen Benutzer fühlbar ist.

Auch ist es möglich, dass die Folie einen Aufbau in der folgenden Reihenfolge aufweist:
- Trägersubstrat
- Trennschicht
- Schutzlackschicht
- Grundierungslackschicht
- mindestens eine elektrische leitfähige Schicht
- Zwischenhaftschicht
- ein- oder mehrere Dekorschichten
- Haftvermittlungsschicht.

Auch ist es möglich, dass die Folie auf der der mindestens einen elektrischen leitfähigen Schicht abgewandten Seite des Trägersubstrats eine Kleberschicht aufweist.

Die Folie kann somit die Haftvermittlungsschicht auf der einen Seite des Trägersubstrats und die Kleberschicht auf der anderen Seite des Trägersubstrats aufweisen, so dass die Folie mittels der Kleberschicht auf ein weiteres Substrat aufgebracht werden kann. Das Aufbringen der Folie auf das weitere Substrat kann beispielsweise mittels Heißlaminieren oder mittels Hinterspritzen erfolgen. Insbesondere bei einem Hinterspritzen der Folie wird die mindestens eine elektrisch leitfähige Schicht und/oder die ein oder mehreren Dekorschichten durch das Trägersubstrat von der eingespritzten Spritzgussmasse und insbesondere vor den harschen Prozessbedingungen mit hohem Druck und hoher Temperatur beim Spritzgussvorgang geschützt. Der Schichtaufbau der Folie muss hierbei nicht notwendigerweise dem Schichtaufbau gemäß Anspruch 1 entsprechen.

Weiter ist es von Vorteil, wenn die Folie zumindest eine Registermarke zur Bestimmung der relativen Lage oder Position der Folie, insbesondere des Funktionsbereichs und/oder des mindestens einen Kontaktierungsbereichs der mindestens einen elektrisch leitfähigen Schicht, aufweist. Unter Register oder Registergenauigkeit ist die lagegenaue Anordnung von übereinander oder nebeneinander liegenden Schichten relativ zueinander unter Einhaltung einer gewünschten Lagetoleranz zu verstehen. So kann durch eine Registermarke sichergestellt werden, dass die Folie lagegenau unter Einhaltung einer gewünschten Lagetoleranz auf ein Zielsubstrat appliziert werden kann. Vorzugsweise ist die Registermarke aus einem Druckstoff und/oder aus einem magnetischen oder leitfähigen Material ausgeformt. Es kann sich bei den Marken so beispielsweise um optisch auslesbare Registermarken handeln, die sich durch ihren Farbwert, ihre Opazität oder ihre Reflexionseigenschaften von dem Hintergrund unterscheiden. Es kann sich bei den Registermarken aber auch um mittels eines magnetischen oder eines die elektrische Leitfähigkeit erfassenden Sensors erfassbare Registermarken handeln. Die Registermarken werden beispielsweise mittels eines optischen Sensors, insbesondere einer Kamera, eines Magnetsensors oder eines mechanischen Sensors, eines kapazitiven Sensors, oder eines die Leitfähigkeit erfassenden Sensors erfasst und sodann kann die Applikation der Folie mittels der Registermarken gesteuert werden. Durch die Registermarken wird so die lagegenaue Anordnung der Folie auf dem Zielsubstrat ermöglicht. Hierdurch kann eine identische Herstellungsqualität von beispielsweise Touchscreens verbessert werden und gleichzeitig der Ausschluss aufgrund von Fehlplatzierungen der Folie auf dem Zielsubstrat weiter verringert werden.

Vorzugsweise ist die Folie eine Heißlaminierfolie.

Im Folgenden sind unter anderem bevorzugte Ausgestaltungen des Verfahrens zur Herstellung eines elektrischen Funktionselements sowie des elektrischen Funktionselements beschrieben:
Weiter ist es von Vorteil, dass in dem Schritt b) die Folie von einer Rolle mittels Heißlaminieren auf das Zielsubstrat, insbesondere bei einer Folienbahngeschwindigkeit zwischen 1,5 m/min und 3,5 m/min, appliziert wird. Hierbei ist es möglich, dass die Rolle eine Folienbahn mit mehreren bzw. einer Vielzahl von Folien, insbesondere nach einem der Ansprüche 1 bis 53, als Nutzen umfasst. Hierdurch wird es möglich, insbesondere eine industrielle Massenproduktion, weiter zu verbessern. So ist es beispielsweise möglich, die Folie vollflächig mittels Heißlaminiermaschine auf ein Zielsubstrat zu applizieren, so dass der zeitliche, personelle und logistische Aufwand weiter verringert werden und gleichzeitig eine identische Herstellungsqualität sichergestellt werden kann.

Weiter ist es von Vorteil, dass in dem Schritt b) die Folie von einem Bogen oder Sheet mittels Heißlaminieren auf das Zielsubstrat appliziert wird. Hierbei ist es möglich, dass der Bogen mehrere bzw. eine Vielzahl von Folien, insbesondere nach einem der Ansprüche 1 bis 53, als Nutzen umfasst. Hierdurch wird es möglich insbesondere eine industrielle Massenproduktion weiter zu verbessern. So ist es beispielsweise möglich, die Folie vollflächig mittels Heißlaminiermaschine auf ein Zielsubstrat zu applizieren, so dass der zeitliche, personelle und logistische Aufwand weiter verringert werden und gleichzeitig eine identische Herstellungsqualität sichergestellt werden kann.

Auch ist es möglich, dass der Bogen oder das Sheet nur eine Folie, als Nutzen umfasst. Mehrere solcher Bögen mit jeweils einer Folie können dabei insbesondere in einem Magazin als Stapel vorliegen und einer Heißlaminiermaschine, welche beispielsweise im Hub- oder im Abrollverfahren arbeiten kann, und/oder einer Spritzgussmaschine zur Applikation auf das Zielsubstrat entsprechend einzeln zugeführt werden. Über die Registermarken auf der Folie erfolgt dann wie vorbeschrieben die positionsgenaue Applikation auf das Zielsubstrat.

Weiter ist es von Vorteil, wenn vereinzelte ein oder mehrere Folien vor der Applikation auf das Zielsubstrat auf ein Zwischensubstrat, welches als Rolle oder als Sheet vorliegen kann, ablösbar angeordnet werden. Das Zwischensubstrat kann dabei beispielsweise ein silikonbeschichtetes Papier oder eine mit einer Ablöseschicht versehene Folienbahn sein. In einem nachfolgenden Heißtransferschritt und/oder in einem nachfolgenden Spritzgussprozess können dann ein oder mehreren Folien gemeinsam oder jeweils separat mittels einwirkender Wärme und/oder Druck von dem Zwischensubstrat auf das Zielsubstrat übertragen werden. Anschließend kann das Zwischensubstrat insbesondere von der am Zielsubstrat fest haftenden Folie abgezogen werden.

Es ist weiter möglich, dass das Heißlaminieren bei einer Temperatur im Bereich zwischen 80°C und 300°C, bevorzugt zwischen 200°C und 290°C, weiter bevorzugt zwischen 240°C und 270°C, erfolgt und/oder mit einem Prägedruck im Bereich zwischen 200 bar und 2000 bar, bevorzugt zwischen 500 bar und 1500 bar, erfolgt.

Auch ist es möglich, dass alternativ zum Heißlaminieren in dem Schritt b) die Folie durch Einspritzen einer Spritzgussmasse, wobei insbesondere die Spritzgussmasse das Zielsubstrat ausbildet, auf das Zielsubstrat appliziert wird. So ist es möglich, dass die Folie durch die Haftvermittlungsschicht fest mit der Spritzgussmasse verbunden wird.

Es ist auch möglich, dass die Folie durch Einspritzen einer Spritzgussmasse mit einem weiteren Substrat verbunden wird. Der Schichtaufbau der Folie muss hierbei nicht notwendigerweise dem Schichtaufbau gemäß Anspruch 1 entsprechen.

Weiter ist es, insbesondere bei Ausgestaltung der Folie als Transferfolie, von Vorteil, dass in dem Schritt b) die Folie mittels Heißprägen auf das Zielsubstrat appliziert wird. Hierbei ist es möglich, dass die Folie von Rolle oder von einem Bogen oder Sheet mittels Heißprägen auf das Zielsubstrat appliziert wird.

Hierbei ist es möglich, dass die Rolle eine Folienbahn mit mehreren bzw. einer Vielzahl von Folien als Nutzen umfasst, und/oder dass der Bogen mehrere bzw. eine Vielzahl von Folien als Nutzen umfasst. Hierdurch wird es möglich, insbesondere eine industrielle Massenproduktion, weiter zu verbessern. So ist es beispielsweise möglich, die Folie vollflächig mittels einer Heißprägemaschine auf ein Zielsubstrat zu applizieren, so dass der zeitliche, personelle und logistische Aufwand weiter verringert werden und gleichzeitig eine identische Herstellungsqualität sichergestellt werden kann.

Es ist weiter zweckmäßig, wenn die Prägetemperatur in einem Bereich von 80°C bis 250°C, bevorzugt in einem Bereich von 100°C bis 200°C, und/oder der Prägedruck in einem Bereich von 0,5 kN/cm² bis von 10 kN/cm², liegt/liegen. Weiter ist es auch zweckmäßig, wenn die Prägezeit in einem Bereich von 1 ms bis 2000 ms, bevorzugt in einem Bereich von1 ms und 500 ms, liegt.

Weiter ist es möglich, dass das weitere Substrat und/oder das Zielsubstrat flach ist und/oder eine eindimensional gekrümmte und/oder eine zweidimensional gekrümmte und/oder eine dreidimensional gekrümmte Form aufweist.

Auch ist es möglich, dass Folie und/oder das elektrische Funktionselement, insbesondere das aus dem Zielsubstrat und der Folie gebildete elektrische Funktionselement, umgeformt, insbesondere dreidimensional umgeformt wird. Vorteilhafterweise findet die Umformung mittels Umformprozessen, bevorzugt mittels Tiefziehen, Thermoformen, High pressure forming und/oder mittels eines Spritzgießprozesses statt. Vorzugsweise weist das Zielsubstrat und/oder Zwischensubrat hierbei eine Schichtdicke von maximal 1 mm, bevorzugt 500 µm auf, so dass das aus der Folie und dem Zielsubstrat gebildete elektrische Funktionselement umformbar ist.

Im Folgenden sind unter anderem bevorzugte Umformprozesse zur Umformung der Folie und/oder des elektrischen Funktionselements beschrieben, wobei insbesondere das elektrische Funktionselement von der auf einem Zielsubstrat angeordneten, insbesondere applizierten, Folie ausgebildet wird:
Vorzugsweise wird die Folie und/oder das elektrische Funktionselement mittels Tiefziehen umgeformt. Vorteilhafterweise erfolgt die Umformung der Folie und/oder des elektrischen Funktionselements hierbei mittels Vakuum, insbesondere bei einem Unterdruck von maximal 1 bar, und/oder mittels Überdruckunterstützung, insbesondere bei einem Überdruck zwischen 1 bar und 3 bar, in einem der gewünschten Umform-Geometrie entsprechenden Umformwerkzeug.

Weiter ist es möglich, dass die Folie und/oder das elektrische Funktionselement mittels Thermoformen umgeformt wird. Vorteilhafterweise entspricht der Umformprozess der Folie und/oder des elektrischen Funktionselements bzw. die Prozessparameter des Umformprozesses dem/den des Tiefziehens, wobei die Umformung mit einer zusätzlichen Temperaturunterstützung, insbesondere bei einer Temperatur zwischen 120 °C und 300 °C, vorzugsweise zwischen 190 °C und 250°C beispielsweise bei Verwendung vonABS-Material, erfolgt. Hierbei ist es möglich, dass entweder das Trägersubstrat und/oder das Zielsubstrat ABS-Material aufweist.

Auch ist es möglich, dass die Folie und/oder das elektrische Funktionselement mittels High pressure forming umgeformt wird. Vorteilhafterweise erfolgt die Umformung der Folie und/oder des elektrischen Funktionselements hierbei mittels Überdruckunterstützung, insbesondere bei einem Überdruck zwischen 1 bar und 300 bar, vorzugsweise zwischen 10 bar und 150 bar, in einem der gewünschten Umform-Geometrie entsprechenden Umformwerkzeug.. Hierbei ist es zweckmäßig, dass die Umformung mit einer zusätzlichen Temperaturunterstützung, vorzugsweise bei Temperaturen im Bereich der Glasübergangstemperatur der verwendeten Folie, erfolgt. Vorteilhafterweise beträgt die Temperatur hierbei zwischen 120 °C und 300 °C, vorzugsweise zwischen 190 °C und 250°C, beispielsweise bei Verwendung von ABS-Material.

Mittels den oben genannten Umformprozessen werden vorzugsweise dreidimensionale Verdehnungen von bis zu 200% erreicht. Es ist auch möglich, insbesondere bei Optimierung der Parameter auf das jeweilige System, Verdehnungen bis zu 300% zu erreichen, wobei Verdehnungen zwischen 20% bis 50% in vielen Anwendungsfällen ausreichend sind.

Weiter ist es möglich, dass die mittels den oben genannten Umformprozessen um- bzw. vorgeformten Folien und/oder elektrischen Funktionselemente in einem anschließenden Spritzgießprozess vor- und/oder hinterspritzt werden.

Weiter ist es auch möglich, dass die Folie und/oder das elektrische Funktionselement mittels eines Spritzgießprozesses umgeformt und/oder verformt wird. Vorteilhafterweise wird die Folie und/oder das elektrische Funktionselement hierbei im flachen Zustand über Rolle oder über Bogen oder Sheet oder über Einzellabel ins Spritzgießwerkzeug eingebracht und mittels des Spritzgießverfahren verformt, insbesondere wobei die Formgebung durch das Schließen des Werkzeuges sowie auch durch das Einspritzen der Formmasse erfolgt. Insbesondere der Spritzdruck ist hierbei abhängig von der Bauteilgeometrie und/oder der Bauteilgröße. Beispielsweise ist es möglich, dass der Spritzdruck 500 bar und die Spritztemperatur zwischen 180 °C und380 °C beträgt, wobei Spritzdruck und Spritztemperatur vom Spritzgießmaterial abhängig sind. Weiter ist es auch zweckmäßig, dass die in das Spritzgießwerkzeug eingebrachte Folie und/oder das elektrische Funktionselement vor dem Schließprozess des Spritzgießwerkzeugs mittels Erwärmen der Folie und/oder des elektrischen Funktionselements, beispielsweise bei Temperaturen zwischen 30 °C und 300°C, vorzugsweise zwischen 80 °C und 150°C, erhitzt werden Auch ist es möglich, dass die Folie und/oder das elektrische Funktionselementmittels Klemmrahmen und/oder Vakuum und/oder Überdruck in die Kavität einzupassen bzw. zu fixieren.

Auch ist es von Vorteil, die Folie und/oder das elektrische Funktionselement mittels "Überziehen" der Folie und/oder des elektrischen Funktionselements über ein bereits dreidimensional vorgeformtes Bauteil umzuformen. Vorteilhafterweise erfolgt das "Überziehen" der Folie und/oder des elektrischen Funktionselements durch die Steuerung einer Vakuumansaugung der Folie und/oder des elektrischen Funktionselements an das bereits dreidimensional vorgeformte Bauteil bei gleichzeitigem Überdruck in einem Prozess. Vorzugsweise wird hierbei das zu überziehende bereits dreidimensional vorgeformte Bauteil vorher mit Temperatur beaufschlagt. Hierbei ist es zweckmäßig, wenn der Überdruck zwischen 1 bar und 50 bar, vorzugsweise zwischen 3 bar und 15 bar, beträgt und/oder die Temperatur zwischen 30 °C und 300 °C, vorzugsweise zwischen 100 °C und 180 °C, beträgt.

Vorzugsweise weist die Folie und/oder das elektrische Funktionselement eine Verdehnbarkeit von größer als 20 % auf. Derartig hohe Verdehnbarkeiten können beispielsweise mittels der oben genannten Umform- und/oder Verformprozessen bei herkömmlichen Funktionsfolien nicht erreicht werden, insbesondere da die Trägerfolie aus beispielsweise **PET** nicht verformbar genug ist und/oder die leitfähigen Strukturen schon nach geringer Verformung, insbesondere bei Verdehnungen größer als 20 %, brechen. Hier hat sich gezeigt, dass durch die erfindungsgemäße Folie die Verdehnung verbessert wird. So wird durch den mehrschichtigen Aufbau der erfindungsgemäßen Folie, insbesondere durch die zwischen mehreren Lackschichten eingebettete mindestens eine elektrisch leitfähige Schicht gemäß einem Sandwichsystem, wie vorgehend beschrieben, erreicht, dass die mechanische Verdehnung und/oder Verformung gezielt beeinflusst werden kann, indem beispielsweise durch Anpassung der Schichtdicken und/oder der Lackformulierungen bestimmte Bereiche der Folie flexibler oder weniger flexibel ausgestaltet werden können. Somit wird hier vorzugsweise die gewünschte Verdehnbarkeit von größer 20% erreicht.

Auch bei den oben genannten dreidimensionalen Verformungen ist es vorteilhaft, wenn die elektrische Funktionsstruktur der Folie und/oder des elektrischen Funktionselements von außen elektrisch, insbesondere galvanisch kontaktiert werden kann, wofür die elektrischen Kontakte für eine Kontaktierung zugänglich sein müssen. Alternativ kann eine induktive und/oder kapazitive Kopplung, insbesondere eine Kopplung über eine Antenne, realisiert werden. Wie oben dargelegt, wird durch die erfindungsgemäße Folie eine robuste und sichere Kontaktierung der elektrischen Funktionsstruktur ermöglicht.

Weiter ist es möglich, dass die Haftvermittlungsschicht aus einem Material besteht, dessen optisches Erscheinungsbild sich während und/oder nach dem Schritt b) von trüb zu hochtransparent und/oder klar ändert. So ist es möglich, dass während des Applizierens der Folie auf das Zielsubstrat die Haftvermittlungsschicht aufgrund von zugeführter Hitze aufgeschmolzen wird und/oder die Haftvermittlungsschicht mittels Druck eingeebnet wird, so dass die in nicht appliziertem Zustand der Folie vorliegende Oberflächenrauigkeit der Haftvermittlungsschicht während und/oder nach dem Applizieren nivelliert wird. Hierdurch ändert sich das optische Erscheinungsbild der Haftvermittlungsschicht von trüb zu hochtransparent und/oder klar.

Nach Applikation der Folie auf ein Zielsubstrat, bildet die Folie mit dem Zielsubstrat ein elektrisches Funktionselement. Vorteilhafterweise ist nach Applikation der Folie auf das Zielsubstrat die Haftvermittlungsschicht der Folie hochtransparent, insbesondere weist die Haftvermittlungsschicht der Folie eine Transmission von Licht im Wellenlängenbereich zwischen 380 nm bis 780 nm von mehr als 85%, bevorzugt mehr als 90%, auf und/oder die Haftvermittlungsschicht der Folie ist eine klare Haftvermittlungsschicht, insbesondere wird von der Haftvermittlungsschicht der Folie Licht im Wellenlängenbereich zwischen 380 nm bis 780 nm um weniger als 8%, bevorzugt um weniger als 4%, durch Streuung abgelenkt. Auch ist es möglich, dass die Folie zumindest in dem einen Funktionsbereich der mindestens einen elektrisch leitfähigen Schicht eine Transmission von Licht im Wellenlängenbereich zwischen 380 nm bis 780 nm von mehr als 75%, bevorzugt mehr als 80%, weiter bevorzugt mehr als 85%, noch weiter bevorzugt mehr als 90%, aufweist. Hierdurch kann beispielsweise eine brillante und originalgetreue Betrachtung eines von einem Display erzeugten Bildes, auf welches die Folie appliziert ist, erreicht werden.

Weiter ist es möglich, dass das elektrische Funktionselement ein Funktionselement zur Informationsverarbeitung, insbesondere ein Mobiltelefon, wie beispielsweise ein Smartphone oder ein PDA, ein Tablet-Computer, ein Geldautomat, ein Fahrkartenautomat, ein Spieleautomat, eine Spielekonsole, ein Bedienteil eines Haushaltgeräts oder eines Kraftfahrzeugs ist oder beispielsweise ein Touchscreen ist. Auch ist es möglich, dass das elektrische Funktionselement eine Eingabevorrichtung, insbesondere ein Touchpanel, ist. Es ist jedoch auch möglich, dass das elektrische Funktionselement ein Zwischenprodukt ist, welches in weiteren Verarbeitungsschritten zu oder in einem Endprodukt verbaut ist. So kann die Folie beispielsweise auf eine Glasschicht appliziert werden und das aus der Glasschicht und der Folie gebildete elektrische Funktionselement kann beispielsweise in einem Fahrkartenautomaten verbaut werden.

Im Folgenden werden Ausführungsbeispiele der Erfindung exemplarisch unter Zuhilfenahme der beiliegenden, nicht maßstabgetreuen Figuren erläutert.
- Fig. 1a bis Fig. 1f: zeigen schematisch Schnittdarstellungen von Folien
- Fig. 2a und Fig. 2b: zeigen schematisch Schnittdarstellungen von Folien
- Fig. 3: zeigt schematisch eine Schnittdarstellung einer Folie
- Fig. 4a bis Fig. 4c: zeigen schematisch Schnittdarstellungen von Folien
- Fig. 5a bis Fig. 5c: zeigen schematisch Schnittdarstellungen von Folien
- Fig. 6a bis Fig. 6c: zeigen schematisch Schnittdarstellungen von Folien
- Fig. 7: zeigt schematisch eine Schnittdarstellung einer Folie
- Fig. 8: zeigt schematisch eine Schnittdarstellung einer Folie
- Fig. 9: zeigt schematisch eine Schnittdarstellung einer Folie
- Fig. 10: zeigt schematisch eine Schnittdarstellung einer Folie
- Fig. 11a: zeigt schematisch Leiterbahnen in Draufsicht
- Fig. 11b: zeigt schematisch einen vergrößerten Ausschnitt der Fig. 11a
- Fig. 12: zeigt schematisch Leiterbahnen in Draufsicht
- Fig. 13: zeigt schematisch eine Schnittdarstellung einer Folie
- Fig. 14: zeigt schematisch Draufsichten von Folien
- Fig. 15a und Fig. 15b: zeigen schematisch Verfahrensschritte zur Herstellung eines elektrischen Funktionselements
- Fig. 16a und Fig. 16b: zeigen schematisch Verfahrensschritte zur Herstellung eines elektrischen Funktionselements
- Fig. 17a und Fig. 17b: zeigen schematisch Verfahrensschritte zur Herstellung eines elektrischen Funktionselements
- Fig. 18a und Fig. 18b: zeigen schematisch Verfahrensschritte zur Herstellung eines elektrischen Funktionselements
- Fig. 19a und Fig. 19b: zeigen schematisch Verfahrensschritte zur Herstellung eines elektrischen Funktionselements
- Fig. 20a und Fig. 20b: zeigen schematisch Verfahrensschritte zur Herstellung eines elektrischen Funktionselements
- Fig. 21a und Fig. 21b: zeigen schematisch Verfahrensschritte zur Herstellung eines elektrischen Funktionselements
- Fig. 22a und Fig. 22b: zeigen schematisch Verfahrensschritte zur Herstellung eines elektrischen Funktionselements
- Fig. 23a bis Fig. 23d: zeigen schematisch Draufsichten von einem Zielsubstrat, Folien und einem elektrischen Funktionselement
- Fig. 24a bis Fig. 24e: zeigen schematisch Verfahrensschritte zur Herstellung einer Folie
- Fig. 25a und Fig. 25b: zeigt schematisch ein Verfahrensschritt zur Herstellung einer Folie
- Fig. 26a bis Fig. 26c: zeigen schematisch Verfahrensschritte zur Umformung einer Folie und/oder eines elektrischen Funktioselement

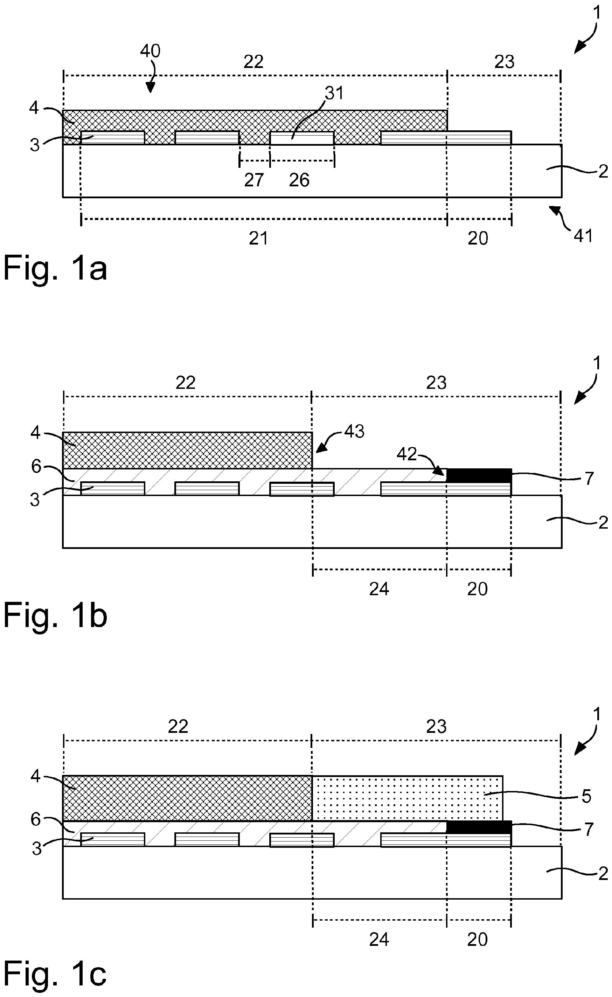

Fig. 1a zeigt eine Folie 1 mit einem Trägersubstrat 2, einer elektrisch leitfähigen Schicht 3 und einer Haftvermittlungsschicht 4.

Bei dem Trägersubstrat 2 handelt es sich vorzugsweise um eine Schicht aus PET, PMMA, PC, ABS, PU, Glas oder Gewebe. Auch ist es möglich, dass das Trägersubstrat 2 aus einem Hybridmaterial gebildet ist, welches Kunststoffschichten und Schichten aus Gewebe, insbesondere Fasermaterial, wie beispielsweise Papier, Baumwolle, oder andere Natur- oder Kunstfasern, umfasst. Vorzugsweise weist das Trägersubstrat 2 eine Schichtdicke zwischen 2 µm und 250 µm, bevorzugt zwischen 23 µm und 125 µm, auf. Bei dem in Fig. 1a gezeigten Trägersubstrat 2 handelt es um eine transparente Schicht aus PET mit einer Schichtdicke von 75 µm.

Unter transparent wird hierbei die Eigenschaft von Materie verstanden, Licht aus dem für das menschliche Auge sichtbaren Wellenlängenbereich, insbesondere aus dem Wellenlängenbereich zwischen 380 nm bis 780 nm, hindurch zu lassen.

Bei der elektrischen leitfähigen Schicht 3 handelt es sich vorzugsweise um eine Schicht aus Metall, insbesondere aus Silber (Ag), Gold (Au), Aluminium (Al), Kupfer (Cu) oder Chrom (Cr). Die elektrisch leitfähige Schicht 3 weist bevorzugt eine Schichtdicke zwischen 1 nm und 100 nm, weiter bevorzugt zwischen 2,5 nm und 75 nm, noch weiter bevorzugt zwischen 5 nm und 50 nm, auf. Es ist auch möglich, dass die Schichtdicke der elektrisch leitfähigen Schicht 3 zwischen 100 nm und 5 µm beträgt. Die elektrisch leitfähige Schicht 3 kann weiter aus einer elektrisch leitfähigen Paste umfassend Silber (Ag), Gold (Au), Kupfer (Cu) und/oder Kohlenstoff ausgebildet sein. Bei der in Fig. 1a gezeigten elektrisch leitfähigen Schicht 3 handelt es um eine Schicht aus Ag mit einer Schichtdicke von 50 nm.

Die elektrisch leitfähige Schicht 3 ist derart ausgeformt, dass die elektrisch leitfähige Schicht 3 eine Vielzahl von Leiterbahnen aufweist, die eine Breite 26 zwischen 0,2 µm und 20 µm, bevorzugt zwischen 4 µm und 15 µm, aufweisen und einen Abstand 27 größer als 10 µm, bevorzugt größer als 20 µm, zueinander aufweisen, so dass die Leiterbahnen unterhalb des Auflösungsvermögens des menschlichen Auges liegen. Unter Leiterbahnen werden hier vorzugsweise strukturierte elektrisch leitfähige Schichten und leitfähige Bereiche der mindestens einen elektrisch leitfähigen Schicht 3 verstanden. Die Leiterbahnen werden derart aufgebracht, dass eine ausreichende Transparenz für das menschliche Auge erhalten bleibt, das heißt die Leiterbahnen sind derart ausgestaltet, dass diese von einem menschlichen Betrachter nicht wahrgenommen werden, da die Leiterbahnen unterhalb des Auflösungsvermögens des menschlichen Auges liegen. Trotz der eingesetzten schmalen Leiterbahnen, wird eine ausreichende elektrische Leitfähigkeit erreicht, welche insbesondere mit Schichten aus Indiumzinnoxid (ITO) vergleichbar ist. Vorzugsweise ist die Belegung des Trägersubstrats 2 mit der mindestens einen elektrisch leitfähigen Schicht 3, insbesondere den Leiterbahnen kleiner als 30 %, bevorzugt kleiner als 20 %, weiter bevorzugt kleiner als 10 %, noch weiter bevorzugt kleiner als 5 %. In Fig. 1a beträgt die Breite 26 der von der elektrisch leitfähigen Schicht 3 geformten Leiterbahnen 5 µm und der Abstand 27 der der von der elektrisch leitfähigen Schicht 3 geformten Leiterbahnen beträgt 15 µm.

Die elektrisch leitfähige Schicht 3 bildet in dem Funktionsbereich 21 eine elektrische Funktionsstruktur aus, welche ein Touchsensorfeld, insbesondere ein kapazitives Sensorfeld, ausbildet. Weiter ist es auch möglich, dass die elektrische Funktionsstruktur ein resistives oder induktives Sensorfeld ausbildet. Das Touchsensorfeld stellt eine Tastfeldfunktionalität bereit. Unter Touchsensorfeld wird hierbei ein berührungsempfindlicher Sensor verstanden, der die Steuerung eines elektrischen Funktionselements, wie beispielsweise eines Smartphones, einer Spielekonsole oder eines Fahrkartenautomaten, ermöglicht. Ebenfalls wird unter einem Touchsensorfeld ein Multitouchsensorfeld verstanden, welches mehrere gleichzeitige Berührungen verarbeiten kann, beispielsweise zum Vergrößern und Drehen von Bildern, die auf einem insbesondere unter dem Touchsensorfeld angeordneten hier nicht näher dargestellten Display angezeigt werden.

Die elektrische leitfähige Schicht 3 weist weiter einen Kontaktierungsbereich 20 auf. Der Kontaktierungsbereich 20 bildet eine Kontaktierungsstruktur zur elektrischen Kontaktierung der Funktionsstruktur aus. Bei der Kontaktierungsstruktur im Funktionsbereich 20 handelt es sich beispielsweise um einen elektrischen Anschluss in Form eines Steckers. Weiter ist es möglich, dass die Kontaktierungsstruktur so genannte Pins, Kontakte und/oder Stifte aufweist. Der Kontaktierungsbereich 20 in Fig. 1a weist eine Fläche von 0,3 mm x 2,0 mm auf. Auch ist es möglich, dass die elektrisch leitfähige Schicht 3 ein oder mehrere voneinander separierte Kontaktierungsbereiche 20 ausbildet. Unter separiert wird hierbei verstanden, dass die Kontaktierungsbereiche voneinander beanstandet und dadurch auch voneinander elektrisch isoliert sind, insbesondere dass die Kontaktierungsbereiche einen Abstand von mindestens 0,1 mm, bevorzugt mindestens 0,2 mm, weiter bevorzugt mindestens 0,5 mm, zueinander aufweisen.

Bei der Haftvermittlungsschicht 4 handelt es sich vorzugsweise um eine Schicht aus Polymeren und/oder Copolymeren, insbesondere umfassend PMMA, Polyester, PU oder PVC, mit einer Schichtdicke zwischen 0,1 µm und 50 µm, bevorzugt zwischen 0,25 µm und 25 µm, weiter bevorzugt zwischen 0,5 µm und 7 µm. Bei der Fig. 1a gezeigten Haftvermittlungsschicht 4 handelt es sich um eine Schicht aus PVC-Copolymeren mit einer Schichtdicke von 4 µm.

Wie in Fig. 1a gezeigt, ist die elektrisch leitfähige Schicht 3 zwischen dem Trägersubstrat 2 und der Haftvermittlungsschicht 4 angeordnet. Die Haftvermittlungsschicht 4 ist also auf der dem Trägersubstrat 2 abgewandten Seite der mindestens einen elektrisch leitfähigen Schicht 3 angeordnet. Die Folie 1 weist eine Oberseite 40 und eine Unterseite 41 auf, wobei die Haftvermittlungsschicht 4 auf der Oberseite 40 angeordnet ist. Wie in Fig. 1a gezeigt, ist die Haftvermittlungsschicht 4 auf der Oberfläche der Folie 1 angeordnet.

Die Haftvermittlungsschicht 4 ist in dem Bereich 22 angeordnet. Der Bereich 22 überdeckt die von der elektrisch leitfähigen Schicht 3 gebildete Funktionsstruktur im Funktionsbereich 21 in Fig. 1a vollständig. Die Haftvermittlungsschicht 4 ist in dem Bereich 23 nicht angeordnet. Der Bereich 23 umfasst den Kontaktierungsbereich 20 der elektrisch leitfähigen Schicht 3, so dass die Haftvermittlungsschicht 4 den Kontaktierungsbereich 20 vollflächig nicht überdeckt. Der Bereich 23 haftet bei Applikation der Folie 1 auf ein Zielsubstrat nicht auf dem Zielsubstrat an und daher ist insbesondere der Kontaktierungsbereich 20 nach Applikation der Folie 1 auf das Zielsubstrat zugänglich und die elektrische Funktionsstruktur kann sicher kontaktiert werden.

Es jedoch auch möglich, dass die Haftvermittlungsschicht 4 den Funktionsbereich 21 nicht vollständig überdeckt. So kann die Haftvermittlungsschicht 4 den Funktionsbereich 21 beispielsweise zu mindestens 30 %, bevorzugt zu mindestens 50 %, weiter bevorzugt zu mindestens 70 %, überdecken.

Die Haftvermittlungsschicht 4 besteht bevorzugt aus einem Material, das nach Applikation der Folie 1 auf ein Zielsubstrat hochtransparent ist. Der Begriff "hochtransparent" beschreibt die Eigenschaft von Materie, Licht aus dem für das menschliche Auge sichtbaren Wellenlängenbereich, insbesondere aus dem Wellenlängenbereich zwischen 380 nm bis 780 nm, kaum abschwächt und im Wesentlichen ungehindert hindurch zu lassen. Eine hochtransparente Schicht weist daher für einen menschlichen Betrachter im Wesentlichen keine erkennbare Absorption von Licht auf, so dass die Lichtintensität bei Hindurchtreten des Lichts durch die Schicht für einen menschlichen Betrachter kaum erkennbar verringert wird.

So besteht die Haftvermittlungsschicht 4 bevorzugt aus einem Material, das nach Applikation auf das Zielsubstrat eine Transmission von Licht im Wellenlängenbereich zwischen 380 nm bis 780 nm von mehr als 85%, bevorzugt mehr als 90%, aufweist.

Bevorzugt besteht die Haftvermittlungsschicht 4 aus einem Material, das nach Applikation der Folie 1 auf ein Zielsubstrat klar ist, so dass von der Haftvermittlungsschicht 4 nach Applikation der Folie 1 auf das Zielsubstrat Licht im Wellenlängenbereich zwischen 380 nm bis 780 nm um weniger als 8%, bevorzugt um weniger als 4%, durch Streuung abgelenkt wird.

Wie zuvor erläutert kann die Haftvermittlungsschicht 4 im noch nicht auf dem Zielsubstrat applizierten Zustand insbesondere lichtstreuende Eigenschaften aufgrund von Oberflächenrauigkeiten der Haftvermittlungsschicht 4, welche beispielsweise durch Spuren der Prozessschritte zum Auftragen der Haftvermittlungsschicht 4 entstehen können, aufweisen. Die Haftvermittlungsschicht 4 wird insbesondere dann hochtransparent und/oder klar, wenn die Folie 1 auf dem Zielsubstrat appliziert ist und die Haftvermittlungsschicht 4 beispielsweise mittels durch das Heißlaminieren zugeführter Hitze und/oder Druck aufgeschmolzen und/oder eingeebnet ist, so dass die Oberflächenrauigkeiten der Haftvermittlungsschicht 4 nicht mehr störend in Erscheinung treten. Das heißt durch physikalische und/oder chemische Veränderungen der Haftvermittlungsschicht 4 während bzw. nach der Applikation der Folie 1 auf das Zielsubstrat wird die Haftvermittlungsschicht 4 hochtransparent und/oder klar.

Bei der partiell aufgebrachten Haftvermittlungsschicht 4 handelt es bevorzugt um eine Schicht aus einem Heißkleber oder einem strahlungshärtbaren Kleber, insbesondere einem mittels elektromagnetischer Strahlung und/oder Elektronenstrahlung härtbaren Kleber. Strahlungshärtbare Kleber werden beispielsweise mittels UV-Licht und/oder IR-Licht gehärtet (UV = ultraviolett; IR = infrarot).

Fig. 1b zeigt eine Folie 1 umfassend ein Trägersubstrat 2, eine elektrisch leitfähige Schicht 3, eine Schutzlackschicht 6, eine Kontaktverstärkungsschicht 7 und eine Haftvermittlungsschicht 4.

Bei der Schutzlackschicht 6 handelt es sich bevorzugt um eine Schicht aus PMMA, Polyester, PU oder PVC mit einer Schichtdicke zwischen 0,1 µm und 50 µm, bevorzugt zwischen 0,25 µm und 25 µm, weiter bevorzugt zwischen 0,5 µm und 15 µm. Bei der Fig. 1b gezeigten Schutzlackschicht 6 handelt es sich um eine transparente Schicht aus PAC mit einer Schichtdicke von 5 µm.

Die Schutzlackschicht 6 überdeckt die elektrisch leitfähige Schicht 3, nicht jedoch den Kontaktierungsbereich 20. So überdeckt die Schutzlackschicht 6 den von der elektrisch leitfähigen Schicht 3 gebildeten Funktionsbereich 21, nicht jedoch den Kontaktierungsbereich 20. Die Schutzlackschicht 6 ist, wie in Fig. 1b gezeigt, auf der dem Trägersubstrat 2 abgewandten Seite der elektrisch leitfähigen Schicht 3 angeordnet. Die Schutzlackschicht 6 ist also zwischen der elektrisch leitfähigen Schicht 3 und der Haftvermittlungsschicht 4 angeordnet.

Bei der Kontaktverstärkungsschicht 7 handelt es sich bevorzugt um eine Schicht aus einer elektrisch leitfähigen Paste, insbesondere Carbonpaste, welche Silber (Ag), Gold (Au), Aluminium (Al), Kupfer (Cu), Chrom (Cr) und/oder andere leitfähige Metalle umfasst. Weiter ist es möglich, dass die elektrisch leitfähige Paste, insbesondere Carbonpaste, Bindemittel, insbesondere umfassend Kolophonium- und/oder Phenolharze, Polymere und Copolymere, umfasst.

Unter Bindemittel werden Stoffe verstanden, durch die Feststoffe, insbesondere mit einem feinen Zerteilungsgrad, miteinander bzw. auf einer Unterlage verbunden werden können. So ist es möglich, dass die Bindemittel in flüssiger Form den zu bindenden Feststoffen zugesetzt sind.

Bindemittel der elektrisch leitfähigen Paste, insbesondere Carbonpaste, sind Naturharze, vorzugsweise Kolophonium, Phenolharze, Polymere und Copolymere bestehend aus PVC, PMMA, PU, Polyester, Isocyanat (NCO)-vernetzte Bindemittel, beispielsweise MF, MPF, Melamin-Polyester, UMF. Weniger bevorzugt sind Bindemittel der elektrisch leitfähigen Paste umfassend Poly(organo)siloxane und deren Copolymere und/oder strahlenhärtende Bindemittel.

Lacke und Pasten können beispielsweise lösemittelbasierend sein oder auf wässriger Basis als Emulsion, Dispersion oder Suspension vorliegen.

Die Kontaktverstärkungsschicht 7 weist bevorzugt eine Schichtdicke zwischen 0,1 µm und 100 µm, bevorzugt zwischen 0,25 µm und 25 µm, weiter bevorzugt zwischen 0,5 µm und 10 µm, auf.

Bei der in Fig. 1b gezeigten Kontaktverstärkungsschicht 7 handelt es sich um eine Schicht aus eines einer Carbonpaste mit einer Schichtdicke von 4,5 µm.

Die Kontaktverstärkungsschicht 7 ist hierbei in dem Kontaktierungsbereich 20 der elektrisch leitfähigen Schicht 3 aufgebracht. Die elektrisch leitfähige Schicht 3 weist in dem Kontaktierungsbereich 20 die Kontaktverstärkungsschicht 7 auf. Wie in Fig. 1b gezeigt, ist die Kontaktverstärkungsschicht 7 in dem Kontaktierungsbereich vollflächig aufgebracht. Es ist jedoch auch möglich, dass die Kontaktverstärkungsschicht 7 lediglich bereichsweise in dem Kontaktierungsbereich 20 aufgebracht ist. Die Kontaktverstärkungsschicht 7 schützt den Kontaktierungsbereich 20 bzw. die in dem Kontaktierungsbereich 20 ausgebildete Kontaktierungsstruktur vor mechanischen, physikalischen und/oder chemischen Umwelteinflüssen.

Die Haftvermittlungsschicht 4 ist, wie in Fig. 1b gezeigt, in dem Bereich 22 vorhanden und in dem Bereich 23 nicht vorhanden. Die Haftvermittlungsschicht 4 ist bei Betrachtung senkrecht zu einer von dem Trägersubstrat 2 aufgespannten Ebene somit in dem Bereich 24, welcher von dem Bereich 23 umfasst ist, nicht vorhanden. Der Bereich 24 grenzt an die Kontaktierungsbereich 20 an und weist die Haftvermittlungsschicht 4 nicht auf. Die Haftvermittlungsschicht 4 ist lediglich in dem Bereich 22 aufgebracht und überdeckt den an den Kontaktierungsbereich 20 angrenzenden Bereich 24 nicht. Bei Applikation der Folie 1 auf ein Zielsubstrat haftet die Folie 1 daher lediglich in dem Bereich 22 an dem Zielsubstrat. In dem Bereich 23, welcher die Bereiche 20 und 24 umfasst, haftet die Folie 1 nicht auf dem Zielsubstrat, so dass der Kontaktierungsbereich 20 zugänglich ist. Weiter kann der Bereich 23 angehoben werden, wobei der an den Kontaktierungsbereich 20 angrenzende Bereich 24 beispielsweise eine Scharnierfunktion zum Anheben des Bereichs 23 ausübt.

Der Bereich 24 weist bevorzugt eine Breite von mindestens 0,2 mm, bevorzugt von mindestens 0,5 mm, weiter bevorzugt von mindestens 1 mm, noch weiter bevorzugt von mindestens 2 mm, auf. Der in Fig. 1b gezeigte Bereich 24 weist eine Breite von 1 mm auf. Die Breite des Bereichs 24 kann in Abhängigkeit von den Anforderungen des Zielsubstrats, auf welches die Folie 1 appliziert werden soll, oder in Abhängigkeit der weiteren Verarbeitungsschritt nach Applikation der Folie 1 auf das Zielsubstrat gewählt werden. Unter Breite wird hierbei der Abstand zwischen der Grenzfläche 42, die von dem Kontaktierungsbereich 20 und dem an den Kontaktierungsbereich 20 angrenzenden Bereich 24 gebildet wird, und der Grenzfläche 43, die von der Haftvermittlungsschicht 4 und dem an den Kontaktierungsbereich 20 angrenzenden Bereich 24 gebildet wird, verstanden.

Bezüglich der Ausgestaltung der weiteren Schichten in Fig. 1b wird hier auf obige Ausführungen verwiesen.

Fig. 1c zeigt eine Folie 1 mit einem Trägersubstrat 2, einer elektrisch leitfähigen Schicht 3, einer Haftvermittlungsschicht 4, einer Ablöseschicht 5, einer Schutzlackschicht 6 und einer Kontaktverstärkungsschicht 7. Bei der Ablöseschicht 5 handelt es sich bevorzugt um eine Schicht aus Wachsen, Polyethylen (PE), Polypropylen (PP), Cellulose-Derivaten oder Poly(organo)siloxanen. Vorgenannte Wachse können natürliche Wachse, synthetische Wachse oder Kombinationen davon sein. Vorgenannte Wachse sind beispielsweise Carnauba-Wachse. Vorgenannte Cellulose-Derivate sind beispielsweise Celluloseacetat (CA), Cellulosenitrat (CN), Celluloseacetatbutyrat (CAB) oder Mischungen davon. Vorgenannte Poly(organo)siloxane sind beispielsweise Silicon-Bindemittel, Polysiloxan-Bindemittel oder Mischungen davon. Die Ablöseschicht 5 weist bevorzugt Schichtdicken zwischen 0,1 µm und 10 µm, bevorzugt zwischen 0,01 µm und 5 µm, auf. Bei der in Fig. 1c gezeigten Ablöseschicht 5 handelt es sich um eine Schicht aus einer PE-Wachs-Dispersion mit einer Schichtdicke von weniger als 1 µm.

Die Ablöseschicht 5 überdeckt, wie in Fig. 1c gezeigt, den an den Kontaktierungsbereich 20 angrenzenden Bereich 24 vollflächig. Der Kontaktierungsbereich 20 wird von der Ablöseschicht 5 lediglich bereichsweise überdeckt. Es ist jedoch auch möglich, dass die Ablöseschicht den Kontaktierungsbereich 20 vollflächig überdeckt. Auch ist es möglich, dass die Ablöseschicht in dem Kontaktierungsbereich 20 vollflächig oder zumindest bereichsweise aufgebracht ist, nicht jedoch in dem an den Kontaktierungsbereich 20 angrenzenden Bereich 24.

Durch die Ablöseschicht 5 wird ein Anhaften der Bereiche, auf welche die Ablöseschicht 5 aufgebracht ist, an ein Zielsubstrat, auf welches die Folie 1 appliziert wird, verhindert. So haftet die in Fig. 1c gezeigte Folie 1 in dem Bereich 22 nach Applikation auf ein Zielsubstrat auf dem Zielsubstrat, nicht jedoch in dem Bereich 23, welcher die Bereiche 20 und 24 umfasst. Durch die Ablöseschicht 5 kann somit sichergestellt werden, dass die Bereiche, welche die Ablöseschicht 5 aufweisen, beispielsweise durch Heißlaminieren auf ein Zielsubstrat, nicht auf dem Zielsubstrat anhaften.

Bezüglich der Ausgestaltung der weiteren Schichten in Fig. 1c wird hier auf obige Ausführungen verwiesen.

Vorteilhafterweise weist die Folie 1 nach Applikation auf ein Zielsubstrat in dem von der elektrisch leitfähigen Schicht 3 gebildeten Funktionsbereich zumindest eine Transmission von Licht im Wellenlängenbereich zwischen 380 nm bis 780 nm von mehr als 75%, bevorzugt mehr als 80%, weiter bevorzugt mehr als 85%, noch weiter bevorzugt mehr als 90%, auf.

Die Transmission beschreibt hierbei die Durchlässigkeit der Folie 1 für Licht aus dem Wellenlängenbereich zwischen 380 nm bis 780 nm. Auf die Folie 1 einfallendes Licht, wird teilweise an der Grenzfläche Luft - Folie 1 sowie an Grenzflächen der Schichten der Folie 1 reflektiert. Weiter wird das auf die Folie 1 einfallende Licht beim Durchqueren der Folie 1 teilweise absorbiert. Der verbleibende Anteil des Lichts wird durch die Folie 1 transmittiert und tritt an der gegenüberliegenden Seite der Folie 1 wieder aus. Zur Bestimmung des Transmissionsgrads τ wird der Quotient aus der Lichtintensität hinter der Folie I und der Lichtintensität vor der Folie I₀ gebildet. Der Transmissionsgrad τ ist ein Maß für die "durchgelassene" Intensität und nimmt Werte zwischen 0 und 1 an. Die Transmission ist typischerweise abhängig von der Wellenlänge des einfallenden Lichts.

Wie zuvor erläutert kann die Haftvermittlungsschicht 4 vor Applikation der Folie 1 auf ein Zielsubstrat einen trüben optischen Eindruck aufweisen, der insbesondere aufgrund von Oberflächenrauigkeiten der Haftvermittlungsschicht 4 hervorgerufen wird. Nach Applikation der Folie 1 auf das Zielsubstrat sind diese Oberflächenrauigkeiten beispielsweise durch während des Applikationsprozesses zugeführte Hitze, welche die Haftvermittlungsschicht 4 aufschmelzen lässt, und/oder durch ausgeübten Druck, welcher die Haftvermittlungsschicht durch Anpressen an das Zielsubstrat einebnet, nivelliert. Hierdurch wird die Haftvermittlungsschicht insbesondere nach Applikation auf das Zielsubstrat hochtransparent und/oder klar, so dass der trübe optische Eindruck verschwindet und hohe Transmissionswerte der applizierten Folie 1 erzielt werden können. Daher wird die Transmission der Folie 1 bevorzugt, wie im Folgenden erläutert, nach Applikation auf ein Zielsubstrat gemessen.

Wird die Folie 1 beispielsweise auf ein Zielsubstrat aus PMMA appliziert und anschließend die Gesamttransmission des aus dem Zielsubstrat und der Folie 1 gebildeten elektrischen Funktionselements bestimmt, so ergibt sich eine Gesamttransmission von 84,6%. Diese Gesamttransmission ergibt sich sowohl bei einer Messung von der Seite des PMMA-Zielsubstrats 10 als auch von der Seite des Trägersubstrats 2 der Folie 1. Das PMMA-Zielsubstrat weist hierbei eine Transmission von 93,6% auf. Zur Messung der Gesamttransmission sowie der Transmission des PMMA-Zielsubstrats wurde das Messgerät Byk Gardener Haze-Gard Plus der Firma BYK-Gardner GmbH, Geretsried, Deutschland verwendet.

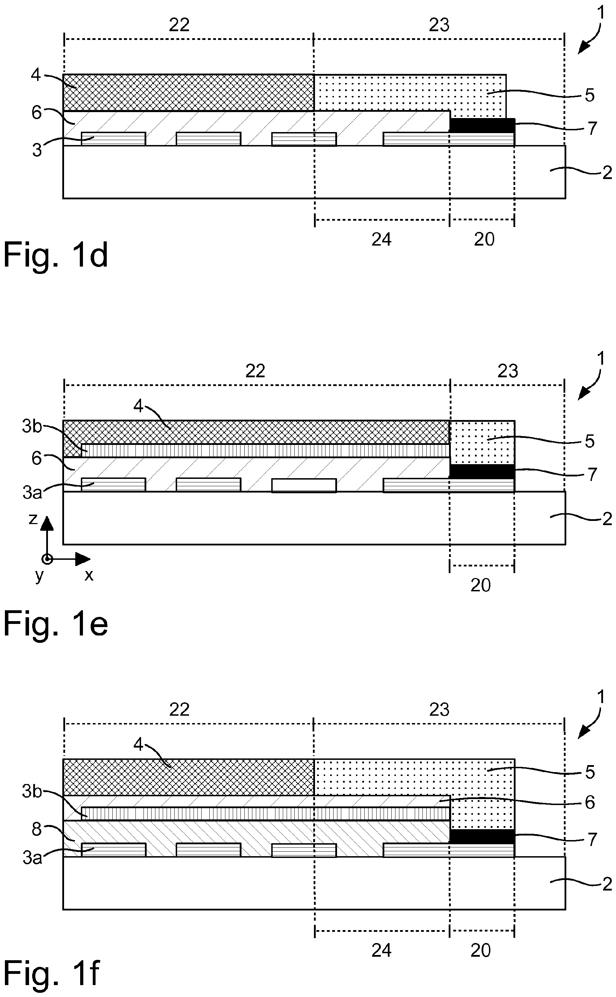

Fig. 1d zeigt eine Folie 1 mit einem Trägersubstrat 2, einer elektrisch leitfähigen Schicht 3, einer Haftvermittlungsschicht 4, einer Ablöseschicht 5, einer Schutzlackschicht 6 und einer Kontaktverstärkungsschicht 7.

Die in Fig. 1d gezeigte Folie 1 entspricht dabei der in Fig. 1c gezeigten Folie mit dem Unterschied, dass die Schutzlackschicht 6 in Fig. 1d mit einer größeren Schichtdicke ausgeführt ist. So weist die in Fig. 1d gezeigte Schutzlackschicht 6 eine Schichtdicke von 10 µm auf.

Fig. 1e zeigt eine Folie 1 mit einem Trägersubstrat 2, einer ersten elektrisch leitfähigen Schicht 3a, einer Schutzlackschicht 6, einer zweiten elektrisch leitfähigen Schicht 3b, einer Haftvermittlungsschicht 4, einer Ablöseschicht 5 und einer Kontaktverstärkungsschicht 7.

Die erste elektrisch leitfähige Schicht 3a ist derart ausgeformt, dass die erste elektrisch leitfähige Schicht 3a eine Vielzahl von Leiterbahnen aufweist, welche in y-Richtung verlaufen und streifenförmig ausgebildet sind. Die zweite elektrisch leitfähige Schicht 3b ist derart ausgeformt, dass die zweite elektrisch leitfähige Schicht 3b eine Vielzahl von Leiterbahnen aufweist, welche in x-Richtung verlaufen und ebenfalls streifenförmig ausgebildet sind. Die Leiterbahnen der ersten elektrisch leitfähigen Schicht 3a können hierbei als Sensorleiterbahnen ausgebildet sein und die Leiterbahnen der zweiten elektrisch leitfähigen Schicht können als Treiberleiterbahnen ausgebildet sein, wobei die erste elektrisch leitfähige Schicht 3a von der zweiten elektrisch leitfähigen Schicht 3b durch die Schutzlackschicht 6 elektrisch voneinander isoliert sind. Weiter ist es möglich, dass die Leiterbahnen der ersten und der zweiten elektrisch leitfähigen Schicht rautenförmig ausgeformt sind. Weiter ist es möglich, dass die Leiterbahnen der ersten elektrisch leitfähigen Schicht 3a die y-Sensoren eines Touchsensors bilden und die Leiterbahnen der zweiten elektrisch leitfähigen Schicht 3b die x-Sensoren des Touchsensors bilden. Auch ist möglich, dass die Leiterbahnen der ersten elektrisch leitfähigen Schicht und die Leitbahnen der zweiten elektrisch leitfähigen Schicht unterschiedlich ausgeformt sind, insbesondere dass die Leiterbahnen unterschiedliche Breiten und/oder unterschiedliche Abstände aufweisen. Bezüglich der weiteren Ausgestaltung der Leiterbahnen ist hier auf obige Ausführungen verwiesen.

Wie in Fig. 1e gezeigt, ist weist die Folie 1 die Haftvermittlungsschicht 4 in dem Bereich 22 auf und in dem Bereich 23 nicht auf. Auf die Kontaktverstärkungsschicht 7 ist in dem Kontaktierungsbereich 20 weiter die Ablöseschicht 5 aufgebracht, wobei die Ablöseschicht den Kontaktierungsbereich 20 vollflächig überdeckt. Die Folie 1 haftet nach Applikation auf ein Zielsubstrat in dem Bereich 22 auf dem Zielsubstrat an und in dem Bereich 23, welcher den Bereich 20 umfasst, haftet die Folie 1 nicht auf dem Zielsubstrat an, so dass der Kontaktierungsbereich 20 zugänglich ist.

Bezüglich der Ausgestaltung der weiteren Schichten in Fig. 1e wird hier auf obige Ausführungen verwiesen.

Fig. 1f zeigt eine Folie 1 mit einem Trägersubstrat 2, einer ersten elektrisch leitfähigen Schicht 3a, einer dielektrischen Schicht 8, einer zweiten elektrisch leitfähigen Schicht 3b, einer Schutzlackschicht 6, einer Haftvermittlungsschicht 4, einer Ablöseschicht 5 und einer Kontaktverstärkungsschicht 7.

Bezüglich der Ausgestaltung der Schichten 2, 3a, 3b, 4, 5, 6 und 7 in Fig. 1f wird hier auf obige Ausführungen verwiesen. Wie in Fig. 1f gezeigt, ist zwischen der ersten elektrisch leitfähigen Schicht 3a und der zweiten elektrisch leitfähigen Schicht 3b eine dielektrische Schicht 8 angeordnet. Bei der dielektrischen Schicht handelt es sich bevorzugt um eine Schicht aus PE, PTFE oder Keramik mit einer Schichtdicke zwischen 0,1 µm und 100 µm, bevorzugt zwischen 0,25 µm und 25 µm, weiter bevorzugt zwischen 0,5 µm und 10 µm. Bei der in Fig. 1f gezeigten dielektrischen Schicht handelt es sich um eine Schicht aus PE mit einer Schichtdicke von 6 µm. Weiter es möglich, dass die Schicht 8 eine halbleitende oder isolierende Schicht ist.

Wie in Fig. 1f gezeigt, ist weist die Folie 1 die Haftvermittlungsschicht 4 in dem Bereich 22 auf und in dem Bereich 23 nicht auf. Die Ablöseschicht 5 ist, wie in Fig. 1f gezeigt, sowohl in dem Kontaktierungsbereich 20 als auch in dem an den Kontaktierungsbereich 20 angrenzenden Bereich 24 vorhanden. Die Ablöseschicht ist in den Bereichen 20 und 24 vollflächig aufgebracht. Die Folie 1 haftet nach Applikation auf ein Zielsubstrat in dem Bereich 22 auf dem Zielsubstrat an und in dem Bereich 23, welcher die Bereiche 20 und 24 umfasst, haftet die Folie 1 nicht auf dem Zielsubstrat an, so dass der Kontaktierungsbereich 20 zugänglich ist. Weiter kann die Folie 1 nach Applikation auf das Zielsubstrat in dem Bereich 23 angehoben werden, so dass eine sichere und robuste Kontaktierung ermöglicht wird. Der Bereich 24 kann hierbei als bewegliches Scharnier dienen, um den Kontaktierungsbereich 20 anzuheben.

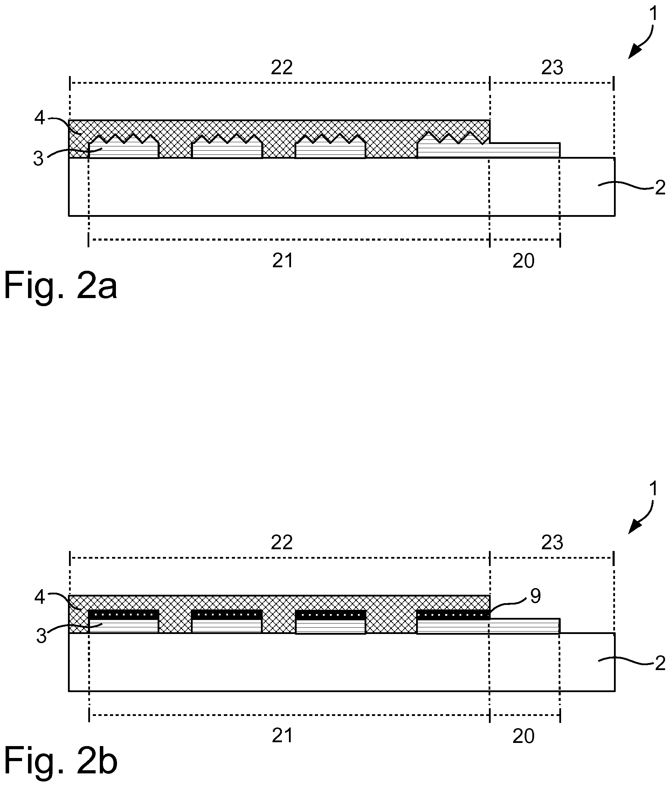

Fig. 2a und Fig. 2b zeigen weitere Ausführungsvarianten der erfindungsgemäßen Folie 1, welche ein Trägersubstrat 2, eine elektrisch leitfähige Schicht 3 und eine Haftvermittlungsschicht 4 umfassen.

In die in Fig. 2a gezeigt elektrische leitfähige Schicht 3 sind Oberflächenreliefstrukturen abgeformt. Die elektrisch leitfähige Schicht 3 in Fig. 2a ist beispielsweise eine Metallschicht aus Aluminium, welche bereichsweise zunächst vollflächig auf das Trägersubstrat 2 aufgebracht wird. Anschließend können die Oberflächenreliefstrukturen der Metallschicht 3 durch Ätzen des Metalls mittels Säure, durch Laserstrukturierung der Oberfläche oder durch mechanische Oberflächenbehandlung erzeugt werden. Die vorgenannte Laserstrukturierung der Oberfläche erfolgt beispielsweise durch Abtragung, insbesondere Ablation, des Metalls an der Oberfläche der Metallschicht mittels eines Festkörperlasers, wie einem Nd:YAG-Laser. Bei der vorgenannten mechanischen Oberflächenbehandlung handelt es sich bevorzugt um Reiben, Schmirgeln, Bürsten oder ähnliche mechanische Aufrauverfahren. Eine derartige Oberflächenbehandlung der Metallschicht kann vollflächig auf der gesamten Metallschicht 3 erfolgen oder lediglich bereichsweise erfolgen. In der Fig. 2a weist die Metallschicht 3 in dem gesamten Funktionsbereich 21 Oberflächenreliefstrukturen auf, nicht jedoch im Kontaktierungsbereich 20. Nach der Oberflächenbehandlung wird die Metallschicht 3 strukturiert, so dass sich die Leiterbahnen ergeben. Die Metallschicht 3 kann beispielsweise durch Demetallisierungsverfahren, wie beispielsweise Ätzen oder Waschen, strukturiert, das heißt bereichsweise entfernt werden, so dass sich die Leiterbahnen ergeben.

Wie in Fig. 2a gezeigt, ist die Haftvermittlungsschicht 4 in dem Bereich 22 vorhanden und in dem Bereich 23 nicht vorhanden, so dass die Folie 1 nach Applikation auf ein Zielsubstrat in dem Bereich 22 auf dem Zielsubstrat anhaftet und in dem Bereich 23, welcher den Kontaktierungsbereich 20 umfasst, nicht auf dem Zielsubstrat anhaftet. Der Kontaktierungsbereich 20 ist somit nach Applikation auf das Zielsubstrat zugänglich.

Bezüglich der weiteren Ausgestaltung der Schichten 3 und 4 bzw. der Ausgestaltung der Schicht 2 in Fig. 2a wird hier auf obige Ausführungen verwiesen.

Die in Fig. 2b gezeigte Folie 1 entspricht der in Fig. 2a gezeigten Folie 1 mit dem Unterschied, dass die elektrisch leitfähige Schicht 3 keine Oberflächenreliefstrukturen aufweist, sondern dass auf die elektrisch leitfähige Schicht 3 eine Dunkelungsschicht 9 aufgebracht ist. Bei der Dunkelungsschicht 9 handelt es sich bevorzugt um eine Schicht aus einer dunklen Farbe, welche auf die Dunkelungsschicht 9 einfallendes Licht absorbiert. Die Dunkelungsschicht 9 kann hierbei mittels herkömmlicher Beschichtungsverfahren, wie Drucken, Rakeln oder Schleudern aufgebracht werden. Auch kann die elektrisch leitfähige Schicht 3 und das Trägersubstrat 2 beispielsweise eine unterschiedliche Benetzbarkeit aufweisen, wobei die Benetzbarkeit eines die Dunklungsschicht 9 bereitstellenden Farblacks so gewählt ist, dass dieser ausschließlich auf den von der elektrisch leitfähigen Schicht 3 gebildeten Leiterbahnen gut haftet. Die Dunkelungsschicht 9 kann auch mittels eines Thermotransferverfahrens selektiv auf die Leiterbahnen aufgebracht werden. So können die Leiterbahnen selektiv durch eine Lampe aufgeheizt werden, wobei sich aufgeschmolzenes farbgebendes Material bevorzugt auf den erhitzten Leiterbahnen ablagert. Es ist jedoch auch möglich, dass es sich bei der Schicht 9 um eine Schicht mit Licht streuenden Eigenschaften handelt. Hierzu weist die Schicht mit Licht streuenden Eigenschaften vorzugsweise eine Oberflächenreliefstruktur, insbesondere eine Mattstruktur mit stochastisch gewählten Reliefparametern, auf. Es ist jedoch weiter möglich, dass es sich bei der Schicht 9 um eine Schicht handelt, welche Licht absorbierende Oberflächenreliefstrukturen, wie beispielsweise Mottenaugenstrukturen, aufweist.

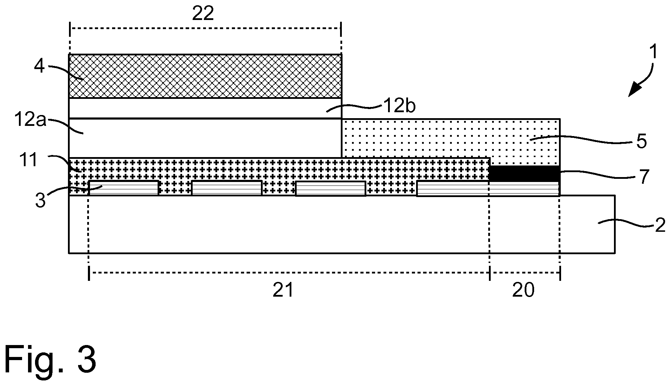

Fig. 3 zeigt eine Folie 1 mit einem Trägersubstrat 2, einer elektrisch leitfähigen Schicht 3, einer Zwischenhaftschicht 11, den Dekorschicht 12a und 12b, einer Haftvermittlungsschicht 4, einer Ablöseschicht 5 und einer Kontaktverstärkungsschicht 7.

Die Zwischenhaftschicht 11 ist, wie in Fig. 3 gezeigt, auf der dem Trägersubstrat 2 abgewandten Seite der elektrisch leitfähigen Schicht angeordnet. Weiter überdeckt die Zwischenhaftschicht 11 den von der elektrisch leitfähigen Schicht 3 gebildeten Funktionsbereich 21, nicht jedoch den Kontaktierungsbereich 20. Weiter ist die die Zwischenhaftschicht 11 zwischen der elektrisch leitfähigen Schicht und der ersten Dekorschicht 12a angeordnet.

Bei der Zwischenhaftschicht 11 handelt es sich bevorzugt um eine Primerschicht und/oder eine Kleberschicht aus einem Heißkleber, einem Kaltkleber oder einem strahlungshärtbaren Kleber, insbesondere einem mittels elektromagnetischer Strahlung und/oder Elektronenstrahlung härtbaren Kleber. Auch ist es möglich, dass die Zwischenhaftschicht 11 PMMA, Polyester, PU oder PVC umfasst. Vorzugsweise wird die Zwischenhaftschicht 11 mittels Tiefdruck, Siebdruck, Hochdruck oder Gusstechniken in einer Schichtdicke zwischen 0,1 µm und 50 µm, bevorzugt zwischen 0,25 µm und 25 µm, weiter bevorzugt zwischen 0,5 µm und 7 µm aufgebracht. Bei der in Fig. 3 gezeigten Zwischenhaftschicht 11 handelt es sich um eine Heißkleberschicht mit einer Schichtdicke von 5 µm.

Wie in Fig. 3 gezeigt sind die Dekorschichten 12a und 12b im selben Bereich 22 angeordnet wie die Haftvermittlungsschicht 4, so dass die Dekorschichten 12a und 12b bei Betrachtung senkrecht zu einer von dem Trägersubstrat 2 aufgespannten Ebene deckungsgleich mit der Haftvermittlungsschicht 4 und/oder der Zwischenhaftschicht 11 angeordnet sind. Hierdurch wird erreicht, dass der Kontaktierungsbereich trotz der zusätzlichen Dekorschichten 12a und 12b für eine sichere und robuste Kontaktierung der elektrischen Funktionsstruktur zugänglich ist.

Bei der in Fig. 3 gezeigten Dekorschicht 12a handelt es sich vorzugsweise um eine Replizierlackschicht. Die Replizierlackschicht besteht beispielsweise aus einem thermoplastischen Lack, in den mittels Hitze und Druck durch Einwirkung eines Prägewerkzeugs zumindest bereichsweise eine Oberflächenreliefstruktur abgeformt ist. Weiter ist es auch möglich, dass die Replizierlackschicht von einem UV-vernetzbaren Lack gebildet wird und die Oberflächenreliefstruktur mittels UV-Replikation in die Replizierlackschicht abgeformt wird. Dabei wird die Oberflächenreliefstruktur durch Einwirkung eines Prägewerkzeugs auf die ungehärtete Replizierlackschicht abgeformt und die Replizierlackschicht unmittelbar während oder nach der Abformung durch Bestrahlung mit UV-Licht gehärtet. Weiter ist es von Vorteil, dass die Replizierlackschicht eine Schichtdicke zwischen 0,2 µm und 4 µm, bevorzugt 0,3 µm und 2 µm, weiter bevorzugt 0,4 µm und 1,5 µm, aufweist. Bei der in Fig. 3 gezeigten Dekorschicht 12a handelt es sich um eine Replizierlackschicht aus einem UV-vernetzbaren Lack mit einer Schichtdicke von 1,25 µm.

Bei der in Fig. 3 gezeigten Dekorschicht 12b handelt es sich vorzugsweise um eine Reflexionsschicht. Bei der Reflexionsschicht handelt es sich vorzugsweise um eine Metallschicht aus Chrom, Aluminium, Gold, Kupfer, Silber oder einer Legierung solcher Metalle, die im Vakuum in einer Schichtdicke von 0,01 µm bis 0,15 µm aufgedampft wird. Weiter ist es auch möglich, dass die Reflexionsschicht von einer transparenten Reflexionsschicht gebildet wird, vorzugsweise einer dünnen oder fein strukturierten metallischen Schicht oder einer dielektrischen HRI- oder LRI-Schicht *(engl.* high refraction index - HRI, low refraction index - LRI). Eine solche dielektrische Reflexionsschicht besteht beispielsweise aus einer aufgedampften Schicht aus einem Metalloxid, Metallsulfid, z.B. Titanoxid, etc. mit einer Dicke von 10 nm bis 150 nm. Weiter ist es auch möglich, dass die Reflexionsschicht lediglich bereichsweise ausgeführt ist. So ist es möglich, dass eine Teilmetallisierung vorliegt, welche beispielsweise einen metallischen Text oder Nanotext bildet. Bei der in Fig. 3 gezeigten Dekorschicht 12b handelt es sich um eine Metallschicht aus Kupfer in einer Schichtdicke von 10 nm.

Bezüglich der Ausgestaltung der weiteren Schichten in Fig. 3 wird hier auf obige Ausführungen verwiesen.

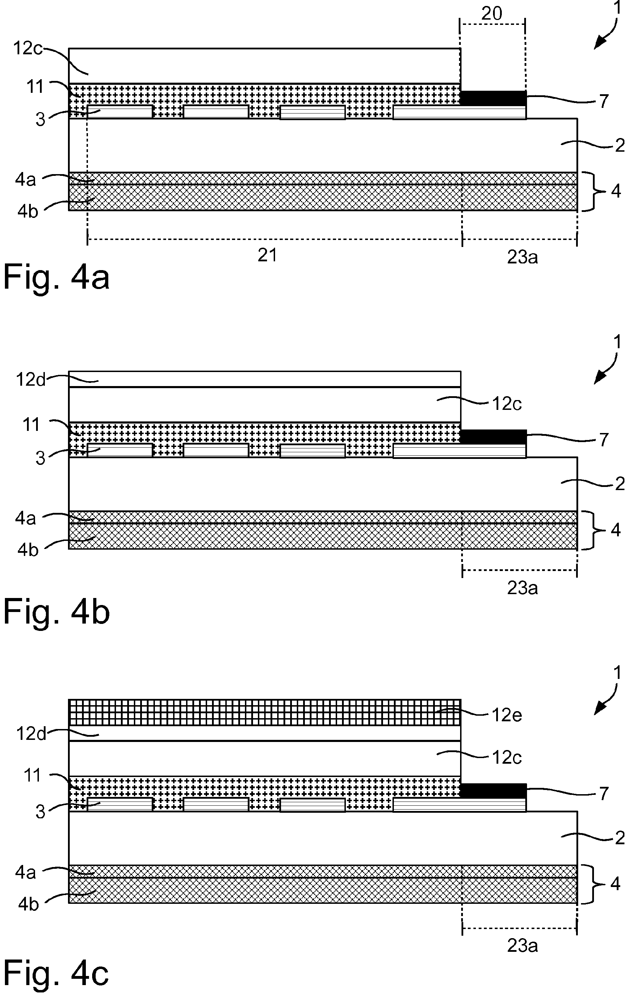

Fig. 4a zeigt eine Folie 1 mit einem Trägersubstrat 2, einer elektrisch leitfähigen Schicht 3, einer Zwischenhaftschicht 11, einer Dekorschicht 12c, einer Haftvermittlungsschicht 4 und einer Kontaktverstärkungsschicht 7.

Wie in Fig. 4a gezeigt, ist die Haftvermittlungsschicht 4 auf der der elektrisch leitfähigen Schicht abgewandten Seite des Trägersubstrats 2 angeordnet. Weiter ist die die Haftvermittlungsschicht 4 bei Betrachtung senkrecht zu einer von dem Trägersubstrat 2 aufgespannten Ebene vollflächig aufgebracht. Es ist jedoch auch möglich, dass die Haftvermittlungsschicht 4 in dem Bereich 23a, welcher den Kontaktierungsbereich 20 der elektrisch leitfähigen Schicht 3 überlappt, nicht angeordnet ist. Weiter umfasst die Haftvermittlungsschicht 4, wie in Fig. 4a gezeigt die Schichten 4a und 4b. Hierdurch ist es möglich die Anhaftung der Folie 1 auf ein Zielsubstrat zu optimieren. So kann die Schicht 4a für das Material des Trägersubstrats 2 optimiert sein und die Schicht 4b für das Material des Zielsubstrats, auf welches die Folie 1 mittels der Haftvermittlungsschicht 4 appliziert werden soll, optimiert sein.

Die Zwischenhaftschicht 11 ist, wie in Fig. 4a gezeigt, auf der dem Trägersubstrat 2 abgewandten Seite der elektrisch leitfähigen Schicht 3 angeordnet. Weiter überdeckt die Zwischenhaftschicht 11 den von der elektrisch leitfähigen Schicht 3 gebildeten Funktionsbereich 21, nicht jedoch den Kontaktierungsbereich 20. Weiter ist die die Zwischenhaftschicht 11 zwischen der elektrisch leitfähigen Schicht und der ersten Dekorschicht 12c angeordnet.

Die Dekorschicht 12c ist, wie in Fig. 4a gezeigt, im selben Bereich angeordnet sind wie die Zwischenhaftschicht 11, so dass die Dekorschicht 12c bei Betrachtung senkrecht zu einer von dem Trägersubstrat 2 aufgespannten Ebene deckungsgleich mit der Zwischenhaftschicht 11 angeordnet ist. Hierdurch wird insbesondere erreicht, dass der Kontaktierungsbereich 20 trotz der zusätzlichen Dekorschicht 12c sicher und robust kontaktiert werden kann.

Bei der Dekorschicht 12c handelt es sich es sich vorzugsweise um eine transparente Farblackschicht. Die Dekorschicht 12c enthält hierzu Farbstoffe und/oder Pigmente, welche der Dekorschicht 12c beispielsweise einen Farbfiltereffekt verleihen.

Vorzugsweise bildet die Dekorschicht 12c ein Muster aus. Ein Muster kann beispielsweise ein graphisch gestalteter Umriss, eine figürliche Darstellung, ein Bild, ein Motiv, ein Symbol, ein Logo, ein Portrait, ein alphanumerisches Zeichen, ein Text und dergleichen sein. Auch ist es möglich, dass das Muster unterschiedlich gefärbte Musterelemente aufweist.

Es ist jedoch auch möglich, dass es sich bei der Dekorschicht 12c um eine gedruckte Schicht, insbesondere aus einer opaken und/oder farbigen Tinte handelt. Die gedruckte Schicht kann beispielsweise einen Rahmen um den Funktionsbereich 21 bilden, oder musterförmig, beispielsweise linienförmig gedruckt sein.

Bezüglich der Ausgestaltung der weiteren Schichten in Fig. 4a wird hier auf obige Ausführungen verwiesen.

Fig. 4b zeigt eine Folie 1 mit einem Trägersubstrat 2, einer elektrisch leitfähigen Schicht 3, einer Zwischenhaftschicht 11, den Dekorschichten 12c und 12d, einer Haftvermittlungsschicht 4 und einer Kontaktverstärkungsschicht 7.

Bei der Dekorschicht 12d handelt es sich bevorzugt um eine transparente Trägerschicht aus PET, PMMA, PC, ABS, PU, Glas, Gewebe oder einem Hybridmaterial, welches Kunststoffschichten und Schichten aus Gewebe, insbesondere Fasermaterial, wie beispielsweise Papier, Baumwolle, oder andere Natur- oder Kunstfasern, umfasst. Vorzugsweise weist die Trägerschicht eine Schichtdicke zwischen 2 µm und 250 µm, bevorzugt zwischen 23 µm und 125 µm, auf. Bei der in Fig. 4b gezeigten Dekorschicht 12d handelt es sich um eine transparente Schicht aus PET mit einer Schichtdicke von 25 µm. Wie in Fig. 4b gezeigt ist auch die Dekorschicht 12d deckungsgleich mit der Zwischenhaftschicht 11 angeordnet, so dass der Kontaktierungsbereich weiterhin zugänglich bleibt und die elektrische Funktionsstruktur sicher und robust kontaktiert werden kann.

Bezüglich der Ausgestaltung der weiteren Schichten in Fig. 4b wird hier auf obige Ausführungen verwiesen.

Fig. 4c zeigt eine Folie 1 mit einem Trägersubstrat 2, einer elektrisch leitfähigen Schicht 3, einer Zwischenhaftschicht 11, den Dekorschichten 12c, 12d und 12e, einer Haftvermittlungsschicht 4 und einer Kontaktverstärkungsschicht 7.

Bei der Dekorschicht 12e handelt es sich bevorzugt um eine transparente Farblackschicht. Die Dekorschicht 12e enthält hierzu Farbstoffe und/oder Pigmente, welche der Dekorschicht 12e beispielsweise einen Farbfiltereffekt verleihen. Ist beispielsweise die Dekorschicht 12c ebenfalls als transparente Farblackschicht ausgeformt, wie oben erläutert, so wird durch die Interaktion der beiden Dekorschichten 12c und 12e für den Betrachter ein Farbfiltereffekt, insbesondere ein Farbmischeffekt, erzeugt. Es ist jedoch auch beispielsweise möglich, dass die Dekorschicht 12c und die Dekorschicht 12e gedruckte Schichten sind, welche jeweils ein Muster ausbilden. Die beiden Dekorschichten 12c und 12e können hierbei derart miteinander interagieren, dass für den Betrachter ein Moiré-Effekt erzeugt ist und damit ein vorbestimmtes Moiré-Muster erkennbar wird. Die Dekorschicht 12d kann hierbei beispielsweise als transparente Abstandsschicht dienen. Auch die Dekorschicht 12e ist, wie in Fig. 4b gezeigt, deckungsgleich mit der Zwischenhaftschicht 11 angeordnet, so dass der Kontaktierungsbereich zugänglich bleibt.

Bezüglich der Ausgestaltung der weiteren Schichten in Fig. 4c wird hier auf obige Ausführungen verwiesen.

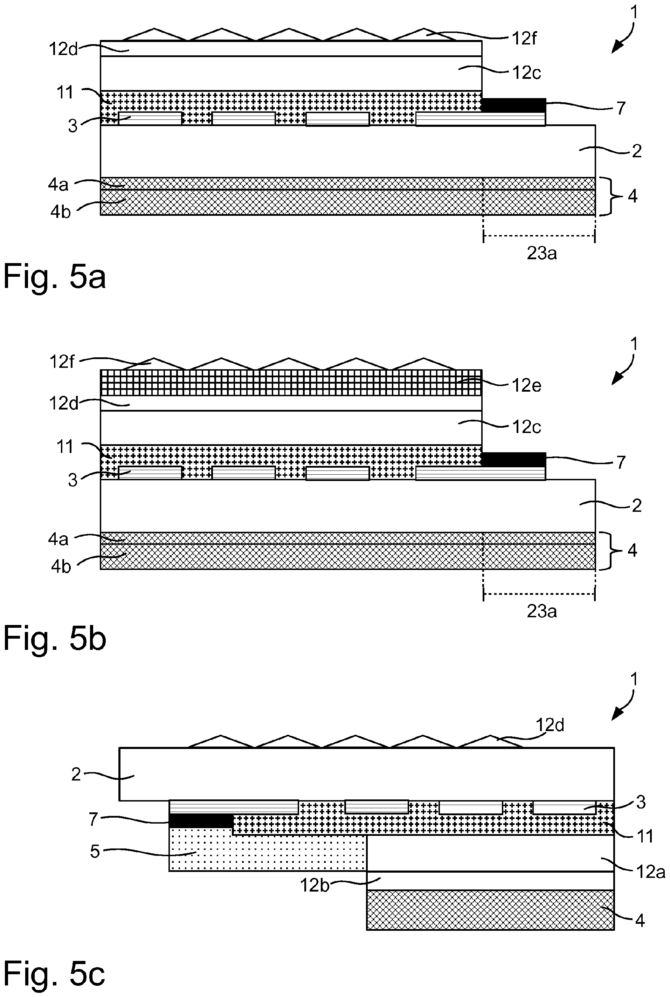

Fig. 5a zeigt eine Folie 1 mit einem Trägersubstrat 2, einer elektrisch leitfähigen Schicht 3, einer Zwischenhaftschicht 11, den Dekorschichten 12c, 12d und 12f, einer Haftvermittlungsschicht 4 und einer Kontaktverstärkungsschicht 7.

Die Haftvermittlungsschicht 4 kann, wie in Fig. 5a gezeigt, vollflächig aufgebracht sein. Es ist jedoch auch möglich, dass die Haftvermittlungsschicht 4 in dem Bereich 23a nicht vorhanden ist. Hierdurch wird die Zugänglichkeit des Kontaktierungsbereichs weiter verbessert, da der entsprechende Flächenbereich 23a beidseitig frei bleibt, welche in folgenden Verarbeitungsschritten auf besonders einfache Weise beispielsweise mittels einer Steckverbindung elektrisch kontaktiert werden kann.

Bei der Dekorschicht 12f handelt es sich bevorzugt um eine optisch transparente Lackschicht, welche partiell gedruckt ist. Die Dekorschicht 12f erzeugt aufgrund der Oberflächenreliefstrukturen einen haptischen und/oder taktilen Effekt. Die Dekorschicht 12f ist also haptisch und/oder taktil erfassbar. Weiter es auch möglich, dass die Oberflächenreliefstrukturen der Dekorschicht 12f diffraktive und/oder refraktive optische Effekte erzeugen. Auch ist es möglich, dass die Oberflächenreliefstrukturen durch mechanische Strukturierung oder optische Strukturierung, insbesondere mittels eines Lasers, der Schichtoberfläche erzeugt werden. Eine mechanische Strukturierung kann eine Replikation mit einem entsprechend ausgeformten Prägewerkzeug sein. Eine optische Strukturierung kann eine Laserablation sein. Weiterhin können auch photolithographische Verfahren zur Erzeugung dieser Strukturen verwendet werden. Die Strukturtiefen der Oberflächenreliefstrukturen für eine haptische und/oder taktile Erfassbarkeit liegen bevorzugt zwischen 1 µm bis 2000 µm, weiter bevorzugt zwischen 50 µm bis 2000 µm. Strukturtiefen für diffraktive oder refraktive Effekte liegen bevorzugt zwischen 0,1 µm bis 20 µm, weiter bevorzugt 0,1 µm bis 5 µm.

Wie in Fig. 5a gezeigt, ist die Dekorschicht 12f auf der Dekorschicht 12d angeordnet. Weiter sind die Dekorschichten 12c, 12d und 12f auf derselben Seite des Trägersubstrats 2 angeordnet.

Bezüglich der Ausgestaltung der weiteren Schichten in Fig. 5a wird hier auf obige Ausführungen verwiesen.

Fig. 5b zeigt eine Folie 1 mit einem Trägersubstrat 2, einer elektrisch leitfähigen Schicht 3, einer Zwischenhaftschicht 11, den Dekorschichten 12c, 12d, 12e und 12f, einer Haftvermittlungsschicht 4 und einer Kontaktverstärkungsschicht 7.

Bezüglich der Ausgestaltung der Schichten in Fig. 5b wird hier auf obige Ausführungen verwiesen.

Fig. 5c zeigt eine Folie 1 mit einem Trägersubstrat 2, einer elektrisch leitfähigen Schicht 3, einer Zwischenhaftschicht 11, den Dekorschichten 12a, 12b und 12f, einer Haftvermittlungsschicht 4, einer Ablöseschicht 5 und einer Kontaktverstärkungsschicht 7.

Wie in Fig. 5c gezeigt, ist die Dekorschicht 12f auf der der elektrisch leitfähigen Schicht 3 abgewandten Seite des Trägersubstrats 2 angeordnet. Die Dekorschichten 12a und 12b hingegen sind auf der der elektrisch leitfähigen Schicht 3 zugewandten Seite des Trägersubstrats 2 bzw. auf der dem Trägersubstrat 2 abgewandten Seite der elektrisch leitfähigen Schicht 3 angeordnet.

Bezüglich der Ausgestaltung der Schichten in Fig. 5c wird hier auf obige Ausführungen verwiesen.

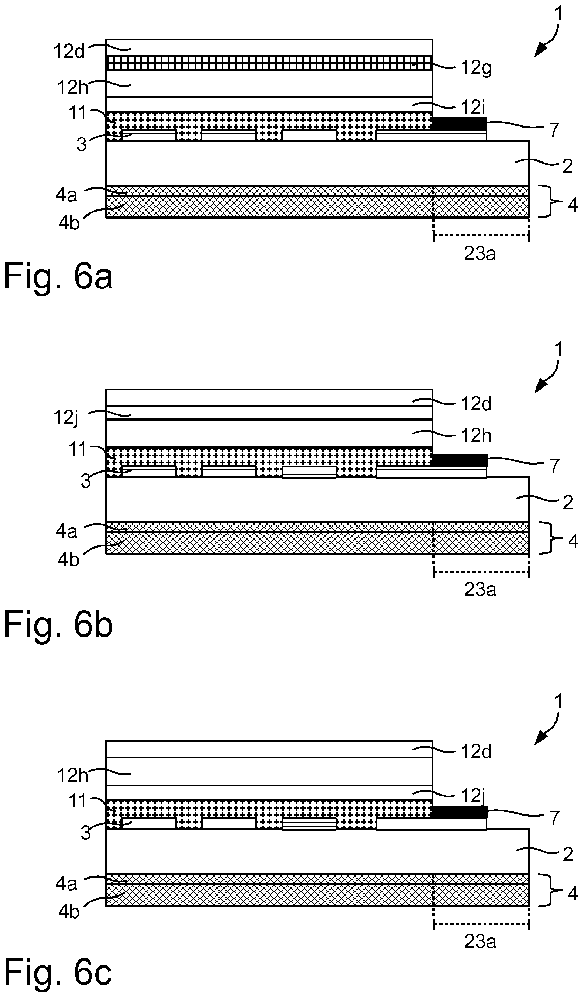

Fig. 6a zeigt eine Folie 1 mit einem Trägersubstrat 2, einer elektrisch leitfähigen Schicht 3, einer Zwischenhaftschicht 11, den Dekorschichten 12d, 12g, 12h und 12i, einer Haftvermittlungsschicht 4 und einer Kontaktverstärkungsschicht 7.

Die Dekorschichten 12d, 12g, 12h und 12i sind, wie in Fig. 6a gezeigt, im selben Bereich angeordnet sind wie die Zwischenhaftschicht 11, so sind die Dekorschichten 12d, 12g, 12h und 12i bei Betrachtung senkrecht zu einer von dem Trägersubstrat 2 aufgespannten Ebene deckungsgleich mit der Zwischenhaftschicht 11 angeordnet. Hierdurch wird insbesondere erreicht, dass der Kontaktierungsbereich 20 trotz der zusätzlichen Dekorschichten 12d, 12g, 12h und 12i sicher und robust kontaktiert werden kann.

Die Dekorschichten 12g, 12h und 12i bilden hierbei beispielsweise ein Dünnfilmschichtsystem aus. Bei der Dekorschicht 12g handelt es sich um eine semitransparente Reflexionsschicht, vorzugsweise um eine sehr dünne und damit halbtransparente Metallschicht, beispielsweise eine Schicht aus Chrom mit einer Schichtdicke von 5 nm. Bei der Dekorschicht 12h handelt es sich um eine Distanzschicht, vorzugsweise aus einem transparenten Dielektrikum, beispielsweise MgF₂, SiO₂ oder einem Polymer. Die Schichtdicke der Distanzschicht ist hierbei vorzugsweise so gewählt, dass diese für einen definierten Blickwinkel die λ/2 oder λ /4 Bedingung für λ im Bereich der Wellenlänge des sichtbaren Lichts erfüllt, d. h. dass die optische Dicke der Dekorschicht 12h im Bereich der halben oder viertel Lichtenwellenlängen liegt und damit bei der Interferenz des von der Grenzfläche zwischen der Dekorschicht 12g und der Distanzschicht 12h einerseits und der Grenzfläche zwischen der Distanzschicht 12h und der Dekorschicht 12i andererseits rückreflektierten Lichts ein blickwinkelabhängiger Farbverschiebungseffekt im Bereich des für das menschliche Auge sichtbaren Lichts generiert wird. Bei der Dekorschicht 12i handelt es sich um eine metallische Reflexionsschicht, vorzugsweise um eine opake Metallschicht, beispielsweise eine Schicht aus Aluminium mit einer Schichtdicke von 30 nm.

Bezüglich der Ausgestaltung der weiteren Schichten in Fig. 6a wird hier auf obige Ausführungen verwiesen.

Fig. 6b und Fig. 6c zeigen jeweils eine Folie 1 mit einem Trägersubstrat 2, einer elektrisch leitfähigen Schicht 3, einer Zwischenhaftschicht 11, den Dekorschichten 12d, 12j, und 12h, einer Haftvermittlungsschicht 4 und einer Kontaktverstärkungsschicht 7.

Bei der Dekorschicht 12h handelt es sich um eine transparente Schicht, welche als Distanzschicht dient. Durch die Distanzschicht 12h wird eine optische Tiefenwirkung erzeugt. Wie in den Fig. 6b und Fig. 6c gezeigt, kann die Dekorschicht 12h in Betrachtungsrichtung hinter und/oder vor der Dekorschicht 12j angeordnet sein. Es ist jedoch auch möglich, dass die Dekorschicht 12h beispielsweise zwischen zwei Dekorschichten angeordnet ist. Die optisch transparente Schicht 12h weist eine Schichtdicke auf, welche ein Vielfaches der Schichtdicke der Dekorschicht 12j beträgt. Es ist jedoch auch möglich, dass die Schichtdicke der Dekorschicht 12h im Wesentlichen gleich der Schichtdicke der Dekorschicht 12j ist. Vorzugsweise beträgt die Schichtdicke der optisch transparenten Schichten 12h zwischen 0,5 µm und 500 µm, weiter bevorzugt zwischen 10 µm und 100 µm. Die optisch transparente Schichten 12h besteht beispielsweise aus optisch transparenten Lacken und/oder optisch transparenten Filmen, insbesondere aus PET, PMMA oder PC.

Bei der Dekorschicht 12j kann es sich beispielsweise um eine metallische Schicht handeln, beispielsweise eine Schicht aus Aluminium mit einer Schichtdicke von 20 nm. Vorteilhafterweise ist die Dekorschicht 12j bereichsweise ausgeführt und bildet ein Muster aus.

Bezüglich der Ausgestaltung der weiteren Schichten in Fig. 6b und Fig. 6c wird hier auf obige Ausführungen verwiesen.

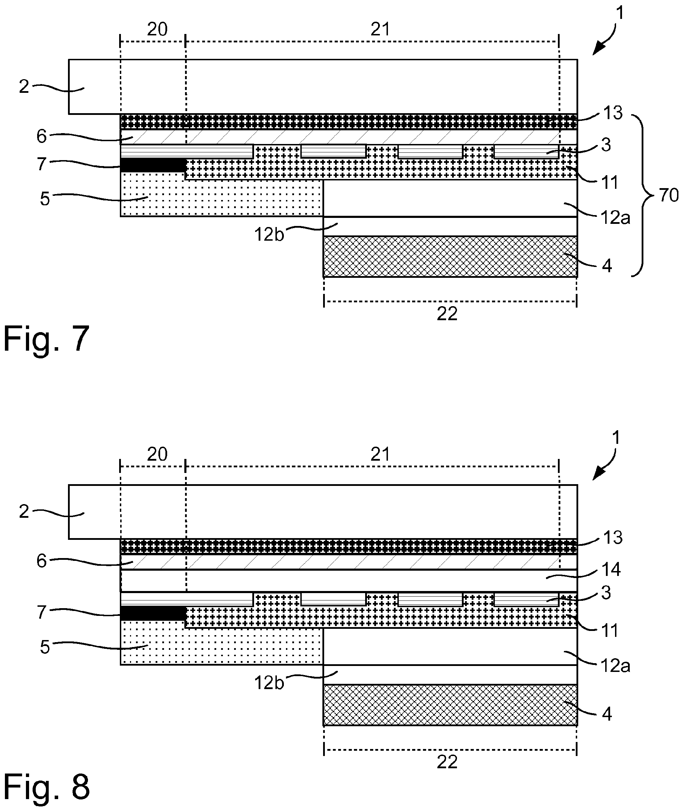

Fig. 7 zeigt eine Folie 1 mit einem Trägersubstrat 2, einer Trennschicht 13, einer Schutzlackschicht 6, einer elektrisch leitfähigen Schicht 3, einer Zwischenhaftschicht 11, einer Ablöseschicht 5, den Dekorschichten 12a und 12b, einer Haftvermittlungsschicht 4 und einer Kontaktverstärkungsschicht 7.

Bei der Trennschicht 13 handelt es sich bevorzugt um eine Wachsschicht und/oder eine Polymerschicht aus beispielsweise Acrylaten und/oder Melaminformaldehydharz-vernetzten Lacken. Vorzugsweise weist die Trennschicht 13 eine Schichtdicke von weniger als 1 µm auf. Bei der in Fig. 7 gezeigten Trennschicht 13 handelt es sich um eine Wachsschicht mit einer Schichtdicke von 0,5 µm.

So ist es möglich, dass es sich bei der Folie 1 um eine Transferfolie handelt, welche eine Trägerlage, insbesondere das Trägersubstrat 2, sowie eine von der Trägerlage, insbesondere dem Trägersubstrat 2, ablösbare Transferlage 70 aufweist. Vorteilhafterweise ist zwischen der Trägerlage, insbesondere dem Trägersubstrat 2, und der Transferlage 70 die Trennschicht 13 angeordnet, welche ein Ablösen der Transferlage 70 von der Trägerlage, insbesondere dem Trägersubstrat 2, ermöglicht. Hierdurch ist es möglich, nur die Transferlage 70 auf ein Zielsubstrat, insbesondere mittels Heißprägen, zu applizieren. **In** Fig. 7 wird die Transferlage 70 von der Trennschicht 13, der Schutzlackschicht 6, der elektrisch leitfähigen Schicht 3, der Zwischenhaftschicht 11, der Ablöseschicht 5, den Dekorschichten 12a und 12b, der Haftvermittlungsschicht 4 und der Kontaktverstärkungsschicht 7 ausgebildet. Die Trennschicht 13 kann nach Applikation der der Transferlage der Folie 1 auf ein Zielsubstrat entfernt werden.

Weiter ist es möglich, dass es sich bei der Trennschicht 13 um eine ein- oder mehrschichtige Trennschicht handelt. Vorzugsweise ist die Trennschicht 13 zwischen dem Trägersubstrat 2 und der Schutzlackschicht 6 angeordnet. Hierdurch ist es möglich, dass nach Applikation der Folie 1 auf ein Zielsubstrat und nach Entfernen des Trägersubstrats 2 und der Trennschicht 13 die Schutzlackschicht 6 die äußerste Lage bildet und die elektrisch leitfähige Schicht 3 vor Umwelteinflüssen schützt. Weiter kann hierdurch erreicht werden, dass das Trägersubstrat 2 nach Applikation der Folie 1 auf das Zielsubstrat abgelöst werden kann. Hierdurch kann eine noch bessere Verformbarkeit und/oder Verdehnbarkeit der applizierten Folie erreicht werden, da das vergleichsweise dicke und weniger verform- und/oder verdehnbare Trägersubstrat 2 entfernt wurde. Die die Folie 1 schützende Funktion übernimmt die Schutzlackschicht 6.

Bezüglich der Ausgestaltung der weiteren Schichten in Fig. 7 wird hier auf obige Ausführungen verwiesen.

Fig. 8 zeigt eine Folie 1 mit einem Trägersubstrat 2, einer Trennschicht 13, einer Schutzlackschicht 6, einer Grundierungslackschicht 14, einer elektrisch leitfähigen Schicht 3, einer Zwischenhaftschicht 11, einer Ablöseschicht 5, den Dekorschichten 12a und 12b, einer Haftvermittlungsschicht 4 und einer Kontaktverstärkungsschicht 7.

Vorteilhafterweise handelt es sich bei der Grundierungslackschicht 14 um eine zur Metallisierung bedampfbare Grundierungslackschicht, welche insbesondere zwischen der Schutzlackschicht 6 und der elektrisch leitfähigen Schicht 3 angeordnet ist.

Bei der Grundierungslackschicht 14 handelt es sich bevorzugt um eine Schicht aus Polymeren und/oder Copolymeren, insbesondere umfassend Polymethyl(meth)acrylat (PMMA), Polyester, Polyurethan (PU) oder Polyvinylchlorid (PVC). Weniger bevorzugt weist die Grundierungslackschicht 14 Naturharze, vorzugsweise Kolophonium, Phenolharze, Isocyanat (NCO)-vernetzte Bindemittel, beispielsweise Melamin-Formaldehyd-Kondensationsharze (MF), Melamin-Phenol-Formaldehyd-Harze (MPF), Melamin-Polyester, Melamin-Harnstoff-Formaldehyd-Harze (UMF), Poly(organo)siloxanen oder strahlenhärtende Bindemittel auf.

Weiter weist die Grundierungslackschicht 14 bevorzugt eine Schichtdicke zwischen 0,1 µm und 5 µm, weiter bevorzugt zwischen 0,1 µm und 2 µm, auf.

Bei der in Fig. 8 gezeigten Grundierungslackschicht 14 handelt es sich um eine Schicht aus PMMA mit einer Schichtdicke von 1,5 µm.

Vorteilhafterweise kann vorgesehen sein, dass die Haftkraft zwischen dem Trägersubstrat 2 und der Schutzlackschicht 6 aufgrund der zwischen dem Trägersubstrat 2 und der Schutzlackschicht 6 angeordneten Trennschicht 13 um 20 % bis 80 %, bevorzugt um 30 % bis 70 %, kleiner ist als die Haftkraft zwischen der Schutzlackschicht 6 und der Grundierungslackschicht 14 und/oder der mindestens einen elektrisch leitfähigen Schicht 3 und/oder der Haftvermittlungsschicht 4.

So ist es möglich, dass die Haftkraft zwischen dem Trägersubstrat 2 und der Schutzlackschicht 6 aufgrund der zwischen dem Trägersubstrat 2 und der Schutzlackschicht 6 angeordneten Trennschicht 13 um 20 % bis 80 %, bevorzugt um 30 % bis 70 %, kleiner ist als die Haftkraft zwischen den Schichten der Transferlage, insbesondere ausgewählt aus der Gruppe Schutzlackschicht, Grundierungslackschicht, mindestens eine elektrisch leitfähige Schicht, ein- oder mehrere Dekorschichten, Haftvermittlungsschicht, Zwischenhaftschicht, dielektrische Schicht, Dunkelungsschicht und Kontaktverstärkungsschicht. Die Haftkräfte wurden mithilfe der Zugversuch-Prüfmaschine Zwick Z005 der Firma Zwick GmbH & Co. KG, Ulm, Deutschland ermittelt. Hierzu wurde die Transferfolie flach auf die untere Halterung geklebt. Die abzulösende Schicht wurde dann im rechten Winkel durch den Zugversuch abgelöst. Über die Kraftmessdose wurden die Ablösekräfte ermittelt.

Bezüglich der Ausgestaltung der weiteren Schichten in Fig. 7 wird hier auf obige Ausführungen verwiesen.

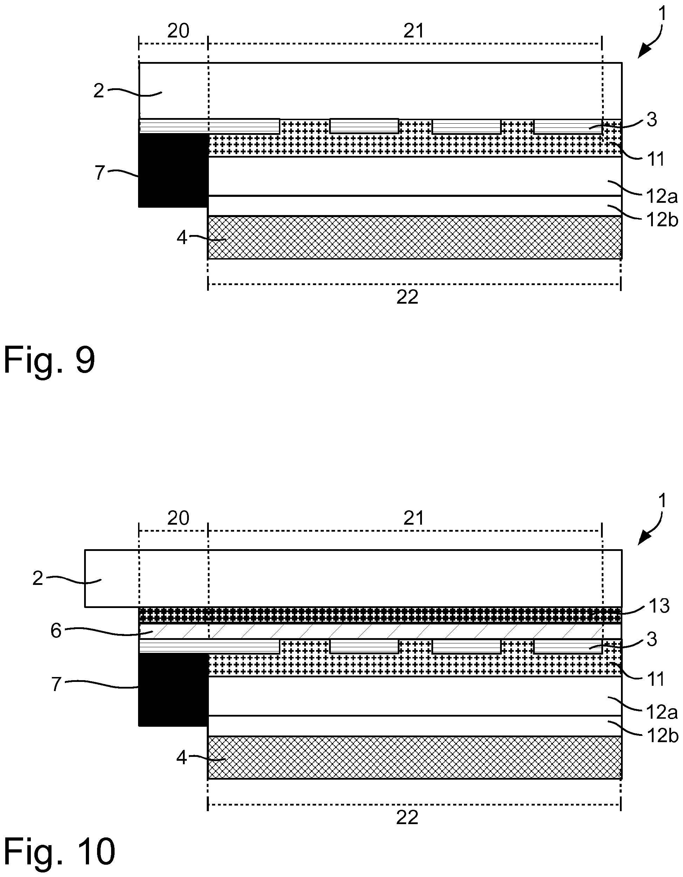

Fig. 9 zeigt eine Folie 1 mit einem Trägersubstrat 2, einer elektrisch leitfähigen Schicht 3, einer Zwischenhaftschicht 11, den Dekorschichten 12a und 12b, einer Haftvermittlungsschicht 4 und einer Kontaktverstärkungsschicht 7.

Wie in Fig. 9 gezeigt, schließt die Trägerfolie 2 an beiden Enden bündig mit den weiteren Schichten der Folie 1 ab. Die Haftvermittlungsschicht 4 ist, wie in Fig. 9 gezeigt, in dem Bereich 22 vorhanden und in dem Bereich 20 nicht vorhanden.

Weiter ist es möglich, dass die Folie 1 in dem Kontaktierungsbereich 20 vollständig oder partiell musterförmig, beispielsweise in einem Raster, mit einem Haftlack bedruckt ist. So ist es möglich, dass auf die Kontaktverstärkungsschicht 7, ein Haftlack aufgebracht ist.

Vorzugsweise handelt es sich bei dem Haftlack um einen elektrischen leitfähigen Haftlack.

Alternativ ist es auch möglich, dass die Folie 1 in dem Kontaktierungsbereich 20 den Haftlack nicht aufweist. Bei der Applikation der Folie 1 auf ein Zielsubstrat entsteht somit der elektrische (Press-)Kontakt (durch Hitze und Druck) zwischen Folie 1 und Zielsubstrat, insbesondere im Kontaktierungsbereich 20. Hierbei ist es möglich, dass der elektrische (Press-)Kontakt durch die Verklebung, insbesondere durch den Haftlack, dauerhaft wirkt.

Bezüglich der Ausgestaltung der Schichten in Fig. 9 wird hier auf obige Ausführungen verwiesen.

Fig. 10 zeigt eine Folie 1 mit einem Trägersubstrat 2, einer Trennschicht 13, einer Schutzlackschicht 6, einer elektrisch leitfähigen Schicht 3, einer Zwischenhaftschicht 11, den Dekorschichten 12a und 12b, einer Haftvermittlungsschicht 4 und einer Kontaktverstärkungsschicht 7.

Auch die in Fig. 10 gezeigte Folie 1 kann, wie die in Fig. 9 gezeigte Folie, im Kontaktierungsbereich 20 vollständig oder partiell musterförmig mit einem Haftlack bedruckt sein. Wie in Fig. 10 gezeigt, überragt die Trägerschicht 2 die weiteren Schichten der Folie auf einer Seite. Hierdurch wird es ermöglicht, dass die Trägerfolie 2 nach einer Applikation der Folie 1 auf ein Zielsubstrat einfach abgelöst werden kann. Durch die zwischen der Trägerschicht 2 und der Schutzlackschicht 6 angeordneten Trennschicht 6 wird eine Ablösung der Trägerschicht 2 ermöglicht.

Bezüglich der Ausgestaltung der Schichten in Fig. 10 wird hier auf obige Ausführungen verwiesen.

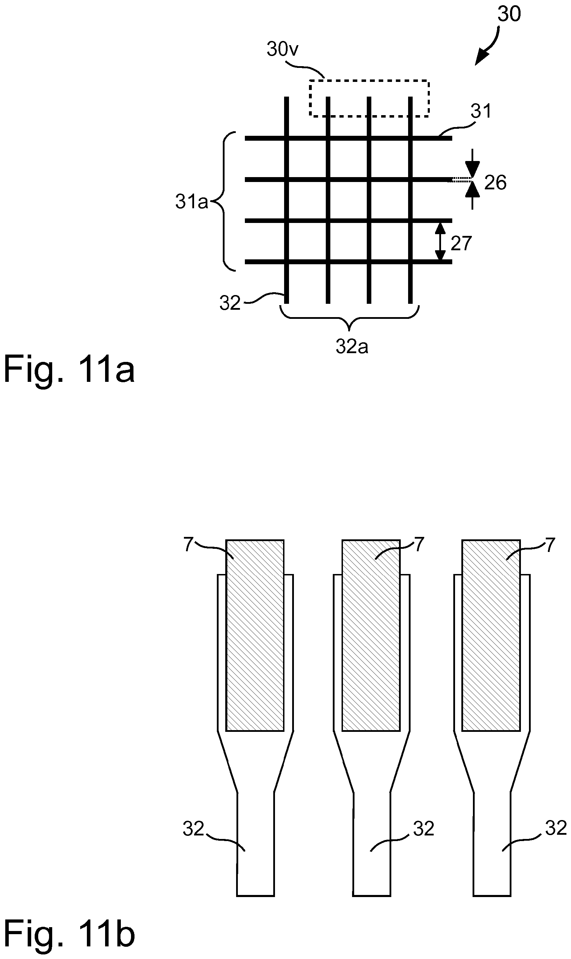

Fig. 11a zeigt Leiterbahnen 31, 32 in Draufsicht. Die Leiterbahnen 31, 32 sind dabei von entsprechend ausgeformten elektrisch leitfähigen Schichten 30 aus Silber gebildet. Die Leiterbahnen 31, 32 weisen eine Breite 26 zwischen 0,2 µm und 20 µm, bevorzugt zwischen 4 µm und 15 µm, und einen Abstand 27 größer als 10 µm, bevorzugt größer als 20 µm, zueinander auf, so dass die Leiterbahnen 31, 32 unterhalb des Auflösungsvermögens des menschlichen Auges liegen. Die Leiterbahnen 31a werden von einer ersten elektrisch leitfähigen Schicht und die Leiterbahnen 32a von einer zweiten elektrisch leitfähigen Schicht gebildet. Die Leiterbahnen 31a bilden hierbei Treiberleiterbahnen und die Leiterbahnen 32a bilden Sensorleiterbahnen. Die Treiberleiterbahnen werden beispielsweise mittels einer Treiberschaltung mit einem Wechselstrom beaufschlagt. Die an den Kreuzungspunkten der Leiterbahnen 31a und 32a erzeugte Kapazität wird bei Berührung der Folie, welche die elektrisch leitfähigen Schichten 30 aufweist, beispielsweise durch einen Finger geändert. Dies wird von den Sensorleiterbahnen 32a mittels einer an die Sensorleiterbahnen 32a angeschlossenen Sensorschaltung detektiert und der Ort der Berührung bzw. die Kapazitätsänderung bestimmt.

Fig. 11b zeigt einen vergrößerten Ausschnitt 30v der Fig. 11a. Die von der elektrisch leitfähigen Schicht gebildeten Leiterbahnen 32 bilden, wie in Fig. 11b gezeigt, drei voneinander separierte Kontaktierungsbereiche. Die drei Kontaktierungsbereiche weisen beispielsweise einen minimalen Abstand von 0,5 mm zueinander auf, um dadurch insbesondere eine elektrische Isolierung der Kontaktierungsbereiche zu erwirken. Auf die Leiterbahnen 32 ist die Kontaktverstärkungsschicht 7 aufgebracht. Bei der in Fig. 11b gezeigten Kontaktverstärkungsschicht 7 handelt es sich um eine Schicht aus einem Carbon-Leitlack mit einer Schichtdicke von 4,5 µm. Die in Fig. 11b gezeigten von der Kontaktverstärkungsschicht 7 eingenommenen Flächenbereiche haben eine Größe von 0,3 mm x 2,0 mm. Die von der Kontaktverstärkungsschicht 7 eingenommenen Flächenbereiche überragen die im Endbereich verbreiterten Leiterbahnen 32 zumindest bereichsweise. Hierdurch ist es möglich, den von den Leiterbahnen 32 ausgebildeten Kontaktierungsbereich zu erweitern, solange eine elektrische Verbindung zwischen dem Kontaktierungsbereich und der Kontaktverstärkungsschicht 7 gewährleistet ist.

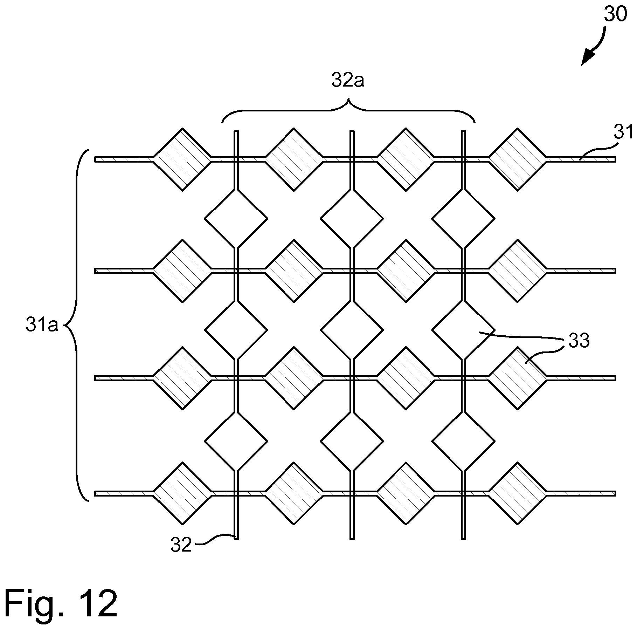

Fig. 12 zeigt eine weitere Ausgestaltungsvariante der Leiterbahnen 31, 32 in Draufsicht. Die Leiterbahnen 31, 32 sind dabei von entsprechend ausgeformten elektrisch leitfähigen Schichten 30 aus Silber gebildet. Wie in Fig. 12 gezeigt, sind die Leiterbahnen 31a der ersten elektrisch leitfähigen Schicht und die Leiterbahnen 32a der zweiten elektrisch leitfähigen Schicht strukturiert, insbesondere derart strukturiert, dass die Leiterbahnen 31a, 32a der ersten und zweiten elektrisch leitfähigen Schicht eine Vielzahl von Flächenelementen 33 ausbilden. Die Flächenelemente 33 sind in Fig. 12 rombusförmig oder rautenförmig ausgebildet, so dass die erste und zweite elektrisch leitfähige Schicht jeweils eine sogenannte Diamant-Struktur aufweisen. Diese Diamant-Struktur ist, wie in Fig. 12 gezeigt, durch eine Vielzahl von rombus-förmigen Flächenelementen 33 entlang von linienförmigen Leiterbahnen 31, 32 gebildet. Dabei weist die erste und zweite elektrisch leitfähige Schicht jeweils eine Vielzahl von voneinander beabstandeten Diamant-Strukturen auf. Die erste und zweite elektrisch leitfähige Schicht werden derart übereinander angeordnet, dass beide Diamant-Strukturen im rechten Winkel, also 90° zueinander verdreht zueinander angeordnet sind. Dabei sind die Flächenelemente 33 der ersten elektrisch leitfähigen Schicht in den freien Zwischenräumen zwischen den Flächenelementen 33 der zweiten elektrisch leitfähigen Schicht "auf Lücke" angeordnet, wobei sich die linienförmigen Leiterbahnen 31, 32 der elektrisch leitfähigen Schichten in den Zwischenräumen zwischen den Flächenelementen kreuzen. Bei dieser Ausführungsvariante ist eine genaue Position der Flächenelemente 33 relativ zueinander besonders wichtig und die Flächenelemente 33 sind vorzugsweise mit einer Toleranz von weniger als 0,25 mm, bevorzugt weniger 0,1 mm registergenau relativ zueinander angeordnet.

Wie in Fig. 12 gezeigt, sind die Leiterbahnen 31, 32 im Bereich der Flächenelemente 33 gemäß der Form der Flächenelemente 33 ausgeformt, so dass die Flächenelemente vollflächig mit dem Material der elektrisch leitfähigen Schichten ausgefüllt sind. Es ist auch möglich, dass die Leiterbahnen lediglich entlang der Flächenelemente verlaufen, so dass die Flächenelemente lediglich von den Leiterbahnen zumindest bereichsweise eingerahmt sind. Die Leiterbahnen verlaufen dann beispielsweise teilweise gerade und verlaufen in den Bereichen der Flächenelemente dann dreieckförmig. Weiter sind die Leiterbahnen 31, 32, wie in Fig. 12 gezeigt, gemäß einem regelmäßigen Raster angeordnet, wobei die elektrischen leitfähigen Schichten aufgrund der Rasterung zumindest semitransparent erscheinen.

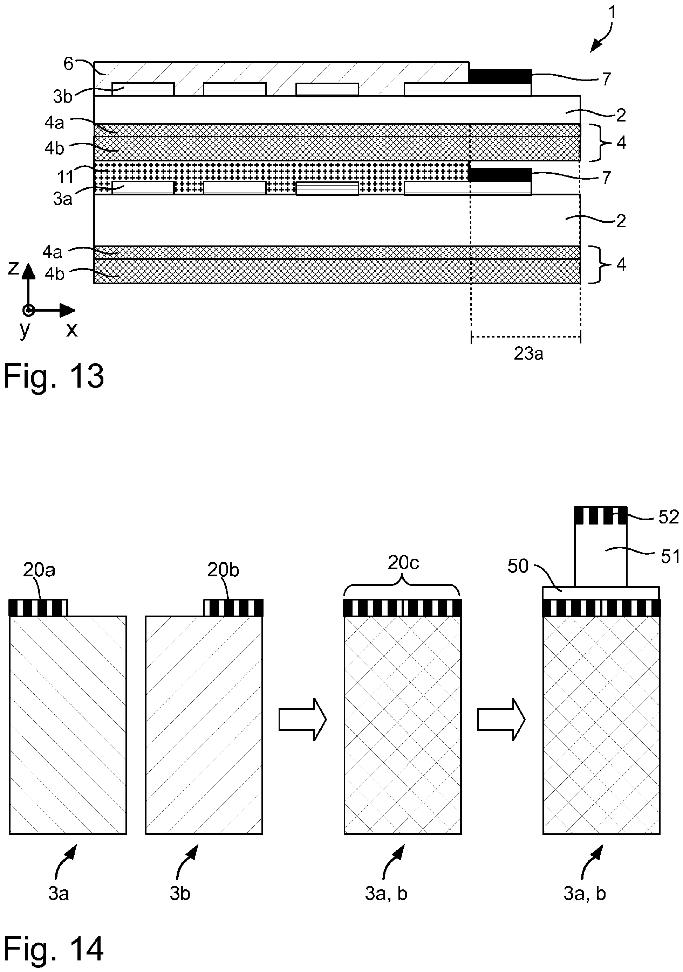

Fig. 13 zeigt eine Folie 1 mit einer ersten elektrisch leitfähigen Schicht 3a, einer zweiten elektrisch leitfähigen Schicht 3b, den Trägersubstraten 2, einer Schutzlackschicht 6, den Haftvermittlungsschichten 4, einer Zwischenhaftschicht 11 und den Kontaktierungsbereichen 7.

Wie in Fig. 13 gezeigt, werden die elektrisch leitfähigen Schichten 3a und 3b auf jeweils einem Trägersubstrat 2 bereitgestellt. Auf die zweite elektrisch leitfähige Schicht 3b ist bereichsweise die Schutzlackschicht 6 aufgebracht, nicht jedoch auf den Kontaktierungsbereich. Auf die erste elektrisch leitfähige Schicht 3a ist bereichsweise die die Zwischenhaftschicht 11 aufgebracht. Die Zwischenhaftschicht 11 überdeckt den von der elektrisch leitfähigen Schicht 3 gebildeten Funktionsbereich, nicht jedoch den Kontaktierungsbereich. Wie in Fig. 13 gezeigt, ist das Trägersubstrat 2 mit der zweiten elektrisch leitfähigen Schicht 3b mittels der Haftvermittlungsschicht 4 und der Zwischenhaftschicht 11 auf die erste elektrisch leitfähige Schicht 3a aufgebracht. Bei der Zwischenhaftschicht 11 kann es auch um eine Schutzlackschicht handeln, so dass die erste und die zweite elektrisch leitfähige Schicht 3a und 3b lediglich mittels der Haftvermittlungsschicht 4 übereinander angeordnet werden. Die elektrisch leitfähigen Schichten 3a und 3b sind in Fig. 13 überlappend angeordnet. Die erste elektrisch leitfähige Schicht 3a und die zweite elektrisch leitfähige Schicht 3b sind vorzugsweise registergenau zueinander positioniert, insbesondere mit einer Toleranz von weniger als 0,25 mm, bevorzugt mit einer Toleranz von weniger als 0,1 mm. Vorzugsweise weisen die elektrisch leitfähigen Schichten 3a, 3b dabei, wie bereits erläutert, Leiterbahnen auf, welche gemäß einem Raster angeordnet sind. Dieses Raster kann regelmäßig oder unregelmäßig sein. Das Raster kann insbesondere aus Rasterelementen aufgebaut sein, wie Linien und/oder Flächenelementen. Die Rasterelemente können dabei sogenannte Sensorzellen bilden.

Bezüglich der Ausgestaltung der weiteren Schichten in Fig. 13 wird hier auf obige Ausführungen verwiesen.

Fig. 14 zeigt Draufsichten auf elektrisch leitfähige Schichten 3a, 3b. So betrifft 3a eine erste elektrisch leitfähige Schicht, die im in dem Kontaktierungsbereich 20a kontaktierbar ist. Weiter betrifft 3b eine zweite elektrisch leitfähige Schicht, die in dem Kontaktierungsbereich 20b kontaktierbar ist. Die elektrisch leitfähigen Schichten 3a, 3b können, wie beispielsweise in Fig. 13 gezeigt, jeweils auf einem Trägersubstrat 2 angeordnet sein. Werden die beiden elektrisch leitfähigen Schichten 3a und 3b nun über einander angeordnet, wie in 3a, b in Draufsicht angedeutet, sind nun die beiden Kontaktierungsbereiche 20a, 20b nebeneinander angeordnet und bilden somit einen gemeinsamen Kontaktierungsbereich 20c. Bezüglich des übereinander Anordnens der elektrisch leitfähigen Schichten 3a und 3b ist hier auf obige Ausführungen verwiesen. Der gemeinsame Kontaktierungsbereich 20c wird beispielsweise mittels eines Adapterelements 51 elektrisch kontaktiert. Bei dem Adapterelement 51 handelt es sich bevorzugt um ein flexibles Adapterelement 51, welches die Kontaktpunkte in dem gemeinsamen Kontaktierungsbereich 20c elektrisch kontaktiert und außenseitig elektrisch leitfähig mit einem weiteren Kontaktelement 52 verbindet. Die Kontaktierung zwischen dem gemeinsamen Kontaktierungsbereich 20c und dem Adapterelement 51 erfolgt bevorzugt mittels einem Verbindungselement 50 aus leitfähigem Klebstoff, insbesondere mittels ACF-Bonding (ACF = Anisotropic Conductive Film). Das weitere Kontaktelement 52 kann beispielsweise ein insbesondere genormter Steckverbinder sein, beispielsweise ein ZIF-Connector (ZIF = Zero Insertion Force).

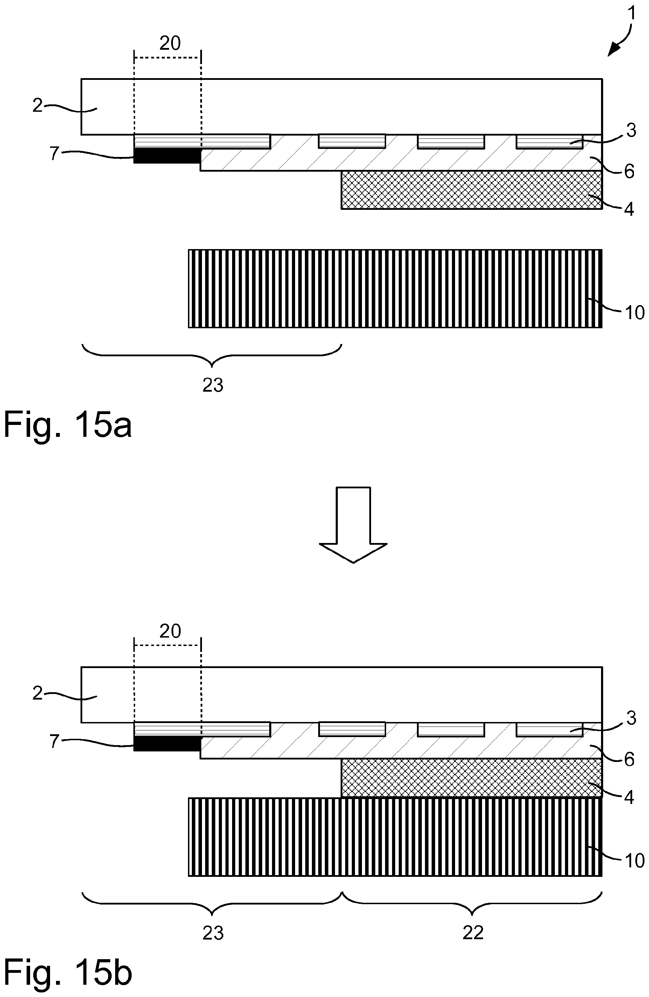

Fig. 15a und Fig. 15b zeigen Verfahrensschritte zur Herstellung eines elektrischen Funktionselements. Fig. 15a zeigt die Verwendung einer erfindungsgemäßen Folie 1 zur Applikation auf ein Zielsubstrat 10. Bei dem Zielsubstrat 10 kann es sich beispielsweise um ein Display handeln. Bezüglich der Ausgestaltung der Schichten der Folie 1 ist hier auf obige Ausführungen verwiesen. Wie in Fig. 15a gezeigt, weist die Folie in dem Bereich 23 keine Haftvermittlungsschicht 4 auf. Der Bereich 23 bildet somit einen Tailbereich, in welchem der Kontaktierungsbereich 20 liegt. Wie in Fig. 15b gezeigt, wird die Folie 1 auf das Zielsubstrat 10 appliziert, wodurch ein elektrisches Funktionselement gebildet wird. Bildet beispielsweise die elektrische Funktionsstruktur ein Touchsensorfeld, insbesondere ein kapazitives Sensorfeld, aus, welches eine Tastfeldfunktionalität bereitstellt, und handelt es sich bei dem Zielsubstrat um ein Display, so kann beispielsweise ein Touchscreen erzeugt werden. In dem in Fig. 15a gezeigten nicht applizierten Zustand der Folie 1 ist es möglich, dass die Haftvermittlungsschicht 4 ein trübes optisches Erscheinungsbild beispielsweise aufgrund einer Oberflächenrauigkeit der Haftvermittlungsschicht 4 aufweist. Nach Applikation der Folie 1 auf das Zielsubstrat 10, wie in Fig. 15b gezeigt, ist die Haftvermittlungsschicht 4 nun vorzugsweise hochtransparent und klar, da beispielsweise die Oberflächenrauhigkeit der Haftvermittlungsschicht 4 durch den Applikationsprozess eingeebnet wurde. Die Applikation der Folie 1 kann durch Heißlaminieren erfolgen. Weiter ist es möglich, dass die Folie 1 von einer Rolle mittels Heißlaminieren auf das Zielsubstrat 10 appliziert wird. Die Folienbahngeschwindigkeit beträgt hierbei bevorzugt zwischen 1,5 m/min und 3,5 m/min. Vorzugsweise erfolgt das Heißlaminieren bei einer Temperatur im Bereich zwischen 80°C und 300°C, bevorzugt zwischen 200°C und 290°C, weiter bevorzugt zwischen 240°C und 270°C, und/oder mit einem Prägedruck im Bereich zwischen 200 bar und 2000 bar, bevorzugt zwischen 500 bar und 1500 bar.

Das in Fig. 15b gezeigte elektrische Funktionselement kann in dem Tailbereich 23 angehoben werden, so dass der Kontaktierungsbereich 20 sicher zugänglich ist und in weiteren Schritten sicher kontaktiert werden kann. In dem Bereich 22, welcher die Haftvermittlungsschicht 4 aufweist, haftet die Folie 1 auf dem Zielsubstrat 10 an. In dem Bereich 22 ist die Anhaftung der Folie 1 zumindest derart stark, dass sich die Folie 1 bei einem bestimmungsgemäßen Gebrauch nicht von dem Zielsubstrat 10 ablöst. Beispielsweise ist die Anhaftung tesafest, das heißt die Haftkraft ist so groß, dass die Folie 1 durch Anreißen in einem 90° Abzugsverfahren mit einem auf der Folie 1 befestigten Klebeband tesa 4104 der Firma tesa, Norderstedt, Deutschland nicht von dem Zielsubstrat 10 entfernt werden kann. Die Schichten 2, 3, 6 und 4 der Folie 1 sind transparent ausgeführt, so dass das Zielsubstrat 10 durch die Folie 1 hindurch für einen menschlichen Betrachter gut erkennbar ist. Handelt es sich bei dem Zielsubstrat 10 beispielsweise um eine dünne Glasschicht oder eine transparente Schicht aus PMMA, so ist das von der Folie 1 und der dünnen Glasschicht oder der PMMA-Schicht gebildete elektrische Funktionselement insgesamt transparent. So kann das elektrische Funktionselement aus der Folie 1 und der PMMA-Schicht beispielsweise eine Transmission von Licht, insbesondere aus dem Wellenlängenbereich zwischen 300 nm und 800 nm, bevorzugt zwischen 380 nm und 780 nm, von 84,6% aufweisen, wobei die PMMA-Schicht alleine eine Transmission von 93,6% aufweist.

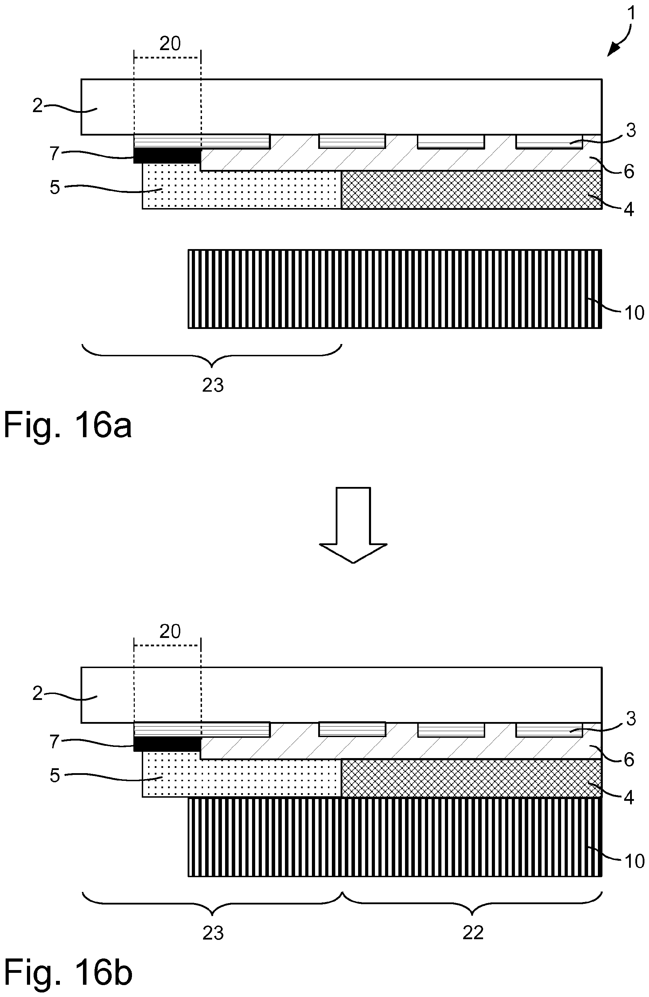

Fig. 16a und Fig. 16b zeigen Verfahrensschritte zur Herstellung eines elektrischen Funktionselements. Die Fig. 16a und Fig. 16b entsprechenden den Fig. 15a und Fig. 15b mit dem Unterschied, dass die Folie 1 zusätzlich die Ablöseschicht 5 umfasst. Durch die Ablöseschicht 5 wird sichergestellt, dass die Folie 1 in dem Bereich 23 nicht auf dem Zielsubstrat 10 anhaftet. Bezüglich der Ausgestaltung der Ablöseschicht 5 ist hier auf obige Ausführungen verwiesen. Die in Fig. 16b gezeigte Folie 1 kann folglich ebenso wie die in Fig. 15b gezeigte Folie in dem Bereich 23, der den Kontaktierungsbereich 20 umfasst, angehoben werden. **In** dem Bereich 22 hingegen haftet die Folie 1 auf dem Zielsubstrat 10 an.

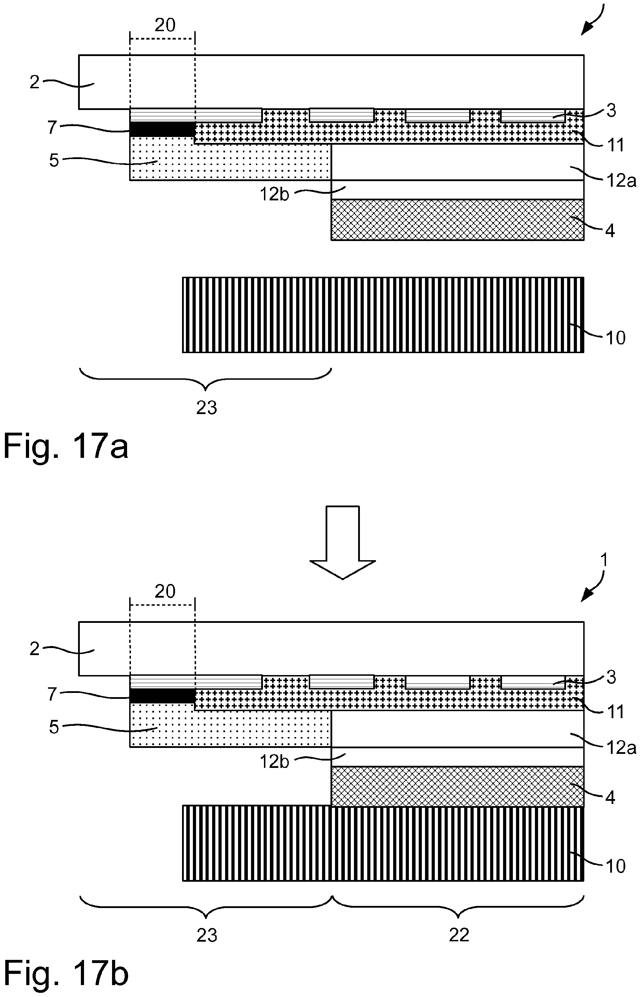

Fig. 17a und Fig. 17b zeigen Verfahrensschritte zur Herstellung eines elektrischen Funktionselements. Die Fig. 17a und Fig. 17b entsprechenden den Fig. 15a und Fig. 15b mit dem Unterschied, dass die Folie 1 zusätzlich die Ablöseschicht 5, die Zwischenhaftschicht 11 und die Dekorschichten 12a und 12b umfasst. Bezüglich der Ausgestaltung der Schichten 5, 11, 12a und 12b ist hier auf obige Ausführungen verwiesen. Die in Fig. 17b gezeigte Folie 1 kann folglich ebenso wie die in Fig. 15b gezeigte Folie in dem Bereich 23, der den Kontaktierungsbereich 20 umfasst, angehoben werden. In dem Bereich 22 hingegen haftet die Folie 1 auf dem Zielsubstrat 10 an.

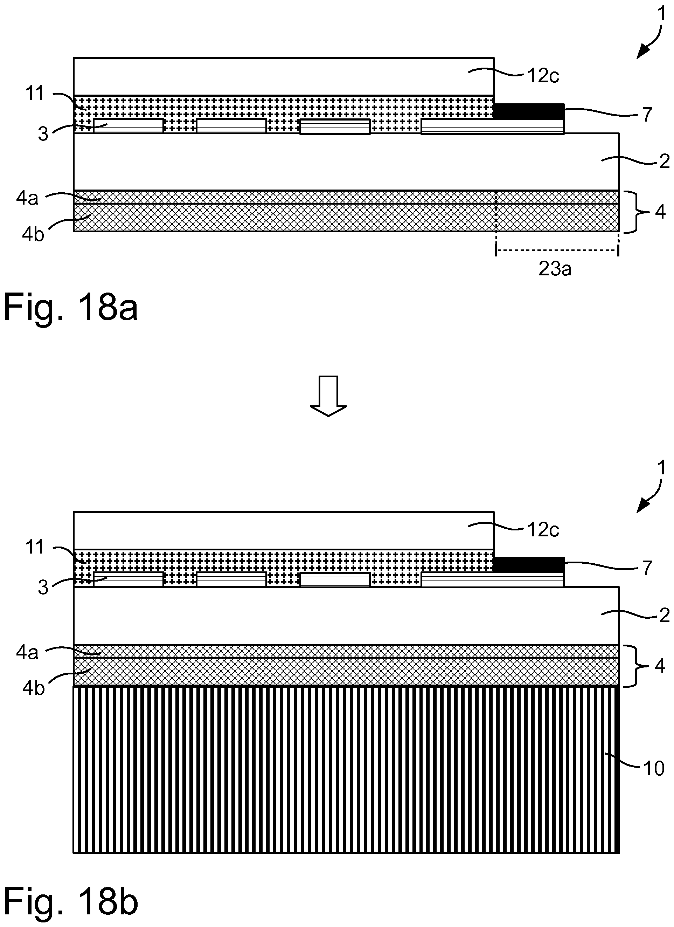

Fig. 18a und Fig. 18b zeigen Verfahrensschritte zur Herstellung eines elektrischen Funktionselements. Fig. 18a zeigt die Verwendung einer erfindungsgemäßen Folie 1 zur Applikation auf ein Zielsubstrat 10. Bezüglich der Ausgestaltung der Schichten der Folie 1 ist hier auf obige Ausführungen verwiesen. Wie in Fig. 18a gezeigt, weist die Folie 1 eine vollflächige Haftvermittlungsschicht 4 auf, jedoch sind die Zwischenhaftschicht 11 und die Dekorschicht 12c nicht im Kontaktierungsbereich aufgebracht. Es ist jedoch auch möglich, dass die Haftvermittlungsschicht 4 in dem Bereich 23a nicht vorhanden ist, so dass der Kontaktierungsbereich beispielsweise zur weiteren Erleichterung der Kontaktierung von dem Zielsubstrat 10 angehoben werden kann. Wie in Fig. 18b gezeigt, wird die Folie 1 auf das Zielsubstrat 10 appliziert, wodurch ein elektrisches Funktionselement gebildet wird. In dem in Fig. 18a gezeigten nicht applizierten Zustand der Folie 1 ist es möglich, dass die Haftvermittlungsschicht 4 ein trübes optisches Erscheinungsbild beispielsweise aufgrund einer Oberflächenrauigkeit der Haftvermittlungsschicht 4 aufweist. Nach Applikation der Folie 1 auf das Zielsubstrat 10, wie in Fig. 18b gezeigt, ist die Haftvermittlungsschicht 4 nun vorzugsweise hochtransparent und klar, da beispielsweise die Oberflächenrauhigkeit der Haftvermittlungsschicht 4 durch den Applikationsprozess eingeebnet wurde. Die Applikation der Folie 1 kann wie bereits erläutert durch Heißlaminieren erfolgen. Auch ist es möglich, dass alternativ zum Heißlaminieren die Folie 1 durch Einspritzen einer Spritzgussmasse, wobei insbesondere die Spritzgussmasse das Zielsubstrat 10 ausbildet, auf das Zielsubstrat 10 appliziert wird. So ist es möglich, dass die Folie 1 durch die Haftvermittlungsschicht 4 fest mit der Spritzgussmasse verbunden wird.

Je nach Ausgestaltung des Zielsubstrats 10 ist es beispielsweise möglich, dass das aus der Folie 1 und dem Zielsubstrat 10 gebildete elektrische Funktionselement ein Mobiltelefon, wie beispielsweise ein Smartphone oder ein PDA, ein Tablet-Computer, ein Geldautomat, ein Fahrkartenautomat, ein Spieleautomat, eine Spielekonsole, ein Bedienteil eines Haushaltgeräts oder eines Kraftfahrzeugs ist oder beispielsweise ein Touchscreen, ist. Auch ist es möglich, dass das elektrische Funktionselement eine Eingabevorrichtung, insbesondere ein Touchpanel, ist. Auch ist es möglich, dass das aus Folie 1 und Zielsubstrat 10 gebildete elektrische Funktionselement ein Zwischenprodukt ist, welches in weiteren Verarbeitungsschritten zu oder in einem Endprodukt verbaut ist. Vorgenannte elektrische Funktionselemente dienen bevorzugt der Informationsverarbeitung, wobei die Information beispielsweise von der als Touchsensorfeld ausgebildeten elektrischen Funktionsstruktur, in Form der Berührungsposition erfasst wird.

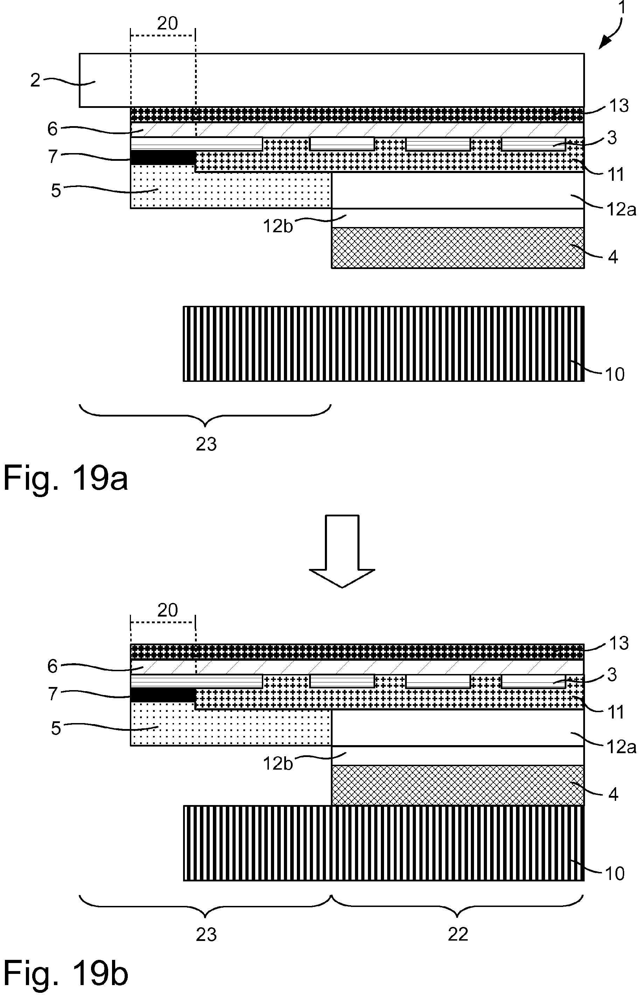

Fig. 19a und Fig. 19b zeigen Verfahrensschritte zur Herstellung eines elektrischen Funktionselements. Fig. 19a zeigt die Verwendung einer erfindungsgemäßen Folie 1 zur Applikation auf ein Zielsubstrat 10. Bezüglich der Ausgestaltung der Schichten der Folie 1 ist hier auf obige Ausführungen verwiesen. Wie in Fig. 19a gezeigt, weist die Folie 1 im Bereich 23 keine Haftvermittlungsschicht 4 auf. Der Bereich 23 bildet somit einen Tailbereich, in welchem der Kontaktierungsbereich 20 liegt. Wie in Fig. 19b gezeigt, wird die Folie 1 auf das Zielsubstrat 10 appliziert, wodurch ein elektrisches Funktionselement gebildet wird. In dem in Fig. 19a gezeigten nicht applizierten Zustand der Folie 1 ist es möglich, dass die Haftvermittlungsschicht 4 ein trübes optisches Erscheinungsbild beispielsweise aufgrund einer Oberflächenrauigkeit der Haftvermittlungsschicht 4 aufweist. Nach Applikation der Folie 1 auf das Zielsubstrat 10, wie in Fig. 19b gezeigt, ist die Haftvermittlungsschicht 4 nun vorzugsweise hochtransparent und klar, da beispielsweise die Oberflächenrauhigkeit der Haftvermittlungsschicht 4 durch den Applikationsprozess eingeebnet wurde. Die Applikation der Folie 1 kann durch Heißprägen erfolgen. Hierbei ist es möglich, dass die Folie von Rolle oder von einem Bogen oder Sheet mittels Heißprägen auf das Zielsubstrat appliziert wird. Vorzugsweise erfolgt das Heißprägen bei einer Prägetemperatur zwischen 80°C und 250°C, bevorzugt zwischen 100°C und 200°C, und/oder bei einem Prägedruck zwischen 0,5 kN/cm² bis und 10 kN/cm². Weiter ist es auch zweckmäßig, wenn die Prägezeit in einem Bereich von 1 ms bis 2000 ms, bevorzugt in einem Bereich von1 ms und 500 ms, liegt. Nach Applikation der Folie 1 auf das Zielsubstrat wird, wie in Fig. 19b gezeigt, das Trägersubstrat 2 entfernt. Wie oben dargelegt, kann das Trägersubstrat 2 abgelöst werden, da die Haftkraft zwischen dem Trägersubstrat 2 und der Schutzlackschicht 6 aufgrund der zwischen dem Trägersubstrat 2 und der Schutzlackschicht 6 angeordneten Trennschicht 13 um 20 % bis 80 %, bevorzugt um 30 % bis 70 %, kleiner ist als die Haftkraft zwischen der Schutzlackschicht 6 und den weiteren applzierten Schichten der Folie, insbesondere der elektrisch leitfähigen Schicht 3 der Zwischenhaftschicht 11 und/oder den Dekorschichten 12a und 12b und/oder der Haftvermittlungsschicht 4. Vorzugsweise ist auch die Haftkraftkraft zwischen dem Trägersubstrat 2 und der Schutzlackschicht 6 aufgrund der zwischen dem Trägersubstrat 2 und der Schutzlackschicht 6 angeordneten Trennschicht 13 kleiner als die Haftkraft zwischen den applizierten Schichten der Folie, insbesondere der elektrisch leitfähigen Schicht 3 der Zwischenhaftschicht 11 und/oder den Dekorschichten 12a und 12b und/oder der Haftvermittlungsschicht 4, und dem Zielsubstrat 10, so dass sich bei einem Abziehen des Trägersubstrats 2 die applizierten Schichten der Folie 1 nicht vom Zielsubstrat 10 ablösen.

Das in Fig. 19b gezeigte elektrische Funktionselement kann in dem Tailbereich 23 angehoben werden, so dass der Kontaktierungsbereich 20 sicher zugänglich ist und in weiteren Schritten sicher kontaktiert werden kann. **In** dem Bereich 22, welcher die Haftvermittlungsschicht 4 aufweist, haftet die Folie 1 auf dem Zielsubstrat 10 an. In dem Bereich 22 ist die Anhaftung der Folie 1 zumindest derart stark, dass sich die Folie 1 bei einem bestimmungsgemäßen Gebrauch nicht von dem Zielsubstrat 10 ablöst.

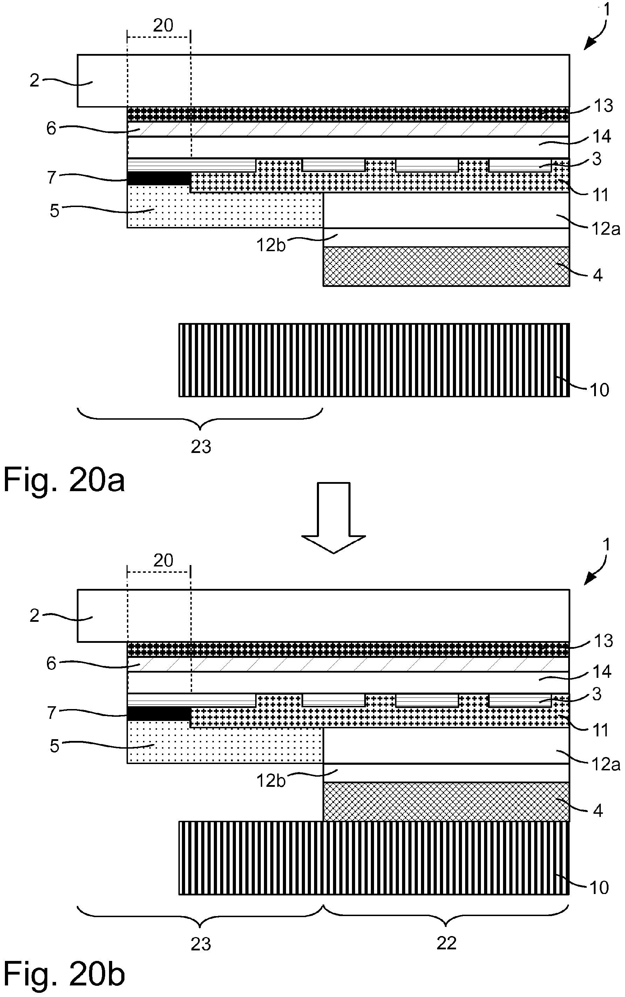

Fig. 20a und Fig. 20b zeigen Verfahrensschritte zur Herstellung eines elektrischen Funktionselements. Die Fig. 20a und Fig. 20b entsprechenden den Fig. 19a und Fig. 19b mit dem Unterschied, dass die Folie 1 zusätzlich die Grundierungslackschicht 14 umfasst. Bezüglich der Ausgestaltung der Schichten ist hier auf obige Ausführungen verwiesen. Weiter ist, wie in Fig. 20b gezeigt, das Trägersubstrat 2 nach Applikation der Folie 1 auf das Zielsubstrat nicht entfernt. Die in Fig. 20b gezeigte Folie 1 kann folglich ebenso wie die in Fig. 19b gezeigte Folie in dem Bereich 23, der den Kontaktierungsbereich 20 umfasst, angehoben werden. In dem Bereich 22 hingegen haftet die Folie 1 auf dem Zielsubstrat 10 an.

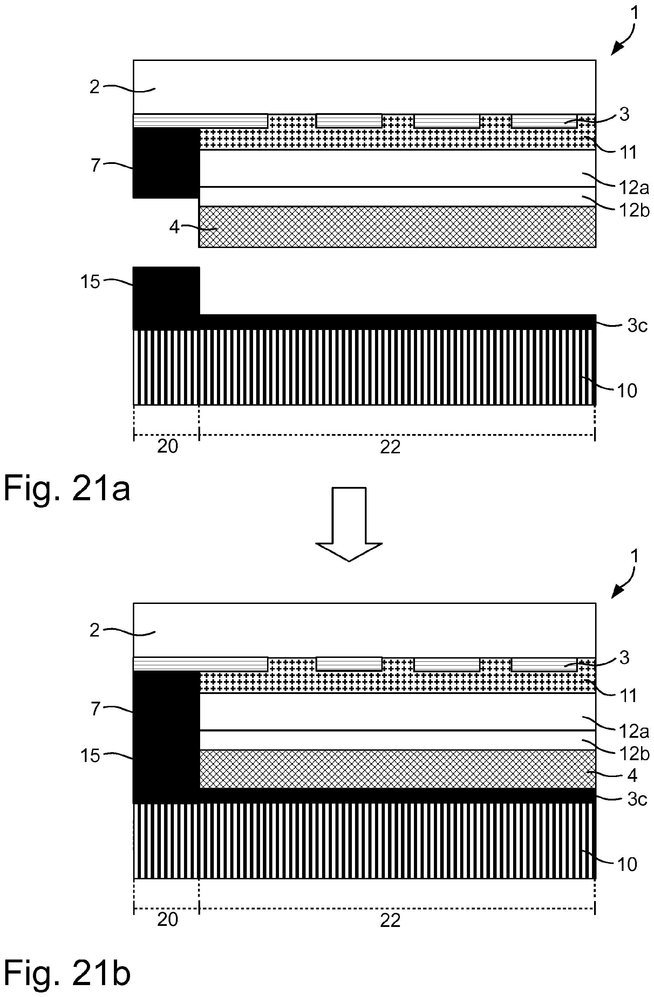

Fig. 21a und Fig. 21b zeigen Verfahrensschritte zur Herstellung eines elektrischen Funktionselements. Fig. 21a zeigt die Verwendung einer erfindungsgemäßen Folie 1 zur Applikation auf ein Zielsubstrat 10. Bezüglich der Ausgestaltung der Schichten der Folie 1 ist hier auf obige Ausführungen verwiesen. Wie in Fig. 21a gezeigt, weist die Folie 1 im Bereich 20 keine Haftvermittlungsschicht 4 auf.

Wie in Fig. 21a gezeigt, weist das Zielsubstrat 10 eine Kontaktschicht 15, insbesondere zur elektrischen Kontaktierung des mindestens einen Kontaktierungsbereichs 20 der Folie 1, auf. Vorzugsweise ist die Kontaktschicht 15 direkt auf das Zielsubstrat 10 aufgebracht. Weiter ist es möglich, dass die Kontaktschicht 15 mindestens ein Verbindungselement, insbesondere einen elektrischen Anschluss, wie beispielsweise einen Stecker, aufweist. Auch ist es möglich, dass die Kontaktschicht 15 mindestens ein Adapterelement und/oder Kontaktelement aufweist. Bevorzugt weist das Zielsubstrat 10 also bereits selbst eine Kontaktierungsstruktur, insbesondere zur elektrischen Kontaktierung des mindestens einen Kontaktierungsbereichs 20 der Folie 1, in Form der Kontaktschicht 15 auf.

Wie in Fig. 21a gezeigt, ist die Kontaktschicht 15 in dem Bereich 20 angeordnet. Der Bereich 20 bildet somit einen Zielkontaktierungsbereich aus, der das Gegenstück zu dem Kontaktierungsbereich 20 der Folie 1 bildet. Der Zielkontaktierungsbereich des Zielsubstrats 10 und der Kontaktierungsbereich 20 der Folie 1 sind, wie in Fig. 21a gezeigt, insbesondere nach Applikation der Folie 1 auf das Zielsubstrat 10, deckungsgleich. Weiter ist auch möglich, dass der Zielkontaktierungsbereich des Zielsubstrats 10 und der Kontaktierungsbereich 20 der Folie 1 nach Applikation der Folie 1 sich zumindest bereichsweise überdecken.

Weiter weist das Zielsubstrat 10, wie in Fig. 21a, gezeigt eine elektrisch leitfähige Schicht 3c auf. Vorzugsweise weist die elektrisch leitfähige Schicht 3c eine Vielzahl von Leiterbahnen auf, welche bevorzugt gemäß einem Raster angeordnet sind. Dieses Raster kann regelmäßig oder unregelmäßig sein. Das Raster kann insbesondere aus Rasterelementen aufgebaut sein, wie Linien und/oder Flächenelementen.

Weiter ist auch möglich, dass die elektrisch leitfähige Schicht 3c weitere elektrische Komponenten, wie beispielsweise Antennen, Kapazitäten und Induktivitäten, aufweist.

Wie in Fig. 21a gezeigt, ist die elektrische leitfähige Schicht 3c mit der Kontaktschicht 15 elektrisch, insbesondere galvanisch, verbunden. Es ist auch möglich, dass die elektrische leitfähige Schicht 3c mit der Kontaktschicht 15 über eine kapazitive und/oder induktive Kopplung verbunden ist.

Die Kontaktschicht 15 und/oder die elektrisch leitfähige Schicht 3c in Fig. 21a wird bevorzugt mittels Drucken, insbesondere mittels Siebdruck auf das Zielsubstrat 10 aufgebracht. Weiter ist auch möglich, dass die Kontaktschicht 15 und/oder die elektrisch leitfähige Schicht 3c mittels Laser-Direkt-Strukturierung (LDS) auf dem Zielsubstrat 10 erzeugt wird.

Die Kontaktschicht 15 besteht bevorzugt aus einer elektrisch leitfähigen Paste, insbesondere Carbonpaste, welche vorzugsweise Silber (Ag), Gold (Au), Aluminium (Al), Kupfer (Cu), Chrom (Cr) und/oder andere leitfähige Metalle umfasst. Weiter ist es möglich, dass die elektrisch leitfähige Paste, insbesondere Carbonpaste, Bindemittel, insbesondere umfassend Kolophonium- und/oder Phenolharze, Polymere und Copolymere, umfasst. Bindemittel der elektrisch leitfähigen Paste, insbesondere Carbonpaste, sind Naturharze, vorzugsweise Kolophonium, Phenolharze, Polymere und Copolymere bestehend aus PVC, PMMA, PU, Polyester, Isocyanat (NCO)-vernetzte Bindemittel, beispielsweise MF, MPF, Melamin-Polyester, UMF. Weniger bevorzugt sind Bindemittel der elektrisch leitfähigen Paste umfassend Poly(organo)siloxane und deren Copolymere und/oder strahlenhärtende Bindemittel.

Wie in Fig. 21b gezeigt, wird die Folie 1 auf das Zielsubstrat 10 appliziert, wobei das Zielsubstrat 10, wie oben dargelegt, die Kontaktschicht 10 und die elektrisch leitfähige Schicht 3c aufweist.

Durch die Applikation der Folie 1 auf das Zielsubstrat 10 wird mittels der Kontaktschicht 15 die elektrisch leitfähige Schicht 3c des Zielsubstrats 10 mit der Funktionsstruktur der elektrisch leitfähigen Schicht 3 der Folie 1 elektrisch über den Kontaktierungsbereich 20 der Folie 1 verbunden. Die Kontaktschicht 15 auf dem Zielsubstrat 10 bildet also den Gegenkontakt zu dem Kontaktierungsbereich 20 der Folie 1.

Weiter ist es möglich, dass die Folie 1 in dem Kontaktierungsbereich 20 vollständig oder partiell musterförmig, beispielsweise in einem Raster, mit einem Haftlack bedruckt ist. Vorzugsweise entsteht bei der Applikation der Folie 1 auf das mit der Kontaktschicht 15 versehene Zielsubstrat 10 somit ein elektrische (Press-)Kontakt (durch Hitze und Druck) zwischen Folie 1 und Zielsubstrat 10, insbesondere in dem mindestens einen Kontaktierungsbereich 20 und/oder Zielkontaktierungsbereich. So ist es möglich, dass ein elektrischer Kontakt zwischen der Kontaktschicht 15 des Zielsubstrats 10 und dem Kontaktierungsbereich 20 der Folie 1 entsteht. Der elektrische (Press-)Kontakt wird durch die Verklebung, insbesondere durch den Haftlack, dauerhaft verstärkt. Vorteilhafterweise handelt es sich bei dem Haftlack um einen elektrisch leitfähigen Haftlack.

Weiter ist es möglich, dass zwischen dem Kontaktierungsbereich 20 der Folie 1 und dem Zielkontaktierungsbereich des Zielsubstrats 10 ein ACF-Bonding-Tape eingebracht wird. Hierdurch kann die elektrische Verbindung im Kontaktierungsbereich 20 weiter verbessert werden. Hierbei ist es von Vorteil, wenn der Applikationsvorgang (Hitze und Druck) weitestgehend auch dem üblichen ACF-Bonding-Prozess entspricht.

Wie in Fig. 21a und Fig. 21b gezeigt, weist die Folie 1 keinen Tailbereich auf, der beispielsweise durch ein überstehendes Trägersubstrat leicht angehoben werden kann. Die in Fig. 21a und Fig. 21b gezeigte Folie 1, benötigt einen derartigen Tailbereich auch nicht, da diese direkt auf ein Zielsubstrat 10 appliziert wird, das aufgrund der Kontaktschicht 15 bereits über einen Gegenkontakt verfügt, mittels dem eine elektrische Verbindung zwischen der elektrisch leitfähigen Schicht 3 der Folie 1 und der elektrisch leitfähigen Schicht 3c des Zielsubstrats 10 hergestellt werden kann. Ein Tailbereich ist daher in diesem Ausführungsbeispiel nicht notwendig.

Bezüglich der Ausgestaltung der Schichten in Fig. 21 wird hier auf obige Ausführungen verwiesen.

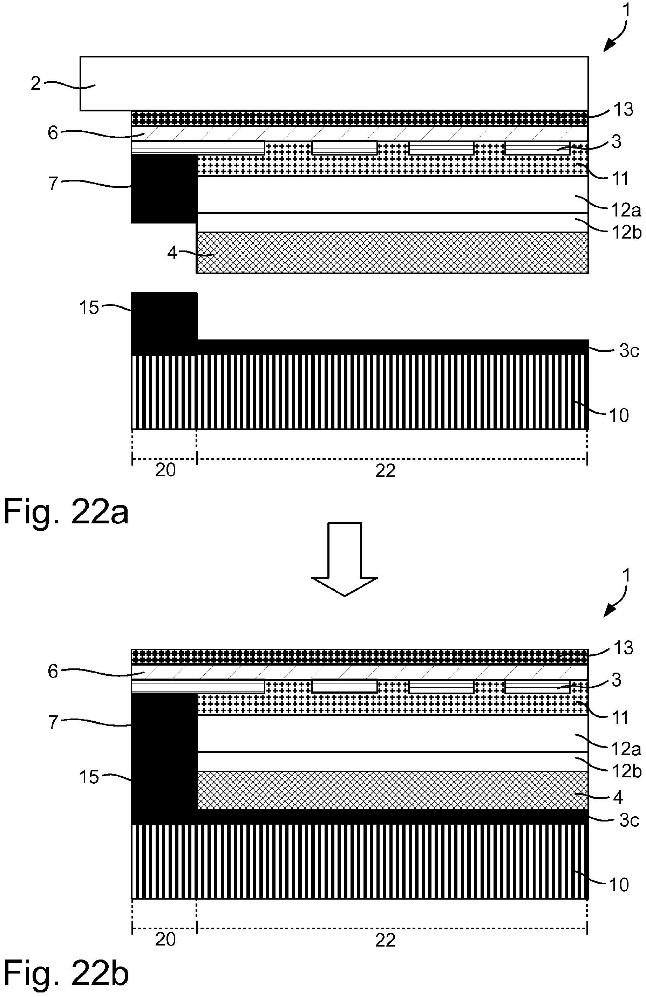

Fig. 22a und Fig. 22b zeigen Verfahrensschritte zur Herstellung eines elektrischen Funktionselements. Die Fig. 22a und Fig. 22b entsprechenden den Fig. 21a und Fig. 21b mit dem Unterschied, dass die Folie 1 zusätzlich die Trennschicht 13 sowie die Schutzlackschicht 6 umfasst. Bezüglich der Ausgestaltung der Schichten ist hier auf obige Ausführungen verwiesen. Weiter ist, wie in Fig. 22a gezeigt, dass Trägersubstrat 2 überstehend ausgeführt, so dass das Trägersubstrat 2, wie in Fig. 22b gezeigt, nach Applikation der Folie 1 auf das Zielsubstrat 10 leicht entfernt werden kann. Die in Fig. 22a gezeigte Folie 1 wird folglich ebenso wie die in Fig. 21a gezeigte Folie 1 auf ein mit einer Kontaktschicht 15 versehenes Zielsubstrat 10 appliziert, wodurch eine elektrische Verbindung zwischen der elektrisch leitfähigen Schicht 3 der Folie 1 und der elektrisch leitfähigen Schicht 3c des Zielsubstrats 10 hergestellt wird.

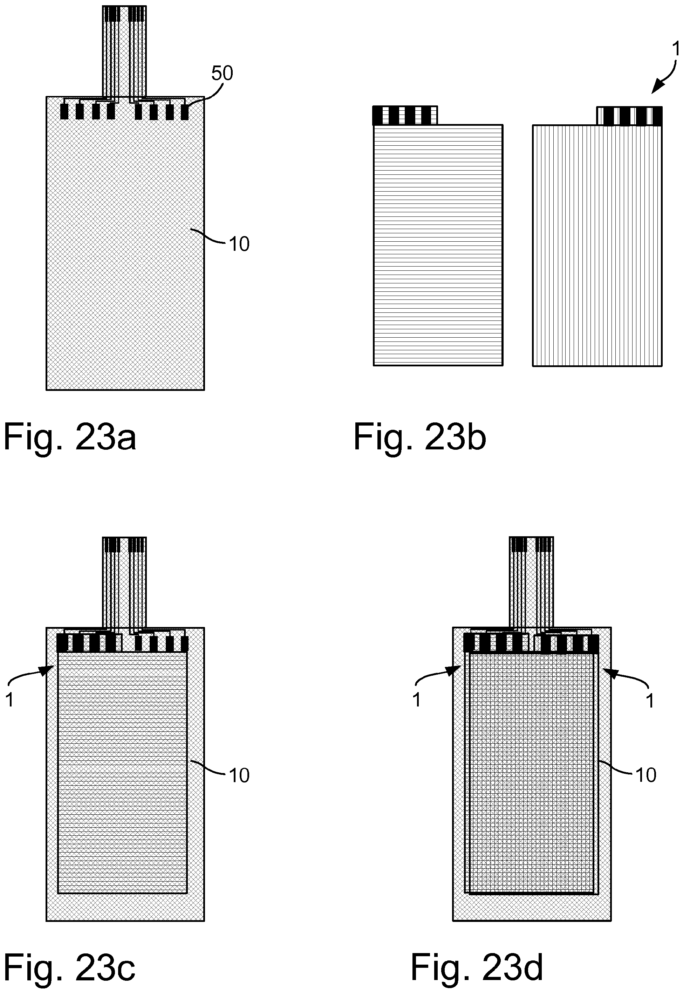

Fig. 23a bis Fig. 23d zeigen Draufsichten von einem Zielsubstrat 10, Folien 1 und einem elektrischen Funktionselement.

So zeigt Fig. 23a ein Zielsubstrat 10, auf welches eine Kontaktschicht aufgebracht ist. Die Kontaktschicht weist hierbei Verbindungselemente 50 auf. Vorzugsweise handelt es sich bei den Verbindungselementen 50 um integrierte ZIF-Kontakte, welche, wie in Fig. 23a gezeigt, mittels Leiterbahnen mit einem ACF-Kontaktierungsbereich verbunden sind. Weiter ist es möglich, dass das Zielsubstrat 10 transparent ist. Die die Verbindungselemente 50 aufweisende Kontaktschicht ist in Fig. 23a beispielsweise mittels Heißprägen aufgebracht worden. Die Kontaktschicht des Zielsubstrats 10 ist hierbei derart ausgestaltet, dass zwei Folien auf das Zielsubstrat 10 aufgebracht werden können. So weist das Zielsubstrat 10, auf welche zwei Folien appliziert werden sollen, in Fig. 23a bereits eine Kontaktschicht auf, die derart ausgestaltet ist, dass ein Zweilagen-Sensor bestehend aus einer Folie für die x-Lage und einer Folie für die y-Lage, appliziert werden kann.

Fig. 23b zeigt Folien 1, welche zusammen einen Zweilagen-Sensor ausbilden. Eine Folie 1 in Fig. 23b bildet die x-Lage und eine Folie 1 die y-Lage aus. So ist es beispielsweise möglich, dass die x-Lage x-Sensoren eines Touchsensors umfasst, welche die x-Koordinaten einer Berührung detektieren und die y-Lage y-Sensoren eines Touchsensors umfasst, welche die y-Koordinaten einer Berührung detektieren. Bezüglich der Ausgestaltung der Folien 1 ist hier auf obige Ausführungen verwiesen.

Wie in Fig. 23c gezeigt, wird zunächst vorzugsweise eine erste Folie 1, welche die erste Sensor-Lage, beispielsweise die x-Lage, umfasst, auf das Zielsubstrat 10 appliziert und der elektrische Kontakt, insbesondere mittels ACF-Bonding, hergestellt. Vorteilhafterweise wird die erste Folie 1, insbesondere der Kontaktierungsbereich der ersten Folie, passergenau zu der Kontaktschicht, insbesondere zu den Verbindungselementen 50 der Kontaktschicht, des Zielsubstrats 10, welche zur elektrischen Kontaktierung, insbesondere des Kontaktierungsbereichs der ersten Folie, auf dem Zielsubstrat aufgebracht sind, appliziert.

Wie in Fig. 23d gezeigt, wird vorzugsweise danach in einem separaten Schritt die zweite Folie 1, welche die zweite Sensor-Lage, beispielsweise die y-Lage, umfasst, passergenau zur ersten Folie 1 bzw. passergenau zu der Kontaktschicht, insbesondere zu den Verbindungselementen 50 der Kontaktschicht, des Zielsubstrats 10, welche zur elektrischen Kontaktierung, insbesondere des Kontaktierungsbereichs der zweiten Folie 1, auf dem Zielsubstrat 10 aufgebracht sind, appliziert. Hierbei ist es möglich, dass eine Verklebung, beispielsweise mittels OCA, zwischen den Sensor-Lagen entfallen kann. Die Passergenauigkeit, das heißt die Lagegenauigkeit der zweiten Folie relativ zur ersten Folie, beträgt bevorzugt ±350µm, weiter bevorzugt ±150µm, in x- und y-Richtung, um die gewünschte Funktionalität des elektrischen Funktionselements, wie beispielsweise des Touchsensors, zu erreichen.

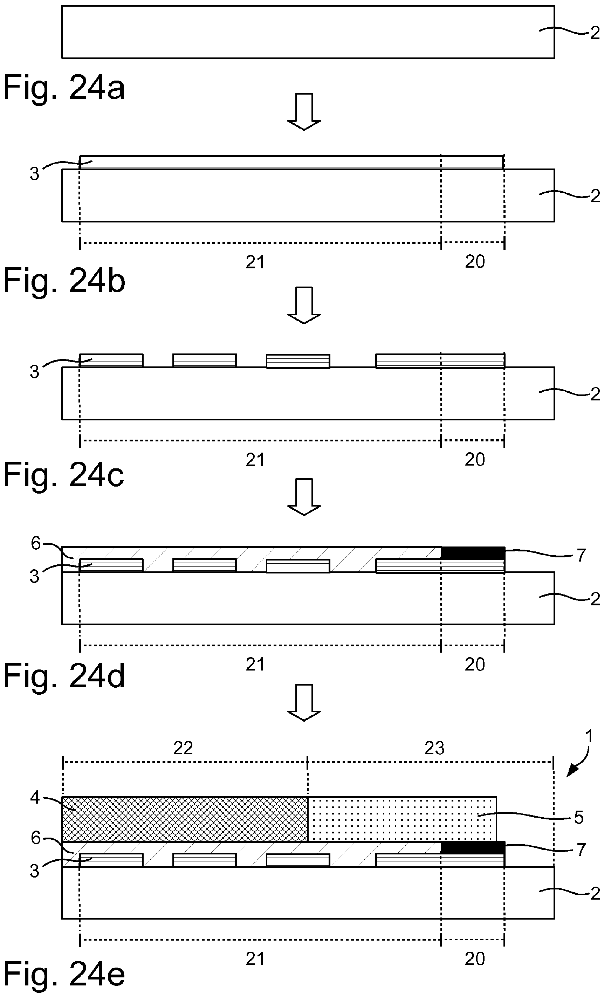

Fig. 24a bis Fig. 24e zeigen Verfahrensschritte zur Herstellung einer Folie 1. Hierzu wird, wie in Fig. 24a gezeigt, ein Trägersubstrat 2 bereitgestellt. Anschließend wird, wie in Fig. 24b gezeigt, zumindest bereichsweise auf das Trägersubstrat 2 die elektrische leitfähige Schicht 3 aufgebracht. Bei der elektrisch leitfähigen Schicht 3 handelt es sich beispielsweise um eine Metallschicht aus Kupfer. Die Metallschicht 3 ist hier zumindest in den Bereichen aufgebracht, welche später den Funktionsbereich 21 und den Kontaktierungsbereich 20 ausbilden. Die Metallschicht 3 wird vorzugsweise mittels eines Vakuum-Metallisierungsverfahrens aufgebracht, das heißt auf das eventuell vorbehandelte Trägersubstrat 2 wird die Metallschicht 3 aufgedampft. Die Vorbehandlung des Trägersubstrats 2 kann beispielsweise eine Corona- oder Plasmabehandlung sein oder das Aufbringen von einer ein- oder mehrschichtigen Haftvermittlerschicht. So wird beispielsweise Kupfer als Ausgangsmaterial auf Temperaturen in der Nähe des Siedepunkts erhitzt. Die sich dabei lösenden einzelnen Atome, Atomcluster oder Moleküle des Kupfers, wandern durch eine Vakuumkammer und schlagen sich auf dem gegenüberliegenden kühleren Trägersubstrat 2 ab. Hierdurch bildet sich auf dem Trägersubstrat 2 eine dünne Schicht aus dem verdampften Metall. Durch die Verwendung von Masken ist es möglich, die Metallschicht 3 bereichsweise aufzudampfen. Es ist weiter möglich, dass die Schichtdicke der durch die Vakuum-Metallisierung gebildeten dünnen Kupferschicht durch galvanisches Nachverstärken erhöht wird.

Wie in Fig. 24c gezeigt, wird anschließend die vollflächig aufgebrachte Metallschicht 3 strukturiert. Hierzu werden vorzugsweise photolithographische Techniken verwendet, das heißt die Metallschicht 3 wird entsprechend zur Ausbildung der elektrischen Funktionsstruktur im Funktionsbereich 21 und Kontaktierungsstruktur im Kontaktierungsbereich 20 durch Positiv- oder Negativ-Belichten und -Ätzen oder mittels eines Waschverfahrens bereichsweise wieder entfernt. So wird beispielsweise zur Strukturierung der Metallschicht 3 zunächst eine Fotolackschicht auf die Metallschicht 3 aufgebracht. Die Fotolackschicht wird anschließend mittels einer Maske und einer Lampe, wie einer Quecksilberdampflampe, oder einem Laser, wie einem Excimerlaser, belichtetet, wobei die belichteten Bereiche denjenigen Bereichen entsprechen, in denen die Metallschicht 3 entfernt werden soll. Die belichteten Bereiche der Fotolackschicht werden anschließend abgetragen und sodann ein Ätzschritt durchgeführt, welcher die Metallschicht 3 in denjenigen Bereichen entfernt, in welche die Fotolackschicht abgetragen wurde. Anschließend wird die verbleibende Fotolackschicht entfernt.

In einem nächsten optionalen Schritt wird, wie in Fig. 24d gezeigt, eine Schutzlackschicht 6 und eine Kontaktverstärkungsschicht 7 aufgebracht. Die Schutzlackschicht 6 und die Kontaktverstärkungsschicht 7 werden hierbei bereichsweise, beispielsweise mittels Schlitzgießer (= Düse), gegossen. Bei der in Fig. 24d gezeigten Kontaktverstärkungsschicht 7 handelt es um eine Schicht aus einem Carbon-Leitlack. Bei der in Fig. 24d gezeigten Schutzlackschicht 6 handelt es sich um eine Schicht aus PAC. Es ist jedoch auch möglich, dass die Schutzlackschicht 6 und die Kontaktverstärkungsschicht 7 mittels Tiefdruck, wie beispielsweise Reverse Gravur oder Reverse Roll, Siebdruck oder Hochdruck, wie beispielsweise Tampondruck oder Flexo-Druck, aufgebracht werden. Bevorzugt sind die Schichten 4, 5, 6 und 7 physikalisch trocknend, so dass es vorteilhaft ist, insbesondere vor dem Aufbringen einer weiteren Schicht, diese zunächst trocknen zu lassen.

Wie in Fig. 24e gezeigt, wird anschließend die Haftvermittlungsschicht 4 in dem Bereich 22 aufgebracht. In dem Bereich 23 hingegen wird die Haftvermittlungsschicht 4 nicht aufgebracht. Die Haftvermittlungsschicht 4 kann aufgedruckt werden. Als Druckverfahren eignen sich Tiefdruck-, Siebdruck- oder Hochdruckverfahren. Es ist jedoch auch möglich, dass die Haftvermittlungsschicht 4 in dem Bereich 22, beispielsweise mittels eines Schlitzgießers, aufgegossen wird. Optional kann, wie in Fig. 24e gezeigt, eine Ablöseschicht 5, beispielsweise mittels Siebdruck, aufgedruckt werden. Die Ablöseschicht 5 kann auch mittels anderer Druckverfahren, wie Tiefdruck oder Hochdruck aufgebracht werden. Auch kann die Ablöseschicht 5 mittels eines Schlitzgießers aufgebracht werden. Die in Fig. 24e gezeigte Folie 1 haftet nach Applikation der Folie 1 auf ein Zielsubstrat in dem Bereich 22, welcher die Haftvermittlungsschicht 4 aufweist, auf dem Zielsubstrat an. **In** dem Bereich 23 hingegen, welcher den Kontaktierungsbereich 20 umfasst, haftet die Folie 1 nicht auf dem Zielsubstrat an. Die oben genannten Auftragsmethoden können, wie bereits erläutert, zu Oberflächenrauigkeiten der Haftvermittlungsschicht 4 führen, so dass die Haftvermittlerschicht 4 im noch nicht auf dem Zielsubstrat applizierten Zustand beispielsweise lichtstreuende Eigenschaften aufweist. Insbesondere nach Applikation der Folie 1 ist die Haftvermittlungsschicht 4 hochtransparent, da die Haftvermittlungsschicht 4 beispielsweise mittels Heißlaminieren aufgeschmolzen und/oder so mittels Druck eingeebnet ist, dass Oberflächenrauigkeiten der Haftvermittlungsschicht 4 nicht mehr störend optisch in Erscheinung treten.

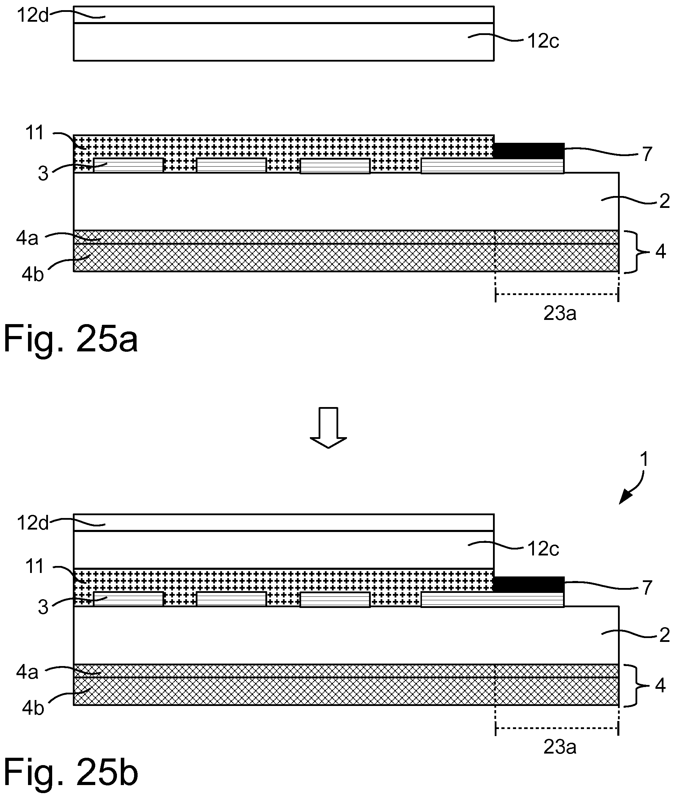

Fig. 25a und Fig. 25b zeigen ein Verfahrensschritt zur Herstellung einer Folie 1. Hierzu werden, wie in Fig. 25a gezeigt, die Dekorschichten 12c und 12d bereitgestellt. Wie bereits erläutert kann es sich bei der Dekorschicht 12c beispielsweise um eine transparente Farblackschicht handeln, welche auf der Dekorschicht 12d, die als transparente Trägerschicht ausgeformt sein kann, angeordnet ist. Die Dekorschichten 12c und 12d werden mittels Heißprägen auf die Zwischenhaftschicht 11 aufgebracht. Es ist jedoch auch möglich, dass die Dekorschichten 12c und 12d beispielsweise mittels Kaltprägen und/oder mittels Thermotransferverfahren und/oder mittels unterschiedlicher Laminationsverfahren auf der Zwischenhaftschicht 11 aufgebracht werden. Wie in Fig. 25b gezeigt, verbleibt die Trägerschicht 12d hierbei auf der Folie 1. Weiter ist es auch möglich, dass die Trägerschicht 12d entfernt wird, so dass in Fig. 25b lediglich die Dekorschicht 12c auf der Folie 1 verbleibt.

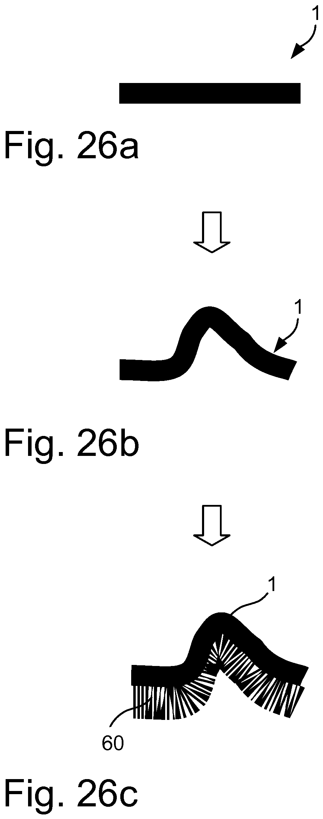

Fig. 26a bis Fig. 26c zeigen schematisch Verfahrensschritte zur Umformung einer Folie und/oder eines elektrischen Funktionselements.

Fig. 26a zeigt eine Folie 1, welche wie oben dargelegt, mehrschichtig ausgeführt ist. Bezüglich der Ausgestaltung der Schichten ist hier auf obige Ausführungen verwiesen. Weiter ist es möglich, dass die Folie 1 bereits auf ein Zielsubstrat und/oder Zwischensubstrat appliziert ist, so dass es sich um ein aus der Folie 1 und dem Zielsubstrat und/oder Zwischensubstrat gebildetes elektrisches Funktionselement handelt. Die Folie 1 und/oder das elektrische Funktionselement ist, insbesondere mittels den nachfolgend beschriebenen Umformprozessen, umformbar. Vorzugsweise weist das Zielsubstrat und/oder Zwischensubstrat hierbei eine Schichtdicke von maximal 1 mm, bevorzugt 500 µm auf, so dass das elektrische Funktionselement umformbar ist.

Vorteilhafterweise findet die Umformung mittels Umformprozessen, bevorzugt mittels Tiefziehen, Thermoformen, High pressure forming oder mittels eines Spritzgießprozesses statt.

Vorzugsweise wird die Folie 1 und/oder das elektrische Funktionselements mittels Tiefziehen umgeformt. Fig. 26b zeigt hier beispielsweise die Folie 1 nach dem Umformen mittels Tiefziehen. Vorteilhafterweise erfolgt die Umformung der Folie 1 und/oder des elektrischen Funktionselements hierbei mittels Vakuum, insbesondere bei einem Unterdruck von maximal 1 bar, und/oder mittels Überdruckunterstützung, insbesondere bei einem Überdruck zwischen 1 bar und 3 bar, in einem der gewünschten Umform-Geometrie entsprechenden Umformwerkzeug.

Weiter ist es möglich, dass die Folie 1 und/oder das elektrische Funktionselement mittels Thermoformen umgeformt wird. Vorteilhafterweise entspricht der Umformprozess der Folie 1 und/oder des elektrischen Funktionselements bzw. die Prozessparameter des Umformprozesses dem/den des Tiefziehens, wobei die Umformung mit einer zusätzlichen Temperaturunterstützung, insbesondere bei einer Temperatur zwischen 120 °C und 300 °C, vorzugsweise zwischen 190 °C und 250°C beispielsweise bei Verwendung von ABS-Material, erfolgt. Hierbei ist es möglich, dass entweder das Trägersubstrat und/oder das Zielsubstrat ABS-Material aufweist.

Auch ist es möglich, dass die Folie 1 und/oder das elektrische Funktionselement mittels High pressure forming umgeformt wird. Vorteilhafterweise erfolgt die Umformung der Folie 1 und/oder des elektrischen Funktionselements hierbei mittels Überdruckunterstützung, insbesondere bei einem Überdruck zwischen 1 bar und 300 bar, vorzugsweise zwischen 10 bar und 150 bar, in einem der gewünschten Umform-Geometrie entsprechenden Umformwerkzeug. Hierbei ist es zweckmäßig, dass die Umformung mit einer zusätzlichen Temperaturunterstützung, vorzugsweise bei Temperaturen im Bereich der Glasübergangstemperatur der verwendeten Folie 1, erfolgt. Vorteilhafterweise beträgt die Temperatur hierbei zwischen 120 °C und 300 °C, vorzugsweise zwischen 190 °C und 250°C, beispielsweise bei Verwendung von ABS-Material.

Mittels den oben genannten Umformprozessen werden vorzugsweise dreidimensionale Verdehnungen der Folie 1 und/oder des elektrischen Funktionselements von bis zu 200% erreicht. Es ist auch möglich, insbesondere bei Optimierung der Parameter auf das jeweilige System, Verdehnungen bis zu 300% zu erreichen, wobei Verdehnungen zwischen 20% bis 50% in vielen Anwendungsfällen ausreichend sind.

Wie in Fig. 26c gezeigt wird die zuvor beispielsweise mittels Tiefziehen um- bzw. vorgeformten Folie 1 in einem anschließenden Spritzgießprozess mit einer Spritzgussmasse 60 hinterspritzt.

Weiter ist es auch möglich, dass die Folie 1 und/oder das elektrische Funktionselement mittels eines Spritzgießprozesses umgeformt und/oder verformt wird. Vorteilhafterweise wird die Folie 1 und/oder das elektrische Funktionselement hierbei im flachen Zustand über Rolle oder von einem Bogen oder einem Sheet oder über Einzellabel ins Spritzgießwerkzeug eingebracht und mittels des Spritzgießverfahrens verformt werden, wobei insbesondere die Formgebung durch das Schließen des Werkzeuges sowie auch durch das Einspritzen der Formmasse erfolgt. Insbesondere der Spritzdruck ist hierbei abhängig von der Bauteilgeometrie und/oder der Bauteilgröße. Beispielsweise ist es möglich, dass der Spritzdruck 500 bar und die Spritztemperatur zwischen 180 °C und 380 °C beträgt, wobei Spritzdruck und Spritztemperatur vom Spritzgießmaterial abhängig sind. Weiter ist es auch zweckmäßig, dass die in das Spritzgießwerkzeug eingebrachte Folie 1 und/oder das elektrische Funktionselement vor dem Schließprozess des Spritzgießwerkzeugs mittels Erwärmen der Folie 1 und/oder des elektrischen Funktionselements, beispielsweise bei Temperaturen zwischen 30 °C und 300°C, vorzugsweise zwischen 80 °C und 150°C, erhitzt werden. Auch ist es möglich, dass die Folie 1 und/oder das elektrische Funktionselement mittels Klemmrahmen und/oder Vakuum und/oder Überdruck in die Kavität einzupassen.

Auch ist es von Vorteil, die Folie 1 und/oder das elektrische Funktionselement mittels "Überziehen" der Folie 1 und/oder des elektrischen Funktionselements über ein bereits dreidimensional vorgeformtes Bauteil umzuformen. Vorteilhafterweise erfolgt das "Überziehen" der Folie 1 und/oder des elektrischen Funktionselements durch die Steuerung einer Vakuumansaugung der Folie 1 und/oder des elektrischen Funktionselements an das bereits dreidimensional vorgeformte Bauteil bei gleichzeitigem Überdruck in einem Prozess. Vorzugsweise wird hierbei das zu überziehende bereits dreidimensional vorgeformte Bauteil vorher mit Temperatur beaufschlagt. Hierbei ist es zweckmäßig, wenn der Überdruck zwischen 1 bar und 50 bar, vorzugsweise zwischen 3 bar und 15 bar, beträgt und/oder die Temperatur zwischen 30 °C und 300 °C, vorzugsweise zwischen 100 °C und 180 °C, beträgt.

Vorzugsweise weist die Folie 1 und/oder das elektrische Funktionselement eine Verdehnbarkeit von größer als 20 % auf. Derartig hohe Verdehnbarkeiten können beispielsweise mittels der oben genannten Umform- und/oder Verformprozessen bei herkömmlichen Funktionsfolien nicht erreicht werden, insbesondere da die Trägerfolie aus beispielsweise **PET** nicht verformbar genug ist und/oder die leitfähigen Strukturen schon nach geringer Verformung, insbesondere bei Verdehnungen größer als 20 %, brechen. Hier hat sich gezeigt, dass durch die erfindungsgemäße Folie 1 die Verdehnung verbessert wird. So wird durch den mehrschichtigen Aufbau der erfindungsgemäßen Folie 1, insbesondere durch die zwischen mehreren Lackschichten eingebetteten mindestens einen elektrisch leitfähigen Schicht gemäß einem Sandwichsystem, wie vorgehend beschrieben, erreicht, dass die mechanische Verdehnung und/oder Verformung gezielt beeinflusst werden kann, indem beispielsweise durch Anpassung der Schichtdicken oder der Lackformulierungen bestimmte Bereiche der Folie 1 flexibler oder weniger flexibel ausgestaltet werden können. Somit wird hier vorzugsweise die gewünschte Verdehnbarkeit von größer 20% erreicht.

Auch bei den oben genannten dreidimensionalen Verformungen ist es vorteilhaft, wenn die elektrische Funktionsstruktur der Folie 1 und/oder des elektrischen Funktionselements von außen elektrisch, insbesondere galvanisch kontaktiert werden kann, wofür die elektrischen Kontakte für eine Kontaktierung zugänglich sein müssen. Alternativ kann eine induktive und/oder kapazitive Kopplung, insbesondere eine Kopplung über eine Antenne, realisiert werden. Wie oben dargelegt, wird durch die erfindungsgemäße Folie 1 eine robuste und sichere Kontaktierung der elektrischen Funktionsstruktur ermöglicht.

### Bezugszeichenliste

- 1: Folie
- 2: Trägersubstrat
- 3, 3a, 3b, 3c, 30: elektrisch leitfähige Schichten
- 4: Haftvermittlungsschicht
- 5: Ablöseschicht
- 6: Schutzlackschicht
- 7: Kontaktverstärkungsschicht
- 8: dielektrische Schicht
- 9: Dunkelungsschicht
- 10: Zielsubstrat
- 11: Zwischenhaftschicht
- 12a, 12b, 12c, 12d, 12e, 12f, 12g, 12h, 12i, 12j: Dekorschichten
- 13: Trennschicht
- 14: Grundierungslackschicht
- 15: Kontaktschicht
- 20, 20a, 20b, 20c: Kontaktierungsbereich(e)
- 21: Funktionsbereich
- 22, 23, 23a, 24, 25: Bereiche
- 26: Leiterbahnbreite
- 27: Leiterbahnabstand
- 30v: Ausschnitt
- 31, 32, 31a, 32a: Leiterbahn(en)
- 33: Flächenelemente
- 40: Oberseite
- 41: Unterseite
- 42, 43: Grenzflächen
- 50: Verbindungselement
- 51: Adapterelement
- 52: Kontaktelement
- 60: Spritzgussmasse
- 70: Transferlage

## Patentansprüche

1. Folie (1) umfassend ein Trägersubstrat (2), eine Haftvermittlungsschicht (4) zur Applikation der Folie (1) auf ein Zielsubstrat (10) und mindestens eine elektrisch leitfähige Schicht (3), wobei die mindestens eine elektrisch leitfähige Schicht (3) in einem Funktionsbereich (21) eine elektrische Funktionsstruktur ausbildet, wobei die mindestens eine elektrisch leitfähige Schicht (3) in mindestens einem Kontaktierungsbereich (20) mindestens eine Kontaktierungsstruktur zur Kontaktierung der elektrischen Funktionsstruktur ausbildet, und wobei die Haftvermittlungsschicht (4) bei Betrachtung senkrecht zu einer von dem Trägersubstrat (2) aufgespannten Ebene den mindestens einen Kontaktierungsbereich (20) zumindest bereichsweise nicht überdeckt oder wobei die Haftvermittlungsschicht (4) bei Betrachtung senkrecht zu einer von dem Trägersubstrat (2) aufgespannten Ebene vollflächig aufgebracht ist, wobei die mindestens eine elektrisch leitfähige Schicht (3) zwischen dem Trägersubstrat (2) und der Haftvermittlungsschicht (4) angeordnet ist oder
die Haftvermittlungsschicht (4) auf der der mindestens einen elektrisch leitfähigen Schicht (3) abgewandten Seite des Trägersubstrats (2) angeordnet ist und
wobei die Haftvermittlungsschicht (4) auf der Oberfläche der Folie (1) angeordnet ist,
wobei die Haftvermittlungsschicht (4) aus einem Material besteht, dass nach Applikation auf das Zielsubstrat hochtransparent ist und die Haftvermittlungsschicht (4) aus einem Heißkleber oder einem strahlungshärtbaren Kleber gebildet ist.

2. Folie (1) nach Anspruch 1,
**dadurch gekennzeichnet,**
**dass** die Haftvermittlungsschicht (4) den Funktionsbereich (21) zumindest bereichsweise überdeckt und/oder dass die Haftvermittlungsschicht (4) den mindestens einen Kontaktierungsbereich (20) vollflächig nicht überdeckt und/oder dass die Haftvermittlungsschicht (4) bei Betrachtung senkrecht zu einer von dem Trägersubstrat (2) aufgespannten Ebene einen an den mindestens einen Kontaktierungsbereich (20) angrenzenden Bereich (24) nicht überdeckt und dass der an den mindestens einen Kontaktierungsbereich (20) angrenzende Bereich (24) eine Breite von mindestens 0,2 mm aufweist.

3. Folie (1) nach einem der vorhergehenden Ansprüche,
**dadurch gekennzeichnet,**
**dass** die Folie (1) eine Ablöseschicht (5) umfasst, wobei die Ablöseschicht (5) bei Betrachtung senkrecht zu einer von dem Trägersubstrat (2) aufgespannten Ebene den mindestens einen Kontaktierungsbereich (20) zumindest bereichsweise überdeckt, wobei insbesondere die Ablöseschicht (5) den an den mindestens einen Kontaktierungsbereich (20) angrenzenden Bereich (24) überdeckt.

4. Folie (1) nach einem der vorhergehenden Ansprüche,
**dadurch gekennzeichnet,**
**dass** die Haftvermittlungsschicht (4) aus einem Material besteht, das nach Applikation auf das Zielsubstrat (10) eine Transmission von Licht im Wellenlängenbereich zwischen 380 nm bis 780 nm von mehr als 85%, bevorzugt mehr als 90%, aufweist und/oder
**dass** die Haftvermittlungsschicht (4) aus einem Material besteht, das nach Applikation auf das Zielsubstrat (10) klar ist, insbesondere dass die Haftvermittlungsschicht (4) aus einem Material besteht, das nach Applikation auf das Zielsubstrat (10) Licht im Wellenlängenbereich zwischen 380 nm bis 780 nm um weniger als 8%, bevorzugt um weniger als 4%, durch Streuung ablenkt.

5. Folie (1) nach einem der vorhergehenden Ansprüche,
**dadurch gekennzeichnet,**
**dass** die Folie (1) eine Schutzlackschicht (6) umfasst, wobei insbesondere
die Schutzlackschicht (6) bei Betrachtung senkrecht zu einer von dem Trägersubstrat (2) aufgespannten Ebene die mindestens eine elektrisch leitfähige Schicht (3) zumindest bereichsweise überdeckt und/oder wobei insbesondere
die Schutzlackschicht (6) zwischen der mindestens einen elektrisch leitfähigen Schicht (3) und der Haftvermittlungsschicht (4) angeordnet ist.

6. Folie (1) nach einem der vorhergehenden Ansprüche,
**dadurch gekennzeichnet,**
**dass** die mindestens eine elektrisch leitfähige Schicht (3) eine Kontaktverstärkungsschicht (7) aufweist, wobei insbesondere die mindestens eine elektrisch leitfähige Schicht (3) die Kontaktverstärkungsschicht (7) in dem mindestens einen Kontaktierungsbereich (20) zumindest bereichsweise aufweist, wobei bevorzugt die Kontaktverstärkungsschicht den mindestens einen Kontaktierungsbereich (20) vor mechanischen, physikalischen und/oder chemischen Umwelteinflüssen schützt.

7. Folie (1) nach einem der vorhergehenden Ansprüche,
**dadurch gekennzeichnet,**
**dass** die Folie (1) nach Applikation auf das Zielsubstrat (10) zumindest in dem einen Funktionsbereich (21) der mindestens einen elektrisch leitfähigen Schicht (3) eine Transmission von Licht im Wellenlängenbereich zwischen 380 nm bis 780 nm von mehr als 75%, bevorzugt mehr als 80%, weiter bevorzugt mehr als 85%, noch weiter bevorzugt mehr als 90%, aufweist.

8. Folie (1) nach einem der vorhergehenden Ansprüche,
**dadurch gekennzeichnet,**
**dass** die elektrische Funktionsstruktur ein Touchsensorfeld, insbesondere ein kapazitives Sensorfeld, ausbildet, welches eine Tastfeldfunktionalität bereitstellt.

9. Folie (1) nach einem der vorhergehenden Ansprüche,
**dadurch gekennzeichnet,**
**dass** die Folie eine oder mehrere Dekorschichten (12a-j) aufweist, wobei insbesondere
die ein oder mehreren Dekorschichten (12a-j) auf der der mindestens einen elektrisch leitfähigen Schicht (3) abgewandten Seite des Trägersubstrats (2) angeordnet sind und/oder dass die ein oder mehrere Dekorschichten (12a-j) auf der dem Trägersubstrat (2) abgewandten Seite der mindestens einen elektrisch leitfähigen Schicht (3) angeordnet sind.

10. Folie (1) nach Anspruch 9,
**dadurch gekennzeichnet,**
**dass** die ein oder mehreren Dekorschichten (12a-j) im Wesentlichen im selben Bereich (22) angeordnet sind wie die Haftvermittlungsschicht (4) und/oder eine Zwischenhaftschicht (11), insbesondere dass die ein oder mehreren Dekorschichten (12a-j) bei Betrachtung senkrecht zu einer von dem Trägersubstrat (2) aufgespannten Ebene im Wesentlichen deckungsgleich mit der Haftvermittlungsschicht (4) und/oder der Zwischenhaftschicht (11) angeordnet sind.

11. Folie (1) nach einem der vorhergehenden Ansprüche,
**dadurch gekennzeichnet,**
**dass** die Folie (1) eine Trennschicht (13) umfasst, wobei insbesondere die Trennschicht (13) zwischen dem Trägersubstrat (2) und der mindestens einen elektrisch leitfähigen Schicht (3) angeordnet ist.

12. Folie (1) nach Anspruch 11,
**dadurch gekennzeichnet,**
**dass** die Trennschicht (13) zwischen dem Trägersubstrat (2) und der Schutzlackschicht (6) angeordnet ist.

13. Folie (1) nach einem der vorhergehenden Ansprüche,
**dadurch gekennzeichnet,**
**dass** die Folie (1) umformbar, bevorzugt dreidimensional umformbar, ist, wobei insbesondere
die Folie (1) mittels eines Umformprozesses, insbesondere mittels Tiefziehen, Thermoformen, High pressure forming oder mittels eines Spritzgießprozesses, umformbar ist.

14. Verfahren zur Herstellung einer Folie (1), insbesondere nach einem der Ansprüche 1 bis 13, wobei das Verfahren folgende Schritte, welche insbesondere in der folgenden Reihenfolge ausgeführt werden, umfasst:
a) Bereitstellen eines Trägersubstrats (2);
b) Aufbringen mindestens einer elektrisch leitfähigen Schicht (3) auf das Trägersubstrat (2), wobei die mindestens eine elektrisch leitfähige Schicht (3) in einem Funktionsbereich (21) eine elektrische Funktionsstruktur ausbildet, wobei die mindestens eine elektrisch leitfähige Schicht (3) in mindestens einem Kontaktierungsbereich (20) mindestens eine Kontaktierungsstruktur zur Kontaktierung der elektrischen Funktionsstruktur ausbildet;
c) Aufbringen einer Haftvermittlungsschicht (4) zur Applikation der Folie (1) auf ein Zielsubstrat (10) derart, dass die Haftvermittlungsschicht (4) bei Betrachtung senkrecht zu einer von dem Trägersubstrat (2) aufgespannten Ebene den mindestens einen Kontaktierungsbereich (20) zumindest bereichsweise nicht überdeckt oder wobei die Haftvermittlungsschicht (4) bei Betrachtung senkrecht zu einer von dem Trägersubstrat (2) aufgespannten Ebene vollflächig aufgebracht ist,
wobei in dem Schritt c) die Haftvermittlungsschicht (4) derart aufgebracht wird, dass die mindestens eine elektrisch leitfähige Schicht (3) zwischen dem Trägersubstrat (2) und der Haftvermittlungsschicht (4) angeordnet ist oder
in dem Schritt c) die Haftvermittlungsschicht (4) auf der der mindestens einen elektrisch leitfähigen Schicht (3) abgewandten Seite des Trägersubstrats (2) angeordnet ist und
wobei die Haftvermittlungsschicht (4) auf der Oberfläche der Folie (1) angeordnet wird,
wobei die Haftvermittlungsschicht (4) aus einem Material besteht, dass nach Applikation auf das Zielsubstrat hochtransparent ist und die Haftvermittlungsschicht (4) aus einem Heißkleber oder einem strahlungshärtbaren Kleber gebildet ist.

15. Verfahren nach Anspruch 14,
**dadurch gekennzeichnet,**
**dass** in dem Schritt c) die Haftvermittlungsschicht (4) derart aufgebracht wird, dass die Haftvermittlungsschicht (4) den Funktionsbereich (21) zumindest bereichsweise überdeckt.

16. Verfahren nach einem der Ansprüche 14 bis 15,
**dadurch gekennzeichnet,**
**dass** zwischen dem Schritt b) und dem Schritt c) folgender Schritt durchgeführt wird:
- Aufbringen einer Kontaktverstärkungsschicht (7) derart, dass die mindestens eine elektrisch leitfähige Schicht (3) eine Kontaktverstärkungsschicht (7) aufweist, insbesondere dass die mindestens eine elektrisch leitfähige Schicht (3) die Kontaktverstärkungsschicht (7) in dem mindestens einen Kontaktierungsbereich (20) zumindest bereichsweise aufweist und/oder dass zwischen dem Schritt b) und dem Schritt c) weiter folgender Schritt durchgeführt wird:
- Aufbringen einer Schutzlackschicht (6) insbesondere derart, dass die Schutzlackschicht (6) bei Betrachtung senkrecht zu einer von dem Trägersubstrat (2) aufgespannten Ebene die mindestens eine elektrisch leitfähige Schicht (3) zumindest bereichsweise überdeckt.

17. Verfahren nach einem der Ansprüche 14 bis 16,
**dadurch gekennzeichnet,**
**dass** das Verfahren weiter folgende Schritte umfasst:
g) Aufbringen einer oder mehrere Dekorschichten (12a-j), insbesondere derart, dass die ein oder mehreren Dekorschichten (12a-j) auf der der mindestens einen elektrisch leitfähigen Schicht (3) abgewandten Seite des Trägersubstrats (2) angeordnet sind und/oder dass die ein oder mehrere Dekorschichten (12a-j) auf der dem Trägersubstrat (2) abgewandten Seite der mindestens einen elektrisch leitfähigen Schicht (3) angeordnet sind, wobei insbesondere in dem Schritt g) die ein oder mehreren Dekorschichten (12a-j) derart aufgebracht werden, dass die ein oder mehreren Dekorschichten (12a-j) im Wesentlichen im selben Bereich (22) angeordnet sind wie die Haftvermittlungsschicht (4) und/oder einer Zwischenhaftschicht (11), insbesondere dass die ein oder mehreren Dekorschichten (12a-j) bei Betrachtung senkrecht zu einer von dem Trägersubstrat (2) aufgespannten Ebene im Wesentlichen deckungsgleich mit der Haftvermittlungsschicht (4) und/oder der Zwischenhaftschicht (11) angeordnet sind.

## Claims

1. Film (1) comprising a carrier substrate (2), an adhesion layer (4) for applying the film (1) to a target substrate (10) and at least one electrically conductive layer (3), wherein the at least one electrically conductive layer (3) forms an electrical functional structure in a functional region (21), wherein the at least one electrically conductive layer (3) forms at least one contacting structure for contacting the electrical functional structure in at least one contacting region (20), and wherein the adhesion layer (4) does not cover the at least one contacting region (20) at least in certain regions when viewed perpendicularly to a plane spanned by the carrier substrate (2) or wherein the adhesion layer (4) is applied over the entire surface when viewed perpendicularly to a plane spanned by the carrier substrate (2), wherein the at least one electrically conductive layer (3) is arranged between the carrier substrate (2) and the adhesion layer (4) or the adhesion layer (4) is arranged on the side of the carrier substrate (2), said side facing away from the at least one electrically conductive layer (3) and
wherein the adhesion layer (4) is arranged on the surface of the film (1),
wherein the adhesion layer (4) consists of a material that is highly transparent after application to the target substrate, and the adhesion layer (4) is formed from a hot adhesive or an adhesive that can be cured by radiation.

2. Film (1) according to claim 1,
**characterised in that**
the adhesion layer (4) covers the functional region (21) at least in certain regions and/or
the adhesion layer (4) does not cover the at least one contacting region (20) over the entire surface and/or
the adhesion layer (4) does not cover a region (24) adjacent to the at least one contacting region (20) when viewed perpendicularly to a plane spanned by the carrier substrate (2), and the region (24) adjacent to the at least one contacting region (20) has a width of at least 0.2 mm.

3. Film (1) according to one of the preceding claims,
**characterised in that**
the film (1) comprises a detachment layer (5), wherein the detachment layer (5) covers the at least one contacting region (20) at least in certain regions when viewed perpendicularly to a plane spanned by the carrier substrate (2), wherein in particular the detachment layer (5) covers the region (24) adjacent to the at least one contacting region (20).

4. Film (1) according to one of the preceding claims,
**characterised in that**
the adhesion layer (4) consists of a material that has a transmission of light in the wavelength range of between 380 nm and 780 nm of more than 85%, preferably more than 90%, after application to the target substrate (10) and/or
the adhesion layer (4) consists of a material that is clear after application to the target substrate (10), in particular the adhesion layer (4) consists of a material that deflects light in the wavelength range of between 380 nm and 780 nm by less than 8%, preferably by less than 4% by means of scattering after application to the target substrate (10).

5. Film (1) according to one of the preceding claims,
**characterised in that**
the film (1) comprises a protective lacquer layer (6), wherein in particular
the protective lacquer layer (6) covers the at least one electrically conductive layer (3) at least in certain regions when viewed perpendicularly to a plane spanned by the carrier substrate (2) and/or wherein in particular
the protective lacquer layer (6) is arranged between the at least one electrically conductive layer (3) and the adhesion layer (4).

6. Film (1) according to one of the preceding claims,
**characterised in that**
the at least one electrically conductive layer (3) has a contact enhancing layer (7), wherein in particular the at least one electrically conductive layer (3) has the contact enhancing layer (7) in the at least one contacting region (20) at least in certain regions, wherein preferably the contact enhancing layer protects the at least one contacting region (20) from mechanical, physical and/or chemical environmental influences.

7. Film (1) according to one of the preceding claims,
**characterised in that**
the film (1) has a transmission of light in the wavelength range of between 380 nm and 780 nm of more than 75%, preferably more than 80%, more preferably more than 85%, yet more preferably more than 90%, after application to the target substrate (10) at least in the one functional region (21) of the at least one electrically conductive layer (3).

8. Film (1) according to one of the preceding claims,
**characterised in that**
the electrical functional structure forms a touch sensor field, in particular a capacitive sensor field, which provides touch field functionality.

9. Film (1) according to one of the preceding claims,
**characterised in that**
the film has one or more decorative layers (12a-j), wherein in particular the one or more decorative layers (12a-j) are arranged on the side of the carrier substrate (2), said side facing away from the at least one electrically conductive layer (3), and/or the one or more decorative layers (12a-j) are arranged on the side of the at least one electrically conductive layer (3), said side facing away from the carrier substrate (2).

10. Film (1) according to claim 9,
**characterised in that**
the one or more decorative layers (12a-j) are substantially arranged in the same region (22) as the adhesion layer (4) and/or an intermediate adhesion layer (11), in particular the one or more decorative layers (12a-j) are substantially arranged congruent to the adhesion layer (4) and/or the intermediate adhesion layer (11) when viewed perpendicularly to a plane spanned by the carrier substrate (2).

11. Film (1) according to one of the preceding claims,
**characterised in that**
the film (1) comprises a separating layer (13), wherein in particular the separating layer (13) is arranged between the carrier substrate (2) and the at least one electrically conductive layer (3).

12. Film (1) according to claim 11,
**characterised in that**
the separating layer (13) is arranged between the carrier substrate (2) and the protective lacquer layer (6).

13. Film (1) according to one of the preceding claims,
**characterised in that**
the film (1) can be reshaped, preferably can be reshaped three-dimensionally, wherein in particular
the film (1) can be reshaped by means of a reshaping process, in particular by means of deep-drawing, thermoforming, high-pressure forming or by means of an injection moulding process.

14. Method for producing a film (1), in particular according to one of claims 1 to 13, wherein the method comprises the following steps, which are carried out, in particular, in the following sequence:
a) providing a carrier substrate (2);
b) applying at least one electrically conductive layer (3) to the carrier substrate (2), wherein the at least one electrically conductive layer (3) forms an electrical functional structure in a functional region (21), wherein the at least one electrically conductive layer (3) forms at least one contacting structure for contacting the electrical functional structure in at least one contacting region (20);
c) applying an adhesion layer (4) for applying the film (1) to a target substrate (10) in such a way that the adhesion layer (4) does not cover the at least one contacting region (20) at least in certain regions when viewed perpendicularly to a plane spanned by the carrier substrate (2) or wherein the adhesion layer (4) is applied over the entire surface when viewed perpendicularly to a plane spanned by the carrier substrate (2),
wherein in step c), the adhesion layer (4) is applied in such a way that the at least one electrically conductive layer (3) is arranged between the carrier substrate (2) and the adhesion layer (4) or
in step c), the adhesion layer (4) is arranged on the side of the carrier substrate (2), said side facing away from the at least one electrically conductive layer (3) and
wherein the adhesion layer (4) is arranged on the surface of the film (1),
wherein the adhesion layer (4) consists of a material that is highly transparent after application to the target substrate, and the adhesion layer (4) is formed from a hot adhesive or an adhesive that can be cured by radiation.

15. Method according to claim 14,
**characterised in that**
in step c), the adhesion layer (4) is applied in such a way that the adhesion layer (4) covers the functional region (21) at least in certain regions.

16. Method according to one of claims 14 to 15,
**characterised in that**,
between step b) and step c), the following step is carried out:
- applying a contact enhancing layer (7) in such a way that the at least one electrically conductive layer (3) has a contact enhancing layer (7), in particular the at least one electrically conductive layer (3) has the contact enhancing layer (7) in the at least one contacting region (20) at least in certain regions and/or between step b) and step c), the following step is further carried out:
- applying a protective lacquer layer (6), in particular in such a way that the protective lacquer layer (6) covers the at least one electrically conductive layer (3) at least in certain regions when viewed perpendicularly to a plane spanned by the carrier substrate (2).

17. Method according to one of claims 14 to 16,
**characterised in that**
the method further comprises the following steps:
g) applying one or more decorative layers (12a-j), in particular in such a way that the one or more decorative layers (12a-j) are arranged on the side of the carrier substrate (2), said side facing away from the at least one electrically conductive layer (3), and/or the one or more decorative layers (12a-j) are arranged on the side of the at least one electrically conductive layer (3), said side facing away from the carrier substrate (2), wherein in particular
in step g), the one or more decorative layers (12a-j) are applied in such a way that the one or more decorative layers (12a-j) are substantially arranged in the same region (22) as the adhesion layer (4) and/or the intermediate adhesion layer (11), in particular the one or more decorative layers (12a-j) are arranged substantially congruent to the adhesion layer (4) and/or the intermediate adhesion layer (11) when viewed perpendicularly to a plane spanned by the carrier substrate (2).

## Revendications

1. Film (1) comprenant un substrat de support (2), une couche de promotion d'adhérence (4) servant à appliquer le film (1) sur un substrat cible (10) et au moins une couche électroconductrice (3), dans lequel l'au moins une couche électroconductrice (3) réalise, dans une zone fonctionnelle (21), une structure fonctionnelle électrique, dans lequel l'au moins une couche électroconductrice (3) réalise, dans au moins une zone de mise en contact (20), au moins une structure de mise en contact servant à établir un contact avec la structure fonctionnelle électrique, et dans lequel la couche de promotion d'adhérence (4), observée de manière perpendiculaire par rapport à un plan déployé par le substrat de support (2), ne recouvre pas au moins par endroits l'au moins une zone de mise en contact (20) ou dans lequel la couche de promotion d'adhérence (4), observée de manière perpendiculaire par rapport à un plan déployé par le substrat de support (2), est appliquée sur toute la surface, dans lequel l'au moins une couche électroconductrice (3) est disposée entre le substrat de support (2) et la couche de promotion d'adhérence (4) ou
la couche de promotion d'adhérence (4) est disposée sur le côté, opposé à l'au moins une couche électroconductrice (3), du substrat de support (2) et
dans lequel la couche de promotion d'adhérence (4) est disposée sur la surface du film (1),
dans lequel la couche de promotion d'adhérence (4) se compose d'un matériau qui est très transparent après l'application sur le substrat cible et la couche de promotion d'adhérence (4) est formée d'une colle à chaud ou d'une colle durcissable sous l'action d'un rayonnement.

2. Film (1) selon la revendication 1,
**caractérisé en ce**
**que** la couche de promotion d'adhérence (4) recouvre au moins par endroits la zone fonctionnelle (21) et/ou
**que** la couche de promotion d'adhérence (4) ne recouvre pas sur toute la surface l'au moins une zone de mise en contact (20) et/ou
**que** la couche de promotion d'adhérence (4), observée de manière perpendiculaire à un plan déployé par le substrat de support (2), ne recouvre pas une zone (24) jouxtant l'au moins une zone de mise en contact (20), et que la zone (24) jouxtant l'au moins une zone de mise en contact (20) présente une largeur d'au moins 0,2 mm.

3. Film (1) selon l'une quelconque des revendications précédentes,
**caractérisé en ce**
**que** le film (1) comprend une couche de décollement (5), dans lequel la couche de décollement (5), observée de manière perpendiculaire par rapport à un plan déployé par le substrat de support (2), recouvre au moins par endroits l'au moins une zone de mise en contact (20), dans lequel en particulier la couche de décollement (5) recouvre la zone (24) jouxtant l'au moins une zone de mise en contact (20).

4. Film (1) selon l'une quelconque des revendications précédentes,
**caractérisé en ce**
**que** la couche de promotion d'adhérence (4) est constituée d'un matériau, qui présente, après application sur le substrat cible (10), une transmission de lumière dans la plage de longueurs d'onde comprise entre 380 nm à 780 nm de plus de 85 %, de manière préférée de plus de 90 % et/ou
**que** la couche de promotion d'adhérence (4) est constituée d'un matériau, qui est clair après application sur le substrat cible (10), en particulier que la couche de promotion d'adhérence (4) est constituée d'un matériau, qui dévie par diffusion, après application sur le substrat cible (10), de la lumière dans la plage de longueurs d'onde entre 380 nm à 780 nm de moins de 8 %, de manière préférée de moins de 4 %.

5. Film (1) selon l'une quelconque des revendications précédentes,
**caractérisé en ce**
**que** le film (1) comprend une couche de vernis protecteur (6), dans lequel en particulier
la couche de vernis protecteur (6), observée de manière perpendiculaire par rapport à un plan déployé par le substrat de support (2), recouvre au moins par endroits l'au moins une couche électroconductrice (3) et/ou dans lequel en particulier
la couche de vernis protecteur (6) est disposée entre l'au moins une couche électroconductrice (3) et la couche de promotion d'adhérence (4).

6. Film (1) selon l'une quelconque des revendications précédentes,
**caractérisé en ce**
**que** l'au moins une couche électroconductrice (3) présente une couche de renforcement de contact (7), dans lequel en particulier
l'au moins une couche électroconductrice (3) présente au moins par endroits la couche de renforcement de contact (7) dans l'au moins une zone de mise en contact (20), dans lequel la couche de renforcement de contact protège de préférence l'au moins une zone de mise en contact (20) des influences extérieures mécaniques, physiques et/ou chimiques.

7. Film (1) selon l'une quelconque des revendications précédentes,
**caractérisé en ce**
**que** le film (1) présente, après application sur le substrat cible (10), au moins dans l'au moins une zone fonctionnelle (21) de l'au moins une couche électroconductrice (3), une transmission de lumière située dans la plage de longueurs d'onde comprise entre 380 nm à 780 nm de plus de 75 %, de manière préférée de plus de 80 %, de manière davantage préférée de plus de 85 %, encore plus de manière préférée de plus de 90 %.

8. Film (1) selon l'une quelconque des revendications précédentes,
**caractérisé en ce**
**que** la structure fonctionnelle électrique réalise un champ de détection tactile, en particulier un champ de détection capacitif, lequel fournit une fonctionnalité de champ tactile.

9. Film (1) selon l'une quelconque des revendications précédentes,
**caractérisé en ce**
**que** le film présente une ou plusieurs couches décoratives (12a-j), dans lequel en particulier les une ou plusieurs couches décoratives (12a-j) sont disposées sur le côté, opposé à l'au moins une couche électroconductrice (3), du substrat de support (2), et/ou que les une ou plusieurs couches décoratives (12a-j) sont disposées sur le côté, opposé au substrat de support (2) de l'au moins une couche électroconductrice (3).

10. Film (1) selon la revendication 9,
**caractérisé en ce**
**que** les une ou plusieurs couches décoratives (12a-j) sont disposées sensiblement dans la même zone (22) que la couche de promotion d'adhérence (4) et/ou une couche adhésive intermédiaire (11), en particulier que les une ou plusieurs couches décoratives (12a-j), observées de manière perpendiculaire par rapport à un plan déployé par le substrat de support (2), sont disposées sensiblement de manière à coïncider avec la couche de promotion d'adhérence (4) et/ou la couche adhésive intermédiaire (11).

11. Film (1) selon l'une quelconque des revendications précédentes,
**caractérisé en ce**
**que** le film (1) comprend une couche de séparation (13), dans lequel en particulier la couche de séparation (13) est disposée entre le substrat de support (2) et l'au moins une couche électroconductrice (3).

12. Film (1) selon la revendication 11,
**caractérisé en ce**
**que** la couche de séparation (13) est disposée entre le substrat de support (2) et la couche de vernis protecteur (6).

13. Film (1) selon l'une quelconque des revendications précédentes,
**caractérisé en ce**
**que** le film (1) peut être façonné, de préférence peut être façonné de manière tridimensionnelle, dans lequel en particulier
le film (1) peut être façonné au moyen d'un processus de façonnage, en particulier au moyen d'un emboutissage, d'un thermoformage, d'un formage à haute pression ou au moyen d'un processus de moulage par injection.

14. Procédé servant à fabriquer un film (1), en particulier selon l'une quelconque des revendications 1 à 13, dans lequel le procédé comprend des étapes suivantes, qui sont exécutées en particulier dans l'ordre suivant, consistant à :
a) fournir un substrat de support (2) ;
b) appliquer au moins une couche électroconductrice (3) sur le substrat de support (2), dans lequel l'au moins une couche électroconductrice (3) réalise, dans une zone fonctionnelle (21), une structure fonctionnelle électrique, dans lequel l'au moins une couche électroconductrice (3) réalise, dans au moins une zone de mise en contact (20), au moins une structure de mise en contact servant à établir un contact avec la structure fonctionnelle électrique ;
c) appliquer une couche de promotion d'adhérence (4) servant à appliquer le film (1) sur un substrat cible (10) de telle manière que la couche de promotion d'adhérence (4), observée de manière perpendiculaire par rapport à un plan déployé par le substrat de support (2), ne recouvre pas au moins par endroits l'au moins une zone de mise en contact (20) ou dans lequel la couche de promotion d'adhérence (4), observée de manière perpendiculaire par rapport à un plan déployé par le substrat de support (2), est appliquée sur toute la surface,
dans lequel la couche de promotion d'adhérence (4) est appliquée de telle manière lors de l'étape c) que l'au moins une couche électroconductrice (3) est disposée entre le substrat de support (2) et la couche de promotion d'adhérence (4) ou
la couche de promotion d'adhérence (4) est disposée, lors de l'étape c), sur le côté, opposé à l'au moins une couche électroconductrice (3), du substrat de support (2) et
dans lequel la couche de promotion d'adhérence (4) est disposée sur la surface du film (1),
dans lequel la couche de promotion d'adhérence (4) se compose d'un matériau qui est très transparent après l'application sur le substrat cible et la couche de promotion d'adhérence (4) est formée d'une colle à chaud ou d'une colle durcissable sous l'action d'un rayonnement.

15. Procédé selon la revendication 14,
**caractérisé en ce**
**que** la couche de promotion d'adhérence (4) est appliquée, lors de l'étape c), de telle manière que la couche de promotion d'adhérence (4) recouvre au moins par endroits la zone fonctionnelle (21).

16. Procédé selon l'une quelconque des revendications 14 à 15,
**caractérisé en ce**
**qu'**est effectuée, entre l'étape b) et l'étape c), une étape qui suit consistant à :
- appliquer une couche de renforcement de contact (7) de telle manière que l'au moins une couche électroconductrice (3) présente une couche de renforcement de contact (7), en particulier que l'au moins une couche électroconductrice (3) présente au moins par endroits la couche de renforcement de contact (7) dans l'au moins une zone de mise en contact (20) et/ou
**qu'**est effectuée, entre l'étape b) et l'étape c), par ailleurs une étape qui suit consistant à :
- appliquer une couche de vernis protecteur (6) en particulier de telle manière que la couche de vernis protecteur (6), observée de manière perpendiculaire par rapport à un plan déployé par le substrat de support (2), recouvre au moins par endroits l'au moins une couche électroconductrice (3).

17. Procédé selon l'une quelconque des revendications 14 à 16,
**caractérisé en ce**
**que** le procédé comprend par ailleurs des étapes qui suivent consistant à :
g) appliquer une ou plusieurs couches décoratives (12a-j), en particulier de telle manière que les une ou plusieurs couches décoratives (12a-j) sont disposées sur le côté, opposé à l'au moins une couche électroconductrice (3), du substrat de support (2) et/ou que les une ou plusieurs couches décoratives (12a-j) sont disposées sur le côté, opposé au substrat de support (2), de l'au moins une couche électroconductrice (3), dans lequel en particulier
**que** les une ou plusieurs couches décoratives (12a-j) sont appliquées lors de l'étape g) de telle manière que les une ou plusieurs couches décoratives (12a-j) sont disposées sensiblement dans le même plan (22) que la couche de promotion d'adhérence (4) et/ou que la couche adhésive intermédiaire (11), en particulier que les une ou plusieurs couches décoratives (12a-j), observées de manière perpendiculaire par rapport à un plan déployé par le substrat de support (2), sont disposées sensiblement de manière à coïncider avec la couche de promotion d'adhérence (4) et/ou la couche adhésive intermédiaire (11).
